# EUROPEAN PATENT SPECIFICATION

(11) **EP 1 755 841 B1**
(45) Date of publication and mention of the grant of the patent: **15.09.2010**
(21) Application number: 05778809.3
(22) Date of filing: 17.05.2005
(51) Int. Cl.: B27K 3/00

(54) **TREATMENT OF WOOD WITH AN INJECTABLE WOOD PRESERVATIVE SLURRY HAVING BIOCIDAL PARTICLES**
HOLZBEHANDLUNG MIT INJIZIERBARER HOLZKONSERVIERUNGSMITTELSUSPENSION MIT BIOZIDEN PARTIKELN
TRAITEMENT DU BOIS AVEC UNE SUSPENSION DE CONSERVATION DU BOIS INJECTABLE CONTENANT DES PARTICULES BIOCIDES

(30) Priority: 17.05.2004 US 571535 P; 17.06.2004 US 868967; 12.10.2004 US 961206; 12.10.2004 US 961155; 12.10.2004 US 961143; 13.12.2004 US 9042
(43) Date of publication of application: 28.02.2007
(73) Proprietor: Osmose, Inc., Buffalo, NY 14209 (US)
(72) Inventor: RICHARDSON, Wayne, H., Sumter, SC 29150 (US); HODGE, Robert, L., Sumter, SC 29150 (US); GLOVER, Dwight, W., New York, NY 10021 (US); POMPEO, Michael, P., Sumter, SC 29150 (US); HAYDEN, Christopher, G., Alexandria, VA 22301 (US)
(74) Representative: Setna, Rohan P.
(86) International application number: PCT/US2005/017007
(87) International publication number: WO 2005/110692

(56) References cited:
- WO-A-2005/115704
- US-A- 4 663 364
- US-A1- 2001 051 175
- US-A1- 2002 051 892
- US-A1- 2003 013 799
- US-A1- 2004 258 768
- BACKMAN P A; MUNGER G D; MARKS A F: "THE EFFECTS OF PARTICLE SIZE AND DISTRIBUTION ON PERFORMANCE OF THE FUNGICIDE CHLOROTHALONIL" PHYTOPATHOLOGY, vol. 10, 1976, pages 1242-1245, XP009062911

## Description

### FIELD OF THE INVENTION

The present invention relates to a method of preserving wood using submicron-sized biocidal particulate slurries. More particularly, the present invention uses a particulate biocidal slurry comprising injectable sub-micron biocidal particles selected from the following classes:1) particles containing a solid phase of slightly-soluble (in water) salts selected from copper salts, nickel salts, tin salts, and/or zinc salts, and in particular copper borate and zinc borate, 2) particles containing a solid phase of slightly-soluble metal hydroxides selected from copper hydroxide, nickel(II) hydroxide, tin(II) hydroxide, and/or zinc hydroxide, 3) particles containing a solid phase of a substantially insoluble (in water) organic biocide such as tebuconazole and/or chlorothalonil, 4) for the wood preservative composition particles containing a solid phase of a sparingly soluble partially glassified borate composition, and 5) any mixtures thereof; wherein optionally at least one class of biocidal particles further comprises a second biocidal material disposed on the surface thereof, wherein the second biocidal material alters the leachability or degradation rate of the solid phase biocidal material, or reduces the tendency of treated wood to corrode metal, or both.

### BACKGROUND OF THE INVENTION

Preservatives are used to treat wood to resist insect attack and decay. By far the most prevalent non-oil-based wood preservative material is copper. The principal criteria for commercial acceptance in the wood treatment industry, assuming treatment efficacy, is cost. However, a variety of other factors affect the utility of preserved wood, including color and appearance, longevity, and environmental affects. Commercially available preservatives based on water-soluble copper-amine complexes include ammoniacal copper, alkanolamine copper, and less common copper ethylene diamine and/or copper polyaspartic acid-based systems. The first drawback to the amine/copper-containing wood preservatives is that they are many times more leachable, compared to CCA, creosote, and oilbome preservatives. This leaching is of concern for at least two reasons: 1) removal of the copper portion of the pesticide from the wood by leaching will compromise the long term efficacy of the formulation, and 2) the leached copper causes concern that the environment will be contaminated. Copper leaching is such a problem that some states do not allow use of wood treated with the amine/copper containing wood preservatives near waterways. The second drawback to the amine/copper-containing wood preservatives is the color and appearance of the wood. Wood treated with the soluble amine/copper formulations turn green or grey-green because the copper deposited in the wood is weathered, be it by reacting with moisture, air, and one or more components of the wood, or by reacting with the sun's ultraviolet rays, or both. Further, the industry has had difficulties coloring the copper/amine treated wood, compared to the relative ease of coloring CCA treated wood. The third drawback to the amine/copper-containing wood preservatives is the high corrosion rates observed on metal fittings contacting the treated wood. Additionally, wood treated with currently available soluble copper-based preservatives typically require an organic co-biocide to control molds and certain copper-resistant pests. The organic biocide is often substantially insoluble in water and must be emulsified to be able to inject the organic biocide along with the water-soluble copper complexes.

Aqueous slurries are the preferred method of distributing substantially insoluble and sparingly soluble biocides. The biocide particles can usually be made stable in water, and they do not dissolve due to their low water solubility, but low water solubility is also a factor at point of use. Many organic biocides are substantially insoluble in water. As used herein, the term "organic biocide" also includes organometallic biocides. The most commercially prevalent organic biocides used in wood preservation include triazoles and quaternary amines. The efficient use of substantially insoluble pesticides is often restricted by their inherent poor water-solubility. The efficacy of the biocides is therefore directly related to the distance from the biocide. This distance can be reduced by making the particles smaller, and for a given loading (typically expressed as pounds per cubic foot for wood preservation or pounds per acre for foliar applications) there will be more particles per unit area. Generally, for low solubility fungicides, the amount of a fungicide needed to protect against various pests is generally dependent on the number of particles in a unit area as opposed to the size of those particles. The size of the particle often relates to longevity of the treatment, but typically the limit on longevity is the degradation of the biocide by action of sunlight, ozone, water, and air. Therefore, there is often a desire to make particles smaller.

It is known in the art to use pigment particles with wood. U.S. Patent 4,539,047 describes painting wood to maintain a fresh appearance, with its paint comprising mineral spirits, unsaturated resin, wax, and a transparent ultraviolet-absorbing pigment, preferably where said pigment is a hydrated iron oxide pigment. Various methods of producing UV blocking iron oxide pigments are described in U.S. Patent 2,558,304. U.S. Patent 4,702,776 describes a method of manufacturing iron oxide particulate pigment.

It is known that particles and emulsions can be injected into wood. Preservative compositions, such as those disclosed in U.S. Patent No. 5,098,472, contain: (a) an emulsion of a wood preservative grade creosote; (b) water; (c) one or more pre-dispersed micronized pigments; (d) a rheology structuring agent; (e) a soap which is an alkali metal salt of a wood derived resin acid; (f) a surfactant; (g) natural or synthetic pigment modifying resins or anti-settle additive; and (h) a lignin sulfonate. The patent teaches the emulsion can be produced under conditions of ultra-high sheer.

Emulsions typically use less are generally unstable and must be prepared at point of use, typically in the hours or minutes before use, and minor changes in the formulation, for example by addition of another biocide, may cause the emulsion to break and separate. Emulsions can, if properly formed, provide good coverage, but again the deposited biocides are completely exposed to UV degradation. With current aqueous copper-amine-based preservative systems, substantially insoluble organic biocides are usually added as emulsions that contain many times the weight of the organic biocide in dispersants. To solubilize an azole such as tebuconazole, for example, between 6 and 15 parts dispersant per one part (by weight) of tebuconazole forms an emulsifiable material.

Recently there has been a number of disclosures relating to a new class of wood preservative using particles containing biocidal material, where the particles are of a size that is injectable into wood. Exemplary disclosures which describe the use of particulate biocides include U.S. Patent 6,306,202, which suggests that particles containing copper salts or oxides can be injected into wood. The disclosure is unclear, as the title states the composition, which comprises more than 96% water, and less than 4% of the product of milling between 0.01 and 0.2 parts of copper salts, which does not include copper borate, with 1 part borax and between 1 and 2 parts water. The text states "small amounts of water insoluble fixed copper compounds are not objectionable in solid wood preservatives so long as their particle size is small enough to penetrate the wood," and suggests "so long as copper compound particles do not settle from the dilution in one hour, the composition is suitable for pressure treating ... of solid wood." "Small amounts of water insoluble fixed copper compounds are not objectionable in solid wood preservatives so long as their particle size is small enough to penetrate the wood." The patent does not suggest what size is useful, other than particles that do not settle for an hour are useful without telling what distance the particles must settle from, without specifying the liquid through which particles settle, and without stating whether or not the particles have dispersants. The patent teaches milling particles with a fast blade mixer. Such a milling technique is limited in the lower size limit it can produce, and the particle size distribution resulting from such milling is broad. To duplicate the work done in this patent, we formed a mixture of 40 parts sodium tetraborate decahydrate, 54 parts tap water, and 8 parts copper hydroxide having a mean particle size of 2.5 microns (as measured by a Micromeritics Sedigraph 5100) and comprising dispersants. This mixture was "milled" for 60 minutes using a laboratory dispersator (Indco Model HS-120T-A) operating at 3,000 rpm. The resultant mixture was then diluted at a ratio of 4 parts to 96 parts water (4%) for particle size measurement. After "milling" for 60 minutes, the mean weight particle size ("d₅₀", defined as the size where half of the weight of material has a diameter below the mean weight particle size) was found to be 1.5 microns. This slurry is partially injectable into wood, but this slurry would not be useful in the industry due to plugging and poor particle distribution, as well as unacceptable surface staining caused by agglomerations of powder. Further, such milling causes deterioration of dispersants and other adjuvants. At least a portion of the milled material settled in water.

A variety of patents describe use of "polymeric particles" in wood preservative systems having biocidal substances. U.S. Patent 5,196,407 which describes a wood preservative composition comprising an organic fungicide such as a triazole or carbamate, a diluent (light oil or solvent), and optionally an emulsifier, a wetting agent, or an organic-chemical binder. The binder is preferably a resin based on methylacrylate/n-butyl acrylate copolymer, a styrene/acrylic ester copolymer, or a polyvinyl versatate, finely dispersed in the water, and having a particle size less than 0.07 microns. Such a binder would bind to the organic biocide such as the triazole, and its action is "preventing the biocidal active substances from remigrating from the wood to the wood surface. Exemplary examples had 19% alkyd resin/1.5% tebuconazole, 19% alkyd resin/0.8% tebuconazole, 8% solid styrene/acrylic ester copolymer/1.5% tebuconazole, or 4% solid methylacrylate/n-butyl acrylate copolymer /0.8% tebuconazole. See also Reissue Patent 31,576 which describes incorporating such resins in an amine/copper wood preservative, where the emulsions have "a fine particle size as are described in West German patent specification No. 2,531,895", wherein the composition can be pressure impregnated into wood. Another method of forming such microparticles is described in U.S. Patent 4,923,894, which describes a process of polymerizing ethylenically unsaurated monomers in the presence of the bioactive substance. The preferred diameter of the microparticles is 0.01 to 2 microns. Various comonomers described as useful in forming the microparticles include acrylates. Various biocides include thiazoles, quaternary ammonium compounds, halogenated phenols, and specific wood preservative biocides including organotin, copper hydroxyquinolinate, and so forth, where "the polymeric microparticles of this invention may carry these wood preservatives." The preservatives in the examples were merely painted on the wood. U.S. Patent 4,737,491 describes a process where copper and/or zinc salts are complexed with polymers, and the polymers (which are either soluble or which form micelles in the water) are completely injected into wood provided the molecular weight of the polymers is below about 2000, but at higher molecular weights only a portion of the polymer is injected into wood. United States Patent 6,521,288 to Laks et al. extends this idea by describing adding certain biocides to polymeric nanoparticles, and claims benefits including: 1) protecting the biocides during processing, 2) having an ability to incorporate water-insoluble biocides, 3) achieving a more even distribution of the biocide than the prior art method of incorporating small particles of the biocide into the wood, since the polymer component acts as a diluent, 4) reducing leaching with nanoparticles, and 5) protecting the biocide within the polymer from environmental degradation. The application states that the method is useful for biocides including chlorinated hydrocarbons, organometallics, halogen-releasing compounds, metallic salts, organic sulfur compounds, and phenolics, and preferred embodiments include copper naphthenate, zinc naphthenate, quaternary ammonium salts, pentachlorophenol, tebuconazole, chlorothalonil, chlorpyrifos, isoibiazolones, propiconazole, other triazoles, pyrethroids, and other insecticides, imidichloprid, oxine copper and the like, and also nanoparticles with variable release rates that incorporate inorganic preservatives as boric acid, sodium borate salts, zinc borate, copper salts and zinc salts. The only examples used the organic biocides tebuconazole and chlorothalonil incorporated in polymeric nanoparticles. describes incorporating biocides into polymeric nanoparticle. Claims particles useful for inorganic preservatives as boric acid, sodium borate salts, zinc borate, copper salts and zinc salts. The polymers include polycarboxylic acids which can dissolve and chelate copper salts, including "insoluble" copper salts such as copper hydroxide. See, for example, the disclosure of U.S. Patent 6,471,976 which teaches dissolving insoluble copper salts with polycarboxylic acids to make a biocidal polymeric material.

Published United States Patent Application 20040258767 to Leach and Zhang describes injecting into wood particles of a wood preservative composition, comprising: (a) an inorganic component selected from the group consisting of a metal, metal compound and combinations thereof, wherein the metal is selected from wherein the inorganic component is selected from the group consisting of copper, cobalt, cadmium, nickel, tin, silver, and zinc; and (b) one or more organic biocides, wherein at least the inorganic component or the organic biocide is present as micronized particles of size 0.005 microns to 25 microns. Preferred inorganic compounds are copper hydroxide, copper oxide copper carbonate, basic copper carbonate, copper oxychloride, copper 8-hydroxyquinolate, copper dimethyldithiocarbamate, copper omadine and copper borate. US 2002/51892 A discloses a method of incorporating additives into wood or a wood product. The method comprises incorporating an additive into a nanoparticle and applying sufficient pressure to force the nanoparticle to penetrate the wood.

Co-owned published United States Patent Application 20040258768 to Richardson and Hodge, the disclosure of which is incorporated herein by reference thereto, and to which this application claims priority, describes injecting into wood a wood preservative composition comprising: particles of one or more substantially crystalline copper salt sparingly soluble copper salts, tin salts, and/or zinc salts, wherein the salts make up 20% or more of the particle weight, wherein greater than 98% by weight, of the particulates have a diameter less than 0.5 microns, preferably less than 0.3 microns, as determined by the settling velocity of the particle in water, and at least 50% have a diameter greater than 40 nanometers. Exemplary particles contain for example copper hydroxide, basic copper carbonate, copper carbonate, basic copper sulfates including particularly tribasic copper sulfate, basic copper nitrates, copper oxychlorides, copper berates, basic copper borates, and mixtures thereof. The particles typically have a size distribution in which at least 50% of particles have a diameter smaller than 0.25 microns, 0.2 microns, or 0.15 micron. This disclosure emphasizes the importance of minimizing or eliminating all particles having a size greater than 1.5 microns, or even 1 micron, and the importance of having a substantial portion, even as much as 89% by weight of all the salts, be in particles with a diameter greater than 0.01 microns. The disclosure also describes minimizing amines, the importance of adding stabilizing amounts of zinc and magnesium to copper hydroxide, the possibility of also including in the preservative slurry injectable metallic copper and/or zinc, the benefits of limiting the amount of polymer associated with the particles, and the benefits of having a portion of the supplemental organic biocide be coated as a layer on the sparingly soluble salt-containing particles. Further, this disclosure states large particulates or large agglomerations of particulates impose a visible and undesired bluish or greenish color to the treated wood. Individual particles of diameter less than about 0.5 microns that are widely dispersed in a matrix do not color a wood product to the extent the same mass of particles would if the particle size exceeded 1 micron.

United States Patent Application 20030077219 to Ploss et al. describes a method for producing copper salts from at least one cupriferous and one additional reactant, where micro-emulsions are prepared from two reactants while employing at least one block polymer to obtain intermediate products with a particle size of less than 50 nm, preferably 5 to 20 nm. The application teaches wood treatment applications, stating the copper compounds produced pursuant to the described method can easily and deeply penetrate into the wood due to their quasi atomic size, which they suggest can eliminate or reduce the need for pressure impregnation. Agglomerates of a multitude of primary particles having a size range of 5 to 20 nm can form, where the agglomerates have at least one dimension that is about 200 nanometers. The application suggests doping about 5 wt % zinc into a copper salt composition intended for agricultural applications to provide enhanced surface adhesion. Example particle sizes was between 10 and 50 nm and agglomerate sizes between 100 and 300 nm. During the immersion of equivalent wood into a copper hydroxide micro-emulsion prepared pursuant to the method, the copper hydroxide was not limited to the surface, but instead penetrated to a depth of "more than 10 298 mm."

An important part of this invention includes wet ball milling of slurry concentrates. It is known to mill certain organic pesticides. For instance, published U.S. Patent Application No. 2001/0051175 A1 describes milling large classes of fungicides with grinding media of substantially spheroidal shaped particles having an average size of less than 3 mm, and teaches that "suitable media material include[s] ZrO stabilized with magnesia, zirconium silicate, glass, stainless steel, polymeric beads, alumina, and titania, although the nature of the material is not believed to be critical." The Examples used 1/8"(3 mm) glass and steel balls as grinding media, which was indeed able to reduce the mean particle size of some organic pesticides below 1 micron. We believe that these inventors were incorrect in their statement that the grinding material and size were of little importance.

We recite particle size distributions by the weight (volume) or particles which have a size less than a particular value. The weight mean diameter d₅₀ is the particle size where half of the weight of material is in particles smaller than the d₅₀. There are two particularities in the reporting of diameters in the art. First, the art often uses the term "less than" as it pertains to particle sizes to denote the approximate diameter, e.g., a mean volume diameter less than 4 microns means the measured value was between 3 and 4 microns. Second, the art often reports median particle diameter with phrases such as "90% of the particles had a diameter below 0.5 microns", which means 9 out of 10 particles had a diameter less than 0.5 microns. This phrase has absolutely no bearing on the weight or volume mean particle diameter d₅₀, which may be above or below 0.5 microns. Discussions illustrating this point are presented herein.

Simply knowing a biocide should work better at reduced particle size is not sufficient to cause such a product to be made. The reduced particle size must be achieved economically. While it is known to grind certain materials to smaller size, certain biocides are particularly resistant to grinding to a mean volume diameter equal to or less than 1 micron diameter. For example, Chlorothananil is currently commercially available as a suspension having an average particle size diameter between about 2 and about 5 microns. It is known to mill chlorothananil, but no milling process had ever achieved a reduction in the d₅₀ (the volume average diameter) below about 2 microns. In early work on this topic Backman et al. found that, within the limits tested, the efficacy of Chlorothalonil tended to increase with decreasing particle size and with increasing milling. Beckman tested standard air milled chlorothalonil with wet-milled chlorothalonil. The particle sizes tested are represented below, where the air milled product is the standard, and the hours of wet milling are provided, where "med. µ" is the median diameter in microns, "<1 µ, %" is the percentage of particles with a diameter less than 1 micron, and Def(0.42) is the % defoliation of Florunner peanuts treated with the amount in parentheses, e.g., 0.42, in kg chlorothalonil per ha, where defoliation was presumed due top leaf-spot infestation:

| Type | Milling | med., µ | <1 µ, % | Def(0) | Def(0.42) | Def(0.84) | Def(1.26) |
|---|---|---|---|---|---|---|---|
| Air | -- | 3.3 | 7% | -- | 39 | 25 | 19 |
| Wet | 3 hr | 3.8 | 8% | -- | 33 | 24 | 15.5 |
| Wet | 9 hr | 1.75 | 22% | -- | 32 | 17.2 | 14.1 |
| Wet | 13 hr | 1.6 | 24% | -- | 27 | 23 | 15.4 |
| | | | | | | | |
| Air | -- | 3.3 | 5% | 39 | 35 | 34 | 27 |
| Wet | 3 hr | 3.7 | 10% | 39 | 35 | 28 | 28 |
| Wet | >3 hr | 1.6 | 22% | 37 | 32 | 29 | 29 |

This data generally show that the efficacy of the treatment generally increased with wet milling over air milling, and that the efficacy increased with milling time for the lowest treatment rate, though the data was less conclusive as the fungicide was ground for longer periods of time. *See* Backman. P.A., Munger, G.D., and Marks, A.F., The Effects of Particle Size and Distribution on Performance of the Fungicide Chlorothalonil, Phytopathology, Vol. 66, pages 1242 - 1245 (1976).

This is not to say that all biocides, even all sparingly soluble or substantially insoluble biocides, benefit from smaller size. For example, the ubiquitous elemental sulfur is generally advantageously 3 to 5 microns in diameter when used in foliar applications, While smaller particles can be formed, the actions of the atmosphere, moisture, and sunlight combine to eliminate the Efficacy of the sulfur particles in too short a time to be of commercial utility. Additionally, particle size reduction below certain values (which depend on the product characteristics) can in the past only be achieved through expensive and elaborate procedures, and such procedures quickly price the product out of the market.

U.S. Patent No. 5,360,783 particularly noting the milling method and the dispersants and stabilizers disclosed therein, discloses in Example 2 milling Maneb with 2 mm glass beads. The resulting mean particle diameter of the Maneb was 1.7-1.8 microns. Also in this patent, chlorothananil (Daconil) was milled in the same manner in Test 5, and the resulting average particle size diameter was 2.3 microns. A select group of biocides can be milled to a d₅₀ below about 1 micron, and occasionally below 0.5 micron. These biocides are easier to grind than chlorothananil. For example, it has been reported that triphenyltin acetate, 1-methyl-3-(2-fluoro-6-chlorophenyl)-5-(3-methyl-4-bromothien-2-yl)-1H-1,2,4-triazole, Spinosad insecticide, epoxiconazole, chlorpyrifos, and certain other materials were milled to sub-micron size using milling materials that are outside the scope of this invention (*see also, e*.*g*., U.S. Published Patent Application No. 2001/0051175 A1). Not enough information was provided to tell if the particle size distributions met the requirements of this inventions.

U.S. Patent 5,667)795 particularly relating to the milling method and the dispersants and stabilizers disclosed therein, describes milling an aqueous slurry of 40% chlorothalonil, 5.6% zinc oxide, and a variety of dispersants and stabilizers in a wet mill or high speed media mill. This patent does not describe the milling media, but states the average particle size of the product was 3 microns.

Curry *et al.* at International Specialty Products have ground a few biocides with 0.1 cm zirconia at 70% to 80% loading. For instance, U.S. Published Patent Application Nos. 2004/0063847 A1 and 2003/0040569 A1 describe milling metaldehyde with a variety of surfactants and dispersants, milling at 0-5°C, and recycling the material at 19 passes per minute for 10 minutes. Fine suspensions were produced with particle size distributions in which 90% of the particles had a diameter less than 2.5 microns, and in which the mean volume diameter d₅₀ was less than 1.5 microns. A chlorothananil suspension was described as being milled in the same manner, but data on particle size was not reported. However, commonly-assigned U.S. Published Patent Application No. 2004/0024099 A1 described this same example having chlorothananil and a variety of surfactants and dispersants wet milled under the same conditions described above, i.e., a 70% to 80% loading of 0.1 cm zirconium (sp) beads at 3000 rpm for 10 minutes with 19 recycles per minute. The milling temperature jacket was 0°C, and the milled material was 15-21°C. The publication claims that 90% of particles had a size below 0.5 microns, but that the mean volume diameter d₅₀ was "less than 3 microns", meaning between 2 and 3 microns The phenomena of a wide particle size distribution should be clarified. The International Specialty Products inventors described their chlorothananil composition as having 90% of particles below 0.5 microns, but as having a mean volume diameter in the range of 2 to3 microns (which is on the lower end of the commercially available particle sizes). This wide particle size distribution is common, and it severely limits the applications and benefits of the product, e.g., when used in paints, wood preservatives, and foliar applications. To achieve the benefits of the reduced size (lower application rates, for example, the particle size distribution must be narrow.

Not all material milled with sub-millimeter zirconia will be ground into an injectable slurry. U.S. Published Patent Application No. 2002/0055046 A1 describes milling titanium dioxide with zirconia beads which have a diameter of 0.5 mm (manufactured by Nikkato Co., Ltd), where the resultant mean particle diameter of the titanium dioxide was 2.5 microns.

Further, continued grinding with too large a milling media will generally not eventually provide a more uniform or smaller product. Compounds can be reduced to a particular particle size distribution, and further milling with that media has virtually no effect. Along those lines, U.S. Published Patent Application No. 2004/0050298 A1, in the unrelated art of formulating pigments, discloses that wet milling in a pearl mill with mixed zirconium oxide balls having a diameter of from 0.2 to 0.3 mm could provide a desired product in 20 to 200 minutes, but that longer milling periods had no significant effect on the properties of the product, and that "as a result, the risk of overmilling can be excluded, with very great advantage for the meeting of specifications, especially if it is ensured that the radial speed of the mill is not too high."

Finally, many patents suggest forming zinc borate and/or copper borate in-situ, by for example infusing the wood sequentially with soluble solutions of copper and borate. See, e.g., JP 2003-266406 to Kazunobu Shiozawa where soluble copper or zinc are added to wood, followed by contact with a borax solution, U.S. Published Application 20030170317 which teaches making a variety of substrates fire resistant and mold resistant by adding a plurality of compounds, some combinations of which can form zinc borate in-situ, U.S. Patent No. 4,961,865 describes methods and compositions for inhibiting the combustion of wood and other cellulosic materials by impregnating the materials with the sequential soluble compositions. Copper borate can be formed by a single solution, for example by injection of soluble copper-MEA-borate complexes or ammoniacal copper with soluble boric acid, such as is taught by for example by WO 2003025303 (Wesley Wall et al.). Wood preservation compositions disclosed by B. Cichy et al. (Polish Patent 169344, 1996) had 8-10 parts orthoboric acid, 30-40 parts ammonium polyphosphate, 50-60 parts water, 0-2 parts surfactant, and 1 parts zinc borate is heated to 40 C, whereupon a clear solution is formed. None teach direct injection of solid copper borate or zinc borate, and such dual-step processes are strongly disfavored by industry - it is exceedingly time consuming and expensive to perform sequential treatments. The precipitation and fixing of copper borate in-situ can not form large crystals (e.g., greater than 0.02 microns) in the wood, as crystal growth is at least limited to the amount of the component available in a vesicle in wood. In practice we believe the prior art processes formed conditions where a large plurality of very small copper or zinc borate crystals (with a diameter below about 0.005 microns) are formed in-situ, and the during leaching tests a number of these particles are leached out of the wood. Thus, while such treatments had "fair" copper retention that ranged from about 70% to about 90%, the borate retention was uniformly less than 50%, typically 20 to 40%, compared to the amounts injected into the wood.

Some inventors, such as U.S. Patent 6,306,202 (West), add large quantities of sodium borate to wood. This sodium borate material will be quickly leached from the wood. West also teaches direct injection of small amounts of copper borate. West also taught that slurries can be injected into wood. The title, the disclosure, and the examples of West leave an ambiguity regarding whether the preferred compositions of West indeed contain a slurry or whether the composition would form a solution. However, we were able to form slurries when we combined the ingredients of West in proportions allowed by the ranges disclosed. We have in laboratory tests found that milling the slurry of West using the dispersator mill as described by West for one hour provides a slurry with a d₅₀ of 1.5 microns, where the d₅₀ of the starting material was 2.5 microns. Further, the milling procedure of West does not promote the deposition of organic material on the surface of particles, nor does it promote adherence of dispersants to the particles.

What is needed is a cost effective wood preservative slurry that: 1) does not stain treated wood a resultant blue or green hue; 2) that contains long-lasting solid-phase biocidal material; 3) that does not increase the corrosivity of the treated wood toward metal; 4) that has a low or zero leaching of copper ions; 5) that has less than.2 times, preferably less than 1.5 times, for example between 0.1 and about 1 times, or alternately between about 0.1 and 0.6 times by weight of total surfactants, dispersants, and wettability agents compared to the weight of biocidal material; 6) that can readily be injected into wood using procedures and facilities in current use in the wood preservation industry; and/or 7) that has an effective lifetime at least near that of wood treated with CCA. Advantageously, the treated wood should be able to be painted, stained, or otherwise treated without impairing the wood preservation. In one important embodiment, the wood preservative composition is substantially copper free or is totally free of copper. In another important embodiment, the preservative comprises at least partially glassified materials.

What is also needed is a cost effective biocidal slurry adapted for agricultural and/or horticultural use that: 1) contains particles that are uniformly so small that treatment rates are lower than treatment rates normally recommended for the biocide, wherein the rate of application of the new slurry is less than or equal to 0.67 times, preferably less than or equal to 0.5 times, for example between about 0.1 times and about 0.33 times the rate recommended for currently (in 2004) used slurries; and 2) that contains long-lasting solid-phase preservative materials.

### SUMMARY OF THE INVENTION

The principal aspect of the invention is a method of preserving wood comprising wet ball milling a biocide to form a plurality of sub-micron biocidal particles; and injecting into wood an effective amount of a wood-injectable biocidal slurry, wherein said wood-injectable biocidal slurry comprises:
A) water as a carrier;
B) one or more dispersants in an amount sufficient to maintain the sub-micron biocidal particles in a stable slurry;
C) the plurality of sub-micron biocidal particles,
   wherein said biocidal particles are selected from at least one of the following groups:
   1) at least 25% by weight of a sparingly soluble salt selected from copper salts, nickel salts, tin salts, zinc salts and mixtures thereof;
   2) at least 25% by weight of a sparingly soluble metal hydroxide selected from copper hydroxide, nickel hydroxide, tin hydroxide, zinc hydroxide and mixtures thereof;
   3) at least 25% by weight of a substantially-insoluble organic biocide selected from chlorothalonil, iodo-propynyl butyl carbamate, copper-8-quinolate, fipronil, imidacloprid, bifenthrin, carbaryl, strobulurins, indoxacarb and mixtures thereof; and
   4) partially or fully glassified compositions comprising at least one of Zn, B, Cu, and P; and
D) an anticorrosive agent that reduces the tendency the treated wood to corrode metal; and
   wherein less than 1% by weight of the biocidal particles of the groups 1) through 4) have an average diameter greater than 1 micron, and at least 40% by weight of the biocidal particles have an average diameter greater than 0.06 microns.
   Inclusion of the various classes of biocidal particles in "C" above is not meant to imply equality or interchangability, as each class has different biocidal characteristics, different hardness, morphology, chemical and surface characteristics, and different responses to important manufacturing practices such as wet ball milling. Advantageously, the wood-injectable biocidal slurry comprises particles containing at least 25% by weight of a solid phase comprising a substantially-insoluble organic biocide selected from chlorothalonil, iodo-propynyl butyl carbamate, copper-8-quinolate, fipronil, imidacloprid, bifenthrin, carbaryl, strobulurins, and indoxacarb. Alternately, the wood-injectable biocidal slurry comprises particles containing on the outer surface thereof a substantially-insoluble organic biocide. In yet another embodiment, the wood-injectable biocidal slurry comprises particles containing a solid phase of a biocidal, partially or fully glassified composition comprising at least one of Zn, B, Cu, and P. In any of the above embodiments, the wood-injectable biocidal slurry may further comprise at least one of a pigment, an oil soluble dye, or an alcohol soluble dye. Advantageously, the wood-injectable biocidal slurry comprises particles containing at least 25% by weight of a solid phase of sparingly soluble copper borate. In one such embodiment, the wood-injectable biocidal slurry comprises particles containing at least 25% by weight of a solid phase of sparingly soluble copper borate, and further comprise particles containing at least 25% by weight of a solid phase of sparingly soluble copper hydroxide, sparingly soluble basic copper carbonate, or both, wherein the moles of copper hydroxide and basic copper carbonate are greater than the moles of copper borate. In an alternative embodiment, the wood-injectable biocidal slurry comprises particles containing at least 25% by weight of a solid phase of sparingly soluble copper borate, and further comprises particles containing at least 25% by weight of a solid phase of sparingly soluble copper hydroxide, sparingly soluble basic copper carbonate, or both, wherein the moles of copper hydroxide and basic copper carbonate are greater than the moles of copper borate. In the above embodiments, less than 1% by weight of the biocidal particles have an average diameter greater than 1 micron, and at least 40% by weight of the biocidal particles have an average diameter greater than 0.06 microns, In any of the above embodiments, advantageously less than 2% by weight of the biocidal particles have an average diameter greater than 0.7 microns, and at least 40% by weight of the biocidal particles have an average diameter greater than 0.06 microns. Alternatively, the wood-injectable biocidal slurry is free of any particles having a diameter greater than 2 microns, wherein the weight mean diameter d₅₀ of the biocidal particles is between 0.08 microns and 0.6 microns, and at least 80% by weight of the biocidal material is contained in particles having a diameter between 0.5 and 1.5 times the d₅₀

In a preferred embodiment, the wood-injectable biocidal slurry comprises a plurality of particles containing at least 25% by weight of a solid phase of sparingly soluble zinc borate. Advantageously, at least one class of biocidal particles in the wood-injectable biocidal slurry further comprises material disposed on the outer surface thereof, wherein the material comprises a substantially insoluble organic biocide which is not the same as the solid phase of biocidal material within the biocidal particle, and wherein the amount of substantially insoluble organic biocidal material is present in an amount at least 0.1% of the weight of the particle. Advantageously, at least one class of biocidal particles in the wood-injectable biocidal slurry further comprises material disposed on the outer surface thereof, wherein the material comprises a leachability barrier that alters the leachability of the solid phase biocidal material of particles injected into wood by at least 10% when compared to the leachability of the solid phase biocidal material of injected particles not comprising said material disposed on the outer surface thereof. Advantageously, at least one class of biocidal particles in the wood-injectable biocidal slurry further comprises material disposed on the outer surface thereof wherein the material comprises an antioxidant and/or UV barrier that reduces the degradation rate of the solid phase biocidal material when compared to the degradation rate of the solid phase biocidal material of injected particles not comprising said material disposed on the outer surface thereof Advantageously, at least one class of biocidal particles in the wood-injectable biocidal slurry further comprises metallic copper disposed on the outer surface thereof. The wood-injectable biocidal slurry comprises an anticorrosive agent that reduces the tendency the treated wood to corrode metal. In one embodiment, the wood-injectable biocidal slurry comprises a plurality of particles containing on the outer surface thereof a substantially-insoluble organic biocide, wherein the particles comprise a pigment In another embodiment, the wood-injectable biocidal slurry comprises sub-micron biocidal particles containing on the outer surface thereof a substantially-insoluble organic biocide, wherein the sub-micron biocidal particles are selected from at least one of
1) a plurality of particles containing at least 25% by weight of a solid phase of sparingly soluble salts selected from copper salts, nickel salts, tin salts, and/or zinc salts;
2) a plurality of particles containing at least 25% by weight of a solid phase of sparingly soluble metal hydroxides selected from copper hydroxide, nickel hydroxide, tin hydroxide, and/or zinc hydroxide;
3) a plurality of particles containing at least 25% by weight of a solid phase comprising a substantially-insoluble organic biocide selected from chlorothalonil, iodo-propynyl butyl carbamate, copper-8-quinolate, fipronil, imidacloprid, bifenthrin, carbaryl, strobulurins, and indoxacarb; or mixtures thereof. In yet another alternative embodiment, the wood-injectable biocidal slurry further comprises second particles selected from zinc oxide, zinc hydroxide, zinc carbonate, basic zinc carbonate, zinc borate, or combinations thereof, wherein at least 80% of these second particles have an average diameter less than 0.1 microns.
   In one embodiment the invention also includes a method of preserving wood comprising injecting into wood an effective amount of an aqueous wood-injectable biocidal slurry, said a wood-injectable biocidal slurry comprising one or more dispersants in an amount sufficient to maintain biocidal particles in a stable slurry; and a plurality of sub micron biocidal particles selected from at least one of 1) particles containing at least 25% by weight of a solid phase of a sparingly soluble nickel salt, a sparingly soluble tin salt, a sparingly soluble zinc salt, nickel hydroxide, tin hydroxide, zinc hydroxide, nickel oxide, tin oxide, zinc oxide, or mixtures thereof; 2) millable inert particles that comprise less than 20% by weight of polymer, and 3) pigments; wherein less than 1% by weight of the biocidal particles have an average diameter greater than 1 micron, wherein the particles further comprise at least 0.1% by weight of the particle of a substantially-insoluble organic biocide selected from triazoles, chlorothalonil, iodo-propynyl butyl carbamate, copper-8-quinolate, fipronil, imidacloprid, bifenthrin, carbaryl, strobulurins, indoxacarb, biocidal quaternary ammonium compounds, or mixture thereof disposed on the outer surface of the particles, and wherein the sub-micron biocidal particles comprise less than 1% by weight copper. Advantageously, the particles comprise between 0.5% and 10% by weight of a substantially-insoluble organic biocide selected from triazoles, chlorothalonil, iodo-propynyl butyl carbamate, copper-8-quinolate, fipronil, imidacloprid, bifenthrin, carbaryl, strobulurins, indoxacarb, biocidal quaternary ammonium compounds, or mixture thereof disposed on the outer surface of the particles. Advantageously, the particles further comprise additional organic material disposed on
   the outer surface of the particles, wherein the additional organic material comprises one or more of oil, silicone oil, wax, resin, polymers, oil-soluble dyes, organic UV-blockers, and where the total weight of the organic material including the substantially-insoluble organic biocide is less than 50% of the particle weight. Advantageously, the sub-micron biocidal particles comprises less than 0.1 % by weight copper or is totally free of copper.

A method of preventing or treating undesired pests on crops and foliage is disclosed herein, said method comprising the step of spraying onto the crops and/or foliage an effective amount of an aqueous biocidal slurry, said biocidal slurry comprising: one or more dispersants in an amount sufficient to maintain biocidal particles in a stable slurry; and sub-micron biocidal particles selected from at least one of the following classes:
1) particles containing at least 25% by weight of a solid phase of sparingly soluble salts selected from copper salts, nickel salts, tin salts, and/or zinc salts;
2) particles containing at least 25% by weight of a solid phase comprising a substantially-insoluble organic biocide selected from chlorothalonil, mancozeb/maneb, diuron, atrazine, metolachlor, acetochlor, propanil, iprodione, carbendazim, or any mixture thereof;
3) particles containing on the outer surface thereof a substantially-insoluble organic biocide; and
4) particles containing a solid phase of a biocidal, partially or fully glassified composition comprising at least one of Zn, B, Cu, and P; wherein less than 3% by weight of the biocidal particles have an average diameter greater than 1 micron, and at least 60% by weight of the biocidal particles have an average diameter greater than 0.05 microns. Advantageously, the biocidal particles further comprise a pigment, a dye, a UV blocker, a poly(meth)acrylate polymer, an oil, a wax, a resin, or mixtures thereof disposed on the exterior surface of the particles.

In the method of the present invention at least 40%, more preferably at least 60% by weight of the injectable biocidal particulates have an average diameter greater than 0.06 microns, for example greater than 0.08 microns, and
preferably 100% by weight of the injectable biocidal particulates have an average diameter less than 1 micron, preferably less than 0.7 microns, for example less than 0.4 microns. Too small a particle and the biocidal material is subject to flushing and/or fast leaching from wood, and also to accelerated degradation due to exposure to sunlight, water, and air. Too large a particle and injectability (and commercial acceptability) into wood is compromised, and in agricultural-type use the ability to take advantage of the reduced particle size to reduce effective treatment rates is compromised

For foliar applications, the requirements of a slurry are different Generally, foliar slurries are useful where the d₅₀ is about 1 micron or less, preferably about 0.7 microns or less, and for certain biocides that are resistant to photo-degradation, below 0.4 microns, for example between about 0.1 microns and about 0.3 microns. Too small a particle and the material may degrade too fast, while if a certain traction of the material is too large, then there can be little or no reduction in treatment rate while guarenteeing particle density on the treated substrate. Advantageously, the d₉₇ is less than 2 microns, and at least 60% of the biocide is in particles with a diameter greater than 0.05 microns.

While the above particles sizes relate to requirements for injection and normal requirements for foliar applications in terms of absolute numbers, to attain most efficient utilization of product it is preferred that the distribution of particles be narrow. To this end, for foliar applications it is preferred that the d₉₀ be within a factor of 4, preferably within a factor of 3, more preferably within a factor of 2, of the d₅₀. For wood preservative applications, it is preferred that the d₉₆ be within a factor of 4, preferably within a factor of 3, and most preferably within a factor of about 2, of the d₅₀. for all applications is preferred that it is preferred that the d₉₉ be within a factor of 5, preferably within a factor of 4, and most preferably within a factor of about 3, of the d₅₀. It is also preferred that the d₁₀ is greater than about 1/4th the d₅₀, preferably greater than about 1/3rd the d₅₀.

Generally, depending on the solubility or lack thereof of a particular component, for applications such as incorporating biocides into non-fouling paints and such, the requirements of either the foliar applications or the wood preservation applications will suffice. The biocidal particles can be used for a variety of other applications, including being incorporated into a variety of construction materials including foams, insulation, plastics, fiberboard, wood composites, roofing material, and the like.

Advantageously, the biocidal particles comprise at least 25%, for example at least 40%, preferably at least 50%, and in a very preferred embodiment at least about 75% by weight of solid phase biocidal materials. If the biocidal material is one or more sparingly soluble copper salts, then advantageously the solid phase material is substantially (e.g., at least 30%) crystalline.

Preferably the biocidal slurry is free of any particles having a diameter greater than 2 microns, preferably free of any particles having a diameter greater than 1 micron.

A preferred biocidal slurry has an average diameter d₅₀ of between 0.08 microns and 0.6 microns, wherein at least 60%, preferably greater than 80% by weight of the biocidal material is contained in particles having a diameter between 0.5 and 1.5 times the d₅₀. The most preferred biocidal slurries have an average diameter d₅₀ of between 0.1 microns and 0.4 microns, wherein at least 60%, preferably greater than 80% by weight of the biocidal material is contained in particles having a diameter between 0.5 and 1.5 times the d₅₀.

In one preferred embodiment, at least one class of biocidal particles in the slurry further comprises a second material disposed on the surface thereof, wherein the second material is 1) a different biocidal material, 2) a leachability barrier that alters the leachability of the solid phase biocidal material, 3) an antioxidant and/or UV barrier that reduces the degradation rate of the solid phase biocidal material, 4) an anticorrosive agent that reduces the tendency the to corrode metal, or any combination thereof.

Preferably, the biocidal slurry is formulated, stored, and transported as a slurry concentrate, wherein the slurry concentrate material has undergone wet ball milling with a milling aid comprising at least 25% by weight of milling beads having a density greater than about 3.5 and a diameter between 0.2 mm and 0.8 mm.

In one alternate embodiment, the flurry further comprises at least one pigment or dye in an amount sufficient to impart a discernable color or hue to the treated material, when compared to material treated with the same slurry but without the pigment or dye. In one alternate embodiment, the slurry further comprises at least one pigment or compound that functions as a UV blocker, in an amount sufficient to reduce degradation caused by exposure to sunlight of the solid phase biocidal material. The pigments can be injectable particulates, oil-soluble organic dyes, water-soluble dyes, or combinations thereof. Advantageously, the pigments, dyes, and/or UV-blocking compounds are disposed on the outer surface of the biocidal particles.

The invention encompasses the use of the biocidal slurries in the treatment of wood.

### BRIEF DESCRIPTION OF FIGURES

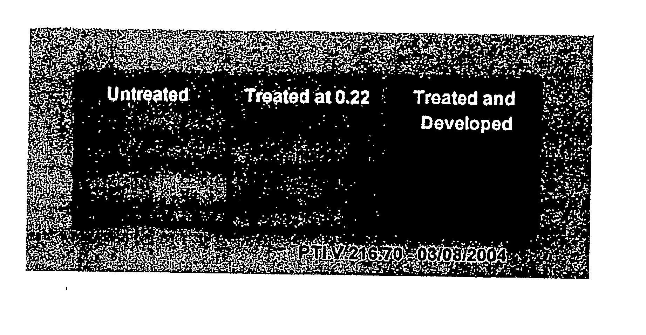

Figure 1 shows interior sections of wood blocks showing: (left) an untreated block; (middle) a block treated with injected sparingly soluble copper salt particulates (at 0.22 lb Cu/ft³); and (right) a block treated with injected sparingly soluble copper salt particulates (at 0.22 lb Cu/ft³) and developed with a material which stains the wood black when copper is present. It can be seen that there is little or no difference in appearance between untreated wood and wood treated with injected sparingly soluble copper salt particulates (at 0.22 lb Cu/ft³). It can also be seen that the copper particles where present throughout the entire cross section of the block.

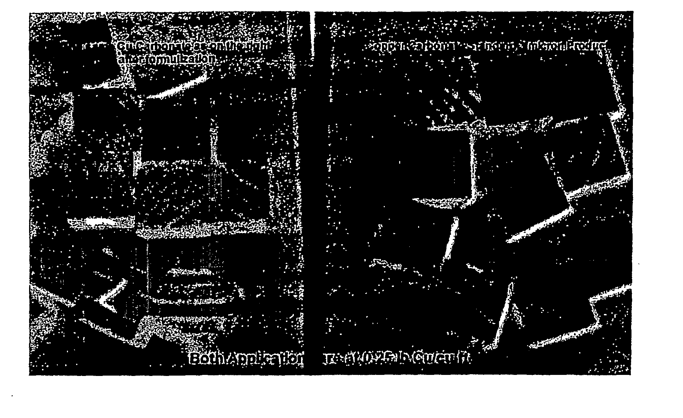

Figure 2 shows on the left a photograph of wood blocks injected with un-milled sparingly soluble copper salt having d₅₀ of 2.5 microns and on the right a photograph of wood injected with milled sparingly soluble copper salt having d₅₀ of ∼0.2 to ∼0.3 microns.

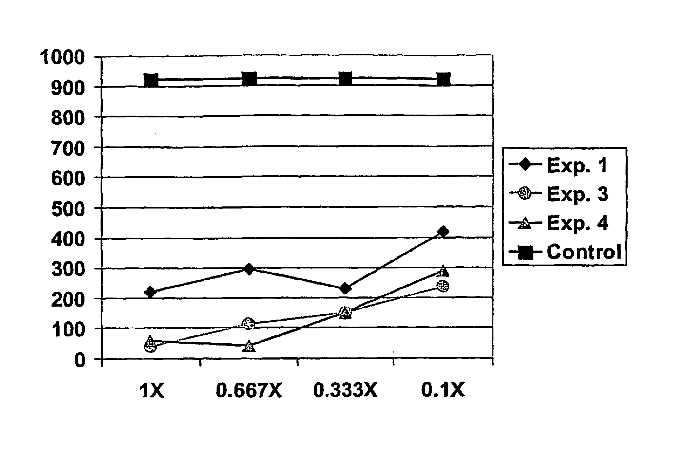

Figure 3 shows *Botrytis* Growth Rate (mm²/day) on PDA at four concentrations that were X, 0.67X, 0.33X, and 0.1X. "EXP 1" is a comparative example using a commercially available chlorothalonil product having an average particle size in excess of 2 microns. "EXP. 3" and "EXP 4" are growth rates on PDA treated with wet ball milled submicron chlorothalonil product.

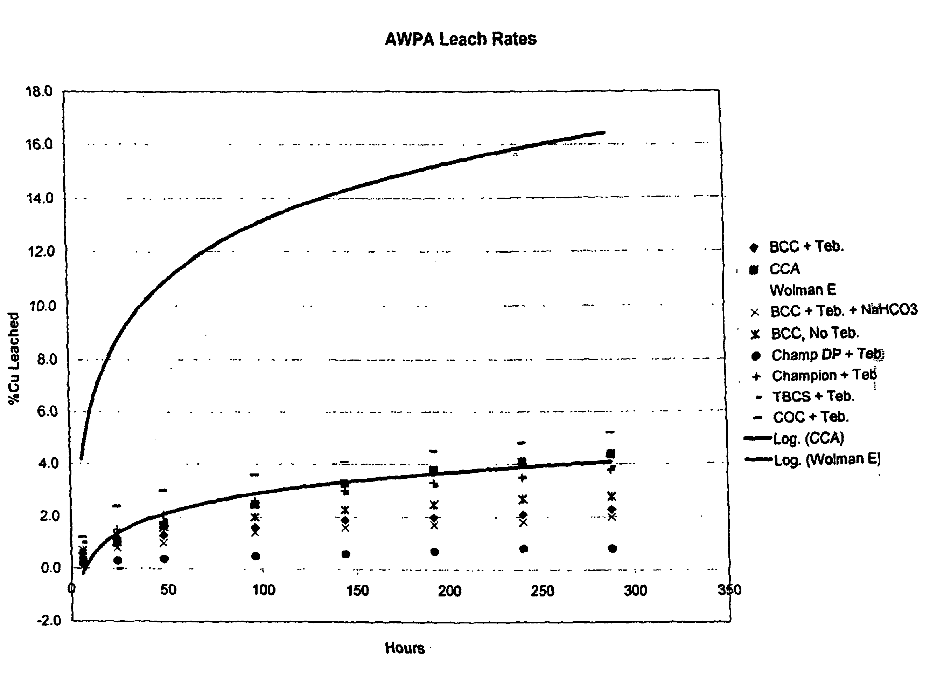

Figure 4 shows the quantity of copper leached from wood that had been previously treated with prior art CCA and aqueous copper-ethanolamine solutions, as well as the copper leached from wood treated with biocidal slurries according to the method of this invention.

### DEFINITIONS

As used herein, the terms "particulate" and "particle" are used interchangably. Unless otherwise specified, all compositions are given in "percent", where the percent is the percent by weight based on the total weight of the entire component, *e.g*., of the particle, or to the injectable composition. In the event a composition is defined in "parts" of various components, this is parts by weight.

As used herein, the terms "substantially insoluble", we mean the biocide has a solubility in water of less than about 0.1% (1000 ppm), and most preferably less than about 0.01% (100 ppm), for example in an amount of between about 0.005 ppm and about 1000 ppm, alternatively between about 0.1 ppm and about 100 ppm or between about 0.01 ppm and about 200 ppm, in water. Alternately, the term "sparingly soluble" includes inorganic salts with a Kₛₚ of between about 10⁻⁸ to about 10⁻²⁴, preferably between about 10⁻¹⁰ to about 10⁻²¹, for salts with only one anion, and from about 10⁻¹⁴ to about 10⁻²⁷ for salts with two anions. Solubility is the solubility of the compound in pure water. The terms "sparingly soluble" as the term relates to inorganic biocidal salts and compounds and "substantially insoluble" are generally used interchangably herein, though in a direct comparison a substantially insoluble material is expected to have a lower solubility in water than is a sparingly soluble material.

As used herein the term "pigment" means a particle which comprises a solid phase of the coloring agent, that when used in sufficient concentration imparts a desired color or hue to the wood. As used herein the term "dye" means an organic or metallo-organic compound that imparts color, and that typically is not used as a solid phase but rather as dispersed molecules or as coatings, when used in sufficient concentration imparts a desired color or hue to the wood. Generally, but not always, pigments comprise a metal ion. If the pigment comprises metal ions, and if the biocidal particulates also comprise a solid phase of a metal oxide, hydroxide, and/or sparingly soluble salt, then the metal ion in the pigment should be different than the metal ion in at least some biocidal particles. For example, if the biocidal particles include a solid phase of a sparingly soluble copper salt such as copper hydroxide or copper carbonate (that is, a salt where more than one half the moles of cations in the sparingly soluble salt are copper), then the pigment can comprise for example metal oxides where the metal most abundant in the pigment (by moles metal) is not copper. On the other hand, if a metal is a minor component of the total cations in the biocidal particle, for example zinc or magnesium wherein the biocidal particle comprises a sparingly soluble stabilized copper hydroxide wherein between about 1% and about 20% of the cations in the copper hydroxide material are zinc or magnesium metal, then the pigments can comprise inorganic magnesium and/or zinc salts or oxides, but not inorganic copper salts or oxides.

If the manufacturer wants wood with a specified color, the dye would be present in an amount sufficient to impart a discernable color to the wood if, when compared to identical wood treated with the same particulate biocidal materials in the same concentration but without the dyes and/or pigments, there is a difference in the color of the wood discernable to a majority of people not afflicted by color blindness. Absence of a visually apparent color, when compared to identical wood treated with the same particulate biocidal materials in the same concentration but without having the pigments and dyes, also satisfies the phrase comprising pigments and/or dyes in "an amount sufficient to impart a discernable color to the wood." It is often the case that the manufacturer wants the wood to merely not show visual traces of the preservative treatment, especially when the preservative is an undesirable blue or green such as is provided by many copper compounds. In such a case, the preserved wood without the dye and/or pigment has an undesired visually apparent color. Masking such undesirable color, when compared to identical wood treated with the same particulate biocidal materials in the same concentration but without the pigments and/or dyes, would satisfy the phrase comprising pigments and/or dyes in "an amount sufficient to impart a discernable color to the wood."

By "bio-active" or "biocidal" we mean the injected preservative treatment, which includes one or more biocides, is sufficiently biocidal to one or more of fungus, mold, insects, and other undesired organisms (pests) which are normally the target of wood preservatives such that these organisms avoid and/or can not thrive in the treated wood.

The biocidal particulates, dyes, and pigments must be injectable. By "injectable" we mean that the wood preservative particulates are able to be pressure-injected into wood, wood products, and the like to depths normally required in the industry, using equipment, pressures, exposure times, and procedures that are the same or that are substantially similar to those currently used in industry. Pressure treatment is a process performed in a closed cylinder that is pressurized, forcing the chemicals into the wood. Unless otherwise specified we mean injectable into normal Southern pine lumber. The particulates are sufficiently distributed through at least an inch of a wood product, preferably through at least 2 inches of wood, so as to provide a biocidal distribution of particulates throughout a solid wood matrix.

Injectability into wood requires the particulates be substantially free of the size and morphology that will tend to accumulate and form a filter cake, generally on or near the surface of the wood, that results in undesirable accumulations on wood in one or more outer portions of the wood and a deficiency in an inner portion of the wood. Injectability is generally a function of the wood itself, as well as the particle size, particle morphology, particle concentration, and the particle size distribution.

Generally, even slurries of small particles usually have a small fraction of particles that are unacceptably large, *i*.*e*., a few particles are too big to be injectable. A very small fraction of particles having a particle size above about 1 micron causes, in injection tests on wood specimens, can severely impaired injectability and can make the resulting product not be desirable for use, as biocidal particles that have a size above 1 micron are often visible or when present in sufficient amount impart a readily visible color, which can be an undesirable blue-green such as results from weathering of copper-containing particles on an exterior surface. That is, large biocidal particles or large agglomerations of smaller biocidal particles when injected into wood can impart substantially more undesirable color than for example an equal weight of smaller particles that are dispersed throughout the wood matrix. Additionally, the wood so treated will eventually release biocidal particles that were not injected into the wood but were rather trapped only on the exterior of the wood, thereby creating health and/or environmental hazards. As a result, there should be very few or no large particles, *e*.*g*., greater than about 1.5 microns, preferably greater than about 1 micron in diameter. Removal via filtering is not economically effective, as a substantial fraction of injectable particles will be caught on filters designed to remove the bigger particles.

As used herein, particle diameters may be expressed as "dₓₓ" where the "xx" is the weight percent (or alternately the volume percent) of that component having a diameter equal to or less than the dₓₓ. The d₅₀ is the diameter where 50% by weight of the component is in particles having diameters equal to or lower than the d₅₀, while just under 50% of the weight of the component is present in particles having a diameter greater than the d₅₀. Particle diameter is preferably determined by Stokes Law settling velocities of particles in a fluid, for example with a Model LA 700 or a CAPA™ 700 sold by Horiba and Co. Ltd., or a Sedigraph™ 5100T manufactured by Micromeritics, Inc., which uses x-ray detection and bases calculations of size on Stoke's Law, to a size down to about 0.15 microns. Smaller sizes may be determined by a dynamic light scattering method, preferably with a laser-scattering device, but are preferably measured by direct measurements of diameters of a representative number of particles (typically 100 to 400 particles) in SEM photographs of representative sub-0.15 micron material. For particles between about 0.01 microns and about 0.15 microns, the particle size can be determined by taking SEMs of representative particles within the size range and measuring the diameter in two directions (and using the arithmetic average thereof) for a representative sample of particles, for example between 100 particles to about 400 particles, where the relative weight of the particles within this fraction are assumed to be that weight of a spherical particle having a diameter equal to the arithmetic average of the two measured diameters, and wherein the total weight of the sub-0.2 micron fraction is advantageously normalized to a reported "<0.2 micron" fraction determined from the hydrodynamic settling test. Sparingly soluble salt particles having diameters below 0.02 microns are considered to be soluble, and if injected into wood are expected to provide leaching characteristics similar to those provided by injected soluble aqueous copper amine treatments.

Advantageously, both the biocidal particles and the pigments are substantially free of hazardous material. By "substantially free of hazardous material" we mean the preservative treatment is substantially free of materials such as lead, arsenic, chromium, and the like. By substantially free of lead we mean less than about 0.1 % by weight, preferably less than about 0.01% by weight, more preferably less than about 0.001% by weight, based on the dry weight of the wood preservative. By substantially free of arsenic we mean less than about 5% by weight, preferably less than about 1% by weight, more preferably less than about 0.1 % by weight, for example less than about 0.01% by weight, based on the dry (water-free) weight of the wood preservative. By substantially free of chromium we mean less than about 0.5% by weight, preferably less than about 0.1 % by weight, more preferably less than about 0.01% by weight, based on the dry weight of the wood preservative.

Advantageously, the wood preservatives are beneficially substantially free of organic solvents. By substantially free we mean the treatment comprises less than about 10% organic solvents, preferably less than about 5% organic solvents, more preferably less than about 1% organic solvents, for example free of organic solvents, based on the water-free weight of the wood preservative composition. As used herein, ammonium hydroxide, alkanolamines, and amines which can complex copper are considered organic solvents. Biocidal quaternary amines, on the other hand, are not organic solvents. In preferred embodiments of this invention, the slurry is substantially free of alkanolamines, e.g., the slurry comprises less than about 1% alkanolamines, preferably less than about 0.1% alkanolamines, or is completely free of alkanolamines. In preferred embodiments of this invention, the slurry is substantially free of amines, e.g., the slurry comprises less than about 1% amines, preferably less than about 0.1% amines, or is completely free of amines, with the proviso that amines whose primary function is as an organic biocide are excluded from this. In preferred embodiments of this invention, the slurry is substantially free of solvents, e.g., the slurry comprises less than about 1% organic solvents, preferably less than about 0.1% organic solvents, or is completely free of organic solvents.

### DETAILED DESCRIPTION OF PREFERRED EMBODIMENTS

PRESERVATIVE COMPOSITIONS: The biocidal slurry which can be used in the method of the present invention comprises 1) water, 2) injectable particles having a solid phase of sparingly soluble inorganic biocidal salts, injectable particles having a solid phase of sparingly soluble to substantially insoluble biocidal oxides, injectable particles having a solid phase of biocidal partially glassified compositions, and/or injectable particles having a solid phase or a coated layer of substantially insoluble organic biocidal compounds; and 3) dispersants.

The biocidal slurry may optionally further comprise one or more of: A) organic biocidal material not present as an identifiable solid phase, for example an organic biocide dispose as a thin layer on the surface of a biocidal particle or a pigment particle or an emulsified or solubilized organic biocide; B) biocidal oxides such as having a size much smaller than the recited size of the biocidal particles, for example having a size between 0.01 and 0.08 microns; C) dyes, pigments, and/or UV-blockers or UV-protectors; D) antioxidants; E) organic materials (which are not dispersants) disposed on the surface of particles, for example one or more of oils, waxes, silicone oils, and rosins; F) surfactants or wetting aids; G) chelators and/or scale inhibitors such as HEDP; H) corrosion inhibitors; I) pH modifiers and/or buffiers, J) anti-freeze agents, K) flame retardants, L) water repellents, M) anti-foam agents, and N) viscosity modifiers. Generally, any of the above can individually be present in an amount between about 0.0001% to 3%, but are usually present in amounts between 0.05% and 1%. The cumulative concentration of these adjuvants is generally less than 5% of the injected slurry.

In one embodiment, the wood preservative composition further comprises a soluble copper-amine complex. Preferably, the wood composition does not comprise a soluble copper-amine complex.

In a preferred embodiment, the liquid carrier consists essentially of water and optionally one or more additives to aid particulate dispersion, to provide pH maintenance, to modify interfacial tension (surfactants), and/or to act as anticoagulants. In another embodiment, the carrier consists essentially of water; optionally one or more additives to aid particulate dispersion, to provide pH maintenance, to modify interfacial tension (surfactants), and/or to act as anticoagulants; and an emulsion of oil or surfactants comprising organic biocides, oil-soluble dyes, or both dissolved and/or dispersed therein. In another embodiment, the carrier consists essentially of water; optionally one or more additives to aid particulate dispersion, to provide pH maintenance, to modify interfacial tension (surfactants), and/or to act as anticoagulants; and a water-soluble dye.

Advantageously, the pH of the liquid carrier is between about 7 and about 9, for example between about 7.5 to about 8.5. Acidic pH slurries are not preferred because several of the sparingly soluble copper salts have a higher solubility at lower pH. The pH can be adjusted with sodium hydroxide, potassium hydroxide, or sodium carbonate, or potassium carbonate, or less preferably with alkaline earth oxides, methoxides, or hydroxides; or less preferably with ammonium hydroxide. The pH of the injectable slurry is typically between pH 6 and 11, preferably between 7 and 10, for example between 7.5 and about 9.5. Advantageously the pH of the liquid carrier is between about 7 and about 11, for example between about 7.5 to about 9, or between about 8 and about 8.5. Alternately, the pH of the injectable slurry is between pH 6 and 11, preferably between 7 and 10, for example between 7.5 and about 9.5. Alkaline earth bases are less preferred because if carbon dioxide or carbonates are present in solution, there is a possibility of precipitation, for example of calcite. Such precipitation may create undesired plugging of the wood during injection. The preferred ingredients to increase the pH is an alkali hydroxide, e.g., sodium hydroxide or potassium hydroxide or alkali carbonate, or both. It may be advantageous to add basic alkali phosphate, basic alkali borate, or the monoacid forms thereof, or any combinations thereof, to the liquid carrier to increase the pH and provide some buffering capacity.

In one embodiment the slurry comprises between 50 and 800 ppm of one or more scale precipitation inhibitors, particularly organophosphonates. Alternately or additionally, the slurry may contain between about 50 and about 2000 ppm of one or more chelators. Both of these additives are meant to inhibit precipitation of salts such as calcium carbonate and the like, where the source of calcium may be from the water used to make up the slurry. In one embodiment, the precipitation inhibitor comprises at least one and preferably at least two phosphonic groups. The precipitation inhibitor may comprise a phosphonic acid or salt of a phosphonic acid. The precipitation inhibitor may comprise at least one of a hydroxyethylidene diphosphonic acid and an aceto diphosphonic acid. A suitable phosphonate may be synthesized from phosphorous acid by reaction with formaldehyde and either ammonia or amines. A wood preservative used in the method of the present invention may include at least one of a ethylenediamine tetra methylenephosphonic acid, a hexamethylenediamine tetra methylenephosphonic acid, a diethylenetriamine penta methylenephosphonic acid, and a 1-hydroxyethane diphosphonic acid. The preferred inhibitors are hydroxyethylidene diphosphonic acid (HEDP), diethylenetriamine-pentamethylenephosphonic acid (DTPMP), and/or 2-phosphonobutane-1,2,4-tricarboxylic acid (PBTC). If the preservative is in a slurry concentrate, the slurry should comprise between 10 mmoles and 100 mmoles/L of HEDP, or between 30 mmoles and 170 mmoles/L of PBTC or DTPMP. Mixtures of inhibitors are preferred, as concentrates may have more inhibitor than can readily be solubilized therein. If the preservative is in a solid form, the preservative should comprise between about 0.1 to about 1 mole HEDP per kg of particulates, or between about 0.17 to about 2 mole PBTC and/or DTPMP per kg of particulates.

To prevent biocidal particulates from agglomerating, the concentrated slurry may comprise emulsifiers such as gelatine, casein, gum arabic, lysalbinic acid, and starch; and/or polymers, such as polyvinyl alcohols, polyvinyl pyrrolidones, polyalkylene glycols and polyacrylates, for example, in quantities of about 0.01% to about 1% by weight, based on the weight of the biocidal particulates.

In preferred embodiments of this invention, the slurry used is substantially free of alkanolamines, e.g., the slurry comprises less than 1% alkanolamines, preferably less than 0.1% alkanolamines, or is totally free of alkanolamines. In preferred embodiments of this invention, the slurry used is substantially free of amines, e.g., the slurry comprises less than 1% amines, preferably less than 0.1 % amines, or is totally free of amines, with the proviso that gamines whose primary function is as an organic biocide are excluded. Generally, if amines are included, they form dispersants and stabilizers, and they are used at the lowest practicable concentrations. In preferred embodiments of this invention, the slurry used is substantially free of ammonium compounds (e.g., ammonium hydroxide), e.g., the slurry comprises less than 1% ammonia, preferably less than 0.1% ammonia, or is totally free of ammonium compounds, with the proviso that ammonium compounds whose primary function is as an organic biocide are excluded. In preferred embodiments of this invention, the slurry used is substantially free of solvents, e.g., the slurry comprises less than 1% organic solvents, preferably less than 0.1% organic solvents, or is totally free of organic solvents.

In one preferred embodiment, at least a portion of the biocidal particles in the slurry further comprise a second material disposed on the surface of the biocidal particles, wherein the second material is 1) a biocidal material different than the solid-phase biocidal material in the particle, 2) a leachability barrier that alters the leachability of the solid phase biocidal material, 3) an antioxidant and/or UV barrier that reduces the degradation rate of the solid phase biocidal material, 4) an anticorrosive agent that reduces the tendency the to corrode metal, or any combination thereof.

One injectable, biocidal slurry contains
A) biocidal particles having 1) at least 25%, preferably at least 35%, for example at least 50% by weight of a solid phase consisting essentially of one or more of sparingly-soluble copper-, nickel-, tin-, and/or zinc- salts or hydroxides; 2) at least 25%, preferably at least 35%, for example at least 50% by weight of a solid phase comprising or consisting essentially of a substantially insoluble organic biocide that is a solid at ambient temperature; 3) at least 25% preferably at least 35%, for example at least 50% by weight of a substantially insoluble or sparingly soluble biocidal glassified material; or mixtures or combinations thereof, and
B) a coating, covering at least a portion of the exterior surface of the biocidal particles, comprising dispersants and one or more adjuvants selected from 1) pigments, dyes, and/or UV-blockers; 2) antioxidants; 3) organic materials (which are not dispersants) disposed on the surface of particles, for example one or more of oils, waxes, silicone oils, and rosins. The coating can further comprise one or more organic biocides. Without being bound by theory, it is believed that having the adjuvants associated with the surface of (or "at least partially coating") the biocidal particulates can have one or more of the following advantages: 1) it is an exceedingly effective way to mask the color of the biocidal particle, as only the particle needs to be dyed and not the entire substrate (*e.g*., wood) to which the composition is introduced; 2) it provides a method to visually ensure penetration of a preservative into the substrate (*e*.*g*., wood) or dispersion onto plants; and 3) the adjuvants can reduce (or promote) dissolution of biocidal material, and 4) the adjuvants coating the particle can substantially reduce degradation of solid phase biocidal material resulting from contact with sunlight, moisture, and air. Advantageously, a preferred method for manufacturing such a composition is by wet milling the adjuvants with the dispersants and the biocidal particulates, for example using a milling agent that includes or is zirconia, preferably zirconia having an average size/diameter from about 0.2 to about 0.8 mm, more preferably from about 0.3 to about 0.6 mm, for example of about 0.5 mm.

Another injectable, biocidal slurry contains
A) biocidal particles having 1) at least 25%, preferably at least 35%, for example at least 50% by weight of a solid phase consisting essentially of one or more of sparingly-soluble copper-, nickel-, tin-, and/or zinc- salts or hydroxides; 2) at least 25%, preferably at least 35%, for example at least 50% by weight of a solid phase comprising or consisting essentially of a substantially insoluble organic biocide that is a solid at ambient temperature; 3) at least 25% preferably at least 35%, for example at least 50% by weight of a substantially insoluble or sparingly soluble biocidal glassified material; or mixtures or combinations thereof; and
B) a coating, covering at least a portion of the exterior surface of the biocidal particles, comprising dispersants and an organic biocide which is different than the solid-phase biocidal material forming the biocidal particle, where the coating may further comprise oils, waxes, silicone oils, rosins, organic UV-blockers, dyes, organic antioxidants, or combinations thereof.
Without being bound by theory, it is believed that having the adjuvants associated with the associated with the surface of (or "at least partially coating") the biocidal particulates can have one or more of the following advantages: 1) it is an exceedingly effective way to distribute a small amount of material uniformly through the treated area or volume; 2) it provides a method to ensure that biocides that act synergysticly are in sufficiently close contact; 3) the adjuvants can reduce dissolution of solid-phase biocidal material, and 4) the adjuvants coating the particle can substantially reduce degradation of solid phase biocidal material resulting from contact with sunlight, moisture, and air. Advantageously, a preferred method for manufacturing such a composition is by wet milling the adjuvants with the dispersants and the biocidal particulates, for example using a milling agent that includes or is zirconia, preferably zirconia having an average size/diameter from about 0.2 to about 0.8 mm, more preferably from about 0.3 to about 0.6 mm for example of about 0.5 mm.

Another injectable, biocidal slurry contains
A) biocidal particles having 1) at least 25%, preferably at least 35%, for example at least 50% by weight of a solid phase consisting essentially of one or more of sparingly-soluble copper-, nickel-, tin-, and/or zinc- salts or hydroxides; 2) at least 25%, preferably at least 35%, for example at least 50% by weight of a solid phase comprising or consisting essentially of a substantially insoluble organic biocide that is a solid at ambient temperature; 3) at least 25% preferably at least 35%, for example at least 50% by weight of a substantially insoluble or sparingly soluble biocidal glassified material; or mixtures or combinations thereof; and
B) second particles comprising a biocidal metal oxide selected from copper(1) oxide, copper(II) oxide, tin oxide, and zinc oxide, wherein the second particles have a size (d₅₀) smaller than one half, preferably smaller than about one third, of the size of the principal biocidal particles. Particularly preferred second particles are zinc oxide and tin oxide, more preferably zinc oxide. Such small particles can be used to assist in milling organic biocidal material, can block UV rays, and even can be associated with the outer surface of the larger biocidal particle and inhibit dissolution thereof. In addition, while copper and zinc oxides are generally not considered to be sufficiently biocidal, the very small size increases dissolution rates (and therefore the biocidal activity) of the oxides, and the use of the small oxide particles as supplemental biocidal agents reduces the need for high biocidal activity. Advantageously the second particles, for example the 0.01 to 0.08 particle size zinc oxide particles such as is described in U.S. Patent 6,342,556, are added to the slurry concentrate before the wet ball milling. During milling, the second particles can assist in the milling of the softer substantially insoluble organic biocides and softer sparingly soluble biocidal salts. Additionally, during milling the second particles may become associated with the surface of the larger biocidal particles, or the second particles may themselves have through abrasion with softer organic biocides eventually have sufficient organic material of a size and composition disposed on the surface of the second particles to reduce rapid dissolution and/or flushing of the typically sub-0.1 micron in diameter second particles from wood. Of the biocidal oxides, zinc is preferred. Suitable sub-0.1 micron zinc oxides is available under the trade designation of "Nyacol DP-5370" from Nyacol Products, Inc., (Valley Forge, Pa.), or it can be produced by wet ball milling with 0.3 mm to 0.5 mm zirconia milling media. Copper oxides are not preferred as there is an increased tendency for smaller particles to be flushed from the wood by water, which would subsequently have an adverse environmental impact with aquatic environments.

Advantageously, effective, non-staining/coloring, low-or no-copper-leaching wood preservatives can be readily prepared using various combinations of embodiments of this invention. The rate of copper leaching from sparingly soluble copper salts can be minimized by
1) having most of the weight of injected sparingly soluble copper salts be in the form of copper(I)oxide, magnesium- and/or zinc-stabilized copper hydroxide, basic copper carbonate, or a mixture of at least one mole of magnesium- and/or zinc-stabilized copper hydroxide or basic copper carbonate per mole of other copper salt, e.g., copper borate, copper oxychloride, and/or tribasic copper sulfate;
2) having most of the sparingly soluble copper salts and copper(I) oxides be in the form of particles having a mean diameter of between 0.2 and 0.4 microns, where less than about 20% of the copper is in the form of particles having a diameter less than about 0.08 microns;
3) including in the preservative a substantially insoluble to sparingly soluble at-least-partially-glassified composition, wherein the at-least-partially-glassified composition comprises alkaline components;
4) having most of the copper be in the form of a substantially insoluble to sparingly soluble at-least-partially-glassified composition, wherein the at-least-partially-glassified composition further comprises alkaline components;
5) having a composition that comprises less than 5% copper, preferably less than 3% copper, wherein the copper is either a) dispersed as a minor ion (less than 50%, preferably less than 20% of the moles of cations in the material) in a sparingly soluble zinc salt or in zinc oxide, and/or b) dispersed in a substantially insoluble to sparingly soluble at-least-partially-glassified composition; and/or
6) having at least a portion of any copper-containing sparingly soluble salts, oxides, and/or substantially insoluble to sparingly soluble at-least-partially-glassified composition be in the form of particles having a coating comprising one or more of insoluble organic compounds, for example oils, waxes, resins, polymers, substantially insoluble organic biocides, or mixtures thereof, wherein the above-listed components are present in an amount sufficient to reduce copper leaching by at least 20%, preferably by at least 40%, preferably by at least 60% when compared to the leach rate of an injected slurry not having the above components (where leach rate is the total copper leached in a 288 hour test following the procedures used in the Examples).
Copper is the most cost-effective and mass-effective biocidal metal for most pests, but copper is not environmentally compatible with aquatic environments or where bird are present. The techniques above reduce copper leaching by combinations of using larger particles, partially coating the particles with insoluble barriers, adding long-lasting alkali to the wood preservative to counteract the tendency of copper to be solubilized in the low pH environment of wood, and/or reducing leaching by partially glassifying the composition.

It is known that silver is also very effective, but silver is generally not used because the cost can be excessive. In some embodiments, a small amount of silver can be included in a wood preservative composition, for example in the form of particles of metal oxides or hydroxides, where silver accounts for less than 10% of the moles of cations in the material.

The mixture can then be incorporated into a slurry or be dried or formulated into a stable concentrated slurry for shipping. The coated particulates are then treated to prevent coalescence by, for example, coating the particle with other adjuvants such as anticoagulants, wettability agents, dispersibility agents, and the like. Such a product can be stored, shipped, and sold as a dry pre-mix, but is more advantageously sold as a slurry concentrate. The coated particulates are then treated to prevent coalescence by, for example, coating the particle with other adjuvants such as anticoagulants, rosins, waxes, wettability agents, dispersibility agents, and the like. Such a product can be stored, shipped, and sold as a dry pre-mix, but is more advantageously sold as a slurry concentrate.

The wood preservative composition is preferably prepared, sold, shipped, and stored as a wet mix or as a slurry concentrate, and typically such a composition will comprise about 20% to about 85% water. The quantity and type of dispersing agents must inhibit irreversible agglomeration of particles in both the slurry concentrate (which may be stored for weeks or months prior to use) and in the diluted, ready to use slurry which is typically prepared within a few hours of the time the slurry is to be injected into wood. The slurry concentrate may be diluted with water, beneficially fresh water. The selection of adjuvants can provide safeguards against unwanted reactions that might otherwise occur on dilution, such as dissolution of copper or other biocidal metals if the added water is acidic to formation of scale deposits if the added water is "hard" water.

Advantageously, the composition to be injected into wood, or sprayed onto plants, is a dilute mixture containing between about 96% to about 99.5% water. Shipping and storing such a composition is very difficult. Therefore, advantageously, the composition is prepared in a very concentrated form, for example, as a dry mix or as a slurry concentrate having between 20% and 95% water, more typically between 40% and 80% water, with the remainder comprising biocidally active material, dispersants, and other adjuvants.

The loading of the biocidal particulates in the slurry to be injected into wood will depend on a variety of factors, including the desired loading in the wood, the porosity of the wood, and the dryness of the wood. Calculating the amount of biocidal particulates in the slurry is well within the skill of one of ordinary skill in the art. Generally, the desired biocide loading into wood is between 0.025 and about 0.5 pounds metal per cubic foot of wood. Advantageously the biocidal particles comprise at least 25%, preferably at least 50%, for example at least 75% of a solid biocidal material. This means that the dispersants, dyes, pigments, absorbed organic biocides, and the like are generally present in an amount that is between about one third to about three times the amount of biocidal material. Similarly, the loading of dyes and/or pigments will depend on the color, whether the pigment is to color the wood or merely disguise or mask the color of the biocides, and whether the dyes are water-soluble, alcohol-soluble, or oil-soluble, and the particle size and distribution of pigment particles.

BIOCIDAL MATERIAL:

A method of manufacturing an injectable slurry comprising a composition comprising one or more of the following particles is disclosed herein :
A) optionally, at least one pigment particles,
B) one or more wood-injectable biocidal particulates comprising biocidal material selected from:
   1) at least 25% by weight of a solid phase (which is preferably substantially crystalline and is preferably finely ground) of sparingly-soluble copper salts and/or hydroxides such as copper hydroxide, basic copper carbonate, basic copper sulfate, basic copper chloride, basic copper phosphate, basic copper phosphosulfate, copper borate, and the like;
   2) at least 25% by weight of a solid phase (which is preferably substantially crystalline and is preferably finely ground) of copper(I) oxide;
   3) at least 25% by weight of a solid phase (which is preferably substantially crystalline and is preferably finely ground) of a sparingly-soluble zinc-containing material such as basic zinc carbonate, zinc hydroxide, zinc phosphate, zinc borate, and the like;
   4) at least 25% by weight of a solid phase (which is preferably substantially crystalline and is preferably finely ground) of zinc oxide;
   5) at least 25% by weight of a solid phase (which is preferably substantially crystalline and is preferably finely ground) of a sparingly-soluble nickel-containing material such as nickel hydroxide, nickel borate, or nickel carbonate;
   6) at least 25% by weight of a solid phase (which is preferably substantially crystalline and is preferably finely ground) of a sparingly-soluble tin-containing material such as finely ground hydroxides or carbonates of tin;
   7) at least 25% by weight of a solid phase (which is preferably finely ground) of a solid substantially insoluble organic biocide or combinations of organic biocides, or alternatively a substantially insoluble organic biocide that is coated on a particle, wherein the substantially insoluble organic biocide can include triazoles quaternary ammonium compounds, carbamides, and other organic biocides, or any combinations thereof, including particularly:
      a) for wood preservative applications, particles containing a solid phase of a substantially-insoluble organic biocide such as: triazoles including for example tebuconazole, chlorothalonil, iodo-propynyl butyl carbamate, copper-8-quinolate, fipronil, imidacloprid, bifenthrin, carbaryl, strobulurins including for example azoxystrobin or trifloxystrobin, indoxacarb, and optionally but less preferably a biocidal quaternary ammonium compound such as dimethyl didecyl ammonium carbonate, or any mixture thereof; and
      b) for foliar, agricultural, and horticultural applications, particles containing a solid phase of a substantially-insoluble organic biocide such as: chlorothalonil, mancozeb/maneb, diuron, atrazine, metolachlor, acetocblor, propanil, iprodione, carbendazim, or any mixture thereof; and
   8) a biocidal substantially insoluble or sparingly soluble biocidal glass.

Another injectible, biocidal slurry contains A) biocidal particulates having a solid phase comprising or consisting essentially of copper oxide, nickel oxide, tin oxide, zinc oxide, or any combination thereof.

In each , the particulate organic biocide may be combined with another particulate biocide. The literature is full of inventions where two or more biocides have a synergistic effect. Often, this is the result of the second biocide protecting the first biocide against organisms that can degrade the first biocide. For sparingly soluble or substantially insoluble biocides, such synergy can only be achieved if both biocides are in the area to be protected (typically an area protected by a particle is considerably less than a square centimeter). As a result, assuming relatively equal amounts of biocide, the two biocides should be relatively comparable in size. Often the second biocide is present in or as an organic liquid. In such cases, the organic liquid can be solubilized in solvent, emulsified in water, and then added to the first biocide before or during milling, or less preferably after milling. The surface of the first biocide can be made compatible with the organic phase of the emulsion, and the emulsion can coat the particles. Advantageously, solvent can be withdrawn, for example by venting the gases above the biocidal composition or by drawing a vacuum. The liquid biocide will subsequently be bound to the surface of the particulate biocide. Not only does this have the advantage of providing the two biocides in close contact so synergy will be observed, but also this provides a method for broadcasting the liquid emulsion without exposing field personnel (if the composition is for foliar applications), painters (if the composition is for non-fouling paints or coatings), and wood preservation personnel from exposure to potentially harmful solvents and solubilized biocides. Advantageously, the solvent should be present only during the manufacturing process, where it can be contained and advantageously recycled or safely disposed of, and the particulate biocidal composition, be it slurry, wettable powder, or granules, can be substantially free of volatile solvents.

The most preferred biocidal particles are substantially round, *e.g*., the diameter in one direction is within a factor of two of the diameter measured in a different direction, wherein particles having an average diameter (d₅₀, as measured by hydrodynamic settling) greater than 0.1 microns and less than 0.5 microns; and also 1) that substantially all the particles, *e.g*., greater than about 98% by weight, preferably greater than 99%, for example greater than 99.5% by weight have a particle size with diameter equal to or less than about 0.5 microns, preferably equal to or less than about 0.3 microns, for example equal to or less than about 0.2 microns, and 2) that substantially no particles, *e.g*., less than about 0.5% by weight, have a diameter greater than about 1.5 microns, or an average diameter greater than about 1 micron, for example. We believe the first criteria primarily addresses the phenomena of bridging and subsequent plugging of pore throats, and the second criteria addresses the phenomena of forming a filter cake. Once a pore throat is partially plugged, complete plugging and undesired buildup generally quickly ensues.

However, there are also minimum preferred particulate diameters for the biocides incorporated into the wood treatment, which depend somewhat on the biocides, particularly the sparingly soluble copper and/or zinc salts, that are in the particulates. If the sparingly soluble salts have a high solubility, then very small particulates having a large surface to mass ratio will result in too high an initial metal ion concentration, and too fast a rate of metal leaching, compared to preferred embodiments of this invention. Generally, it is preferred that at least about 80% by weight of the biocidal particles be above about 0.02 microns in diameter, preferably greater than about 0.04 microns, for example greater than about 0.06 microns in diameter. It is also preferred that at least 50% by weight of the injectable biocidal particles have an average diameter greater than about 0.06 microns, for example between about 0.08 microns and about 0.18 microns. In alternative preferred embodiments used in this invention, at least about 50% by weight of the biocide-containing particulates have a size greater than about 40 nanometers. In one preferred embodiment, at least about 80% by weight of the biocide-containing particulates have a size between about 0.05 microns and about 0.4 microns.

In a most preferred slurry, the sparingly soluble (and preferably substantially crystalline) metal-based particulates advantageously have an average diameter d50 between about 0.1 and about 0.4 microns. The particle size distribution of the particulates is typically such that less than about 1% by weight, preferably less than about 0.5% by weight, of the particulates have an average diameter greater than 1 micron. Preferably the particle size distribution of the particulates is such that less than about 1% by weight, preferably less than about 0.5% by weight, of the particulates have an average diameter greater than about 0.7 microns. Additionally, the particle size distribution of the particulates is such that at least about 30% by weight of the particulates have an average diameter between about 0.07 microns and about 0.5 microns. In a preferred embodiment, the particle size distribution of the particulates is such that at least about 50% by weight of the particulates have an average diameter between about 0.07 microns and about 0.5 microns, for example between about 0.1 microns and about 0.4 microns.

BIOCIDAL MATERIAL - SPARINGLY SOLUBLE SALTS

Another injectible, biocidal slurry contains A) biocidal particulates having a solid phase comprising or consisting essentially of a sparingly soluble copper salt or hydroxide, a sparingly soluble nickel salt or hydroxide, a sparingly soluble tin salt or hydroxide, a sparingly soluble zinc salt or hydroxide, or any combination thereof, and also having an exterior organic coating.

Generally, any sparingly soluble biocidal salt can be used. A list of more preferred biocidal inorganic salts include: basic copper carbonate, copper hydroxide (Ksp∼10⁻²⁰) comprising 1 part, preferably 6 parts, to 20 parts magnesium, zinc, or combination thereof per 100 parts copper, copper borate, basic copper phosphate, zinc hydroxide (Ksp ∼10⁻¹⁷); basic zinc carbonate, zinc carbonate (Ksp ∼10⁻¹¹); basic zinc phosphate, and zinc borate (Ksp ∼10⁻¹²). Selected sparingly soluble nickel salts and finely ground nickel oxide can provide biocidal activity to wood, and like the copper and zinc salts described above, can be readily milled to injectable slurries using processes, can be readily co-mingled with the particulate organic biocide, and can be injected into wood or used in paint. Selected sparingly soluble tin salts and finely ground tin oxide can provide biocidal activity to wood and, like the copper and zinc salts described above, can be readily milled to injectable slurries using processes , can be readily co-mingled with the particulate organic biocide, and can be injected into wood or used in paint Preferred biocidal salts are alkaline in nature, and the so-called basic copper salts are therefore all useful. We have found, however, that the various salts do not have the same leach rates from wood. Of the normal basic copper salts, the leach rates from water-infused wood in descending order are: copper oxychloride (basic copper chloride) which has the highest leach rate, followed by tribasic copper sulfate, (surprisingly) copper hydroxide stabilized with phosphate, basic copper carbonate, and finally copper hydroxide stabilized with magnesium and/or zinc. The relative leaching rates of the various salts suggests that the pH of the environment may be a factor. Its known that copper solubility in water increases by several orders of magnitude as the pH is lowered from about 7 to about 4. Wetted wood naturally has a pH of about 4.5 to 6, and hydroxide-containing salts are a preferred sparingly soluble biocidal salt because the hydroxide anions can increase the pH in wetted wood. The ability of "basic copper salts" to raise the pH in wood varies greatly depending on the salt. The basic copper salts - basic copper carbonate, tribasic copper sulfate, copper oxychloride (basic copper chloride) can be viewed as being formed by admixing copper hydroxide and an acid and then crystallizing the salt: Basic copper carbonate is formed by adding one mole of a weak acid (carbonic acid) to two moles of copper hydroxide, and when dissolved in water will form a solution will have a basic pH; copper oxychloride is formed by adding one mole of a strong acid (hydrochloric acid) to two moles of copper hydroxide, and when dissolved in water will form a solution will have an acidic pH (pH∼5); and tribasic copper sulfate is formed by adding one mole sulfuric acid, which is a strong acid for the first proton and a weak acid for the second proton, to four moles of copper hydroxide, and when dissolved in water will as expected form a solution with a pH 6-6.5, which is between that from basic copper carbonate and from copper oxychloride. It was anticipated that leach rates of copper oxychloride would be greater than the leach rates for tribasic copper sulfate which would be greater than the leach rate for basic copper carbonate, which should be greater than the leach rate for copper hydroxide. This is consistent with the observed results.

While the alkaline characteristic of copper hydroxide makes copper hydroxide a preferred sparingly soluble copper salt, copper hydroxide is not without problems. The biggest problem with copper hydroxide is that it will readily dehydrate to form copper oxide. Copper oxide is much less biocidal than copper hydroxide, and copper oxide is less preferred than most any sparingly soluble copper salt. There are mechanisms to stabilize copper hydroxide against dehydration to copper oxide, and a preferred method is to replace between about 0.1 and about 30 mole percent, preferably between about 1 and about 20 mole %, and typically about 2 to about 17 mole percent %, of the copper in copper hydroxide with zinc, magnesium, or both.

We anticipate that phosphate-stabilized copper hydroxide should be an excellent source of copper hydroxide. To date, actual leaching tests have not showed this to be the case - both the amount of copper leached and the long term leach rate of phosphate-stabilized copper hydroxide were much higher than that of zinc-magnesium-stabilized copper hydroxide. It is hypothesized that 1) the addition of phosphate either disrupts the crystalline structure or increases the acidic character of the copper hydroxide, thereby increasing copper solubility; 2) milling dislodges and removes the thin layer of copper phosphate from the biocidal particle to form a plurality of particles with a diameter less than 0.04 microns which can be flushed from wood; 3) the phosphate reacts with a component in the wood to increase copper solubility, or any combination thereof.

For copper-containing sparingly soluble biocidal salts, the most preferred salts are basic copper carbonate; copper hydroxide (especially if stabilized with about 2 to about 17 mole percent of the copper ions being replaced with zinc ions, magnesium ions, or most preferably both; copper borate, and "basic copper borate."

We have found that zinc-magnesium-stabilized copper hydroxide has the lowest initial flushing of injected copper, suggesting it is easily fixed in wood, and also has one of the lowest long term leach rates from wood of all salts tested. Copper hydroxide, more preferably stabilized copper hydroxide, most preferably copper hydroxide stabilized with zinc and/or magnesium, is a very preferred sparingly soluble biocidal salt.

Basic copper carbonate is naturally resistant to loss of carbon dioxide and water, and is not readily converted to copper oxide. Also, basic copper carbonate has sufficient alkaline character to buffer the water in wood and promote a high pH which in turn retards copper leaching. For this reason basic copper carbonate is a very preferred sparingly soluble salt

Borates form the third class of highly preferred sparingly soluble biocidal salts. Borates include hydrated salts of borates, simple metal borate salts, and meta-borates. Borates have a plurality of excellent properties. Borates form sparingly soluble salts with a number of biocidal metals, borates are one of the few biocidal anions, borates are useful to impart fire resistance, and borates can impart corrosion resistance. There has long been an interest in utilizing copper borate as a wood preservative. The primary reason is that both the copper ions and the borate ions have excellent biocidal qualities.

In contrast to in-situ precipitated copper borate, injected slurries of copper borate crystals will have very high retention (e.g., greater than 97% of copper and borate), no plugging of the surface of the wood, and low leach rates. Leach rates from an injected copper botate slurry can be further reduced by admixing copper borate with stabilized copper hydroxide. We note that "basic copper salts" are stoichiometric and the crystals therefore are homogenous, as opposed to for example a physical mixture of copper hydroxide and of copper carbonate where the relative amounts of each can be varied to any ratio. However, we expect similar results will be obtained from mixtures of finely divided copper hydroxide and other copper salts, such as copper borate. Basic copper borate may not form an homogenous stable crystal, because basic copper borate is not widely acknowledged. However, a mixture of copper hydroxide (and/or basic copper carbonate) with copper borate at a mole ratio of about 1:1 to about 4:1, preferably at a ratio of about 2:1 to about 3:1, will provide a copper leach rate higher than that of copper hydroxide alone but lower than that of copper borate alone. Such a preservative system is preferred because it provides a relatively long-lived source of biocidal quantities of borate to the wood.

It may be advantageous to replace some or all of the sparingly soluble copper salts and/or copper oxides with sparingly soluble zinc salts and oxides, to reduce or eliminate copper leaching from wood. One advantage to this invention is the development of a plurality of effective copper-less wood preservatives, for use for example around marine environments, on decks and the like. A copper-less wood preservative can comprise one or more of the milled injectable sparingly soluble zinc salt particulates, any of the milled injectable sparingly soluble tin salt particulates, any of the milled injectable substantially insoluble organic biocides, milled injectable zinc oxide, milled injectable iron oxides, any of which can include one or more substantially insoluble organic biocides coated onto the surface of the injectable particles. Preferred inorganic particulates include zinc borate, zinc hydroxide, and zinc oxide. Preferred organic biocides include chlorothalonil. Preferred coated substantially insoluble biocides include the preferred triazoles, for example tebuconazole.

There are a number of useful zinc salts, including some "basic zinc salts, that are useful in the practice of this invention. A more preferred sparingly soluble zinc salt is zinc borate. Zinc borate has a Kₛₚ of about 5x10⁻¹¹, which is near the Kₛₚ of copper carbonate and is firmly within the definition for sparingly soluble salts. Zinc borate, which can be present in a hydrated or dehydrated form, is a known fire retardant for plastics. Lak et al. in "Anti Sap Stain Efficacy Of Borates Against Aureo basidium pullulans, Forest Products Journal 43 (1), pages 33-34, showed zinc borate had good anti-mold efficacy. Dev et al. in "Termite Resistance and Permanency Tests on Zinc-Borate-An Environmental Friendly Preservative," J. Timb. Dev. Assoc. (India) Vol. XLIII, No. 2, April 1997, described using zinc borate as a wood preservative against termites. Again, treatment comprised infusing wood with soluble borax and then adding a soluble zinc compound to form zinc borate in-situ. In subsequent leach tests, which mirrored results of copper borate formed in-situ, fixing of zinc was only fair (∼85%) while fixing of injected borax was poor. Dev et al. found that zinc borate imparted a greater termite resistance than borax alone, but that a large fraction of the resistance was lost in samples that subsequently underwent leach tests, and that the degree of protection did not compete with CCA. Subsequent tests reported by K. Tsunoda et al. in Effects of Zinc Borate on the Properties of Medium Density Fiberboard found that fiberboard treated with 0.25% to 1.5% (as boric acid) of zinc borate, where the chemical is merely added to the blender, suggest boards are well protected against fungi at 1% (as boric acid), that treatment levels greater than 0.5% (as boric acid) protected wood against subterranian termites, but that loadings of 1% to 1.5% (as boric acid) were needed to give good termite resistance. This suggests that wood treated with zinc borate alone would require a treatment having at least 1% (as boric acid) of zinc borate impregnated into the wood. While such a treatment level is also expected to impart some fire resistance and corrosivity protection, this loading is almost an order of magnitude higher than current commercial loadings of copper-containing materials.

We have recently wet ball milled commercially available zinc borate to form an injectable slurry having a d₉₉ of less than 1 micron and a d₈₀ of less than 0.2 microns. This slurry was subsequently injected into wood samples following standard industry practice. Leach tests and biocidal efficacy tests have not been completed. However, we expect both initial retention of zinc borate to be well over 97% and also that the long term leach rate of zinc and borate from the wood will be low.

Metal borates are more preferred sparingly soluble salts, because they can impart not only biocidal preservatives to wood, but also impart specifically greater antimold properties than can metal hydroxides and the like, can impart fire resistance, and can reduce corrosivity in wood. The data suggests that a combination of zinc borate , optionally zinc oxide, and one or more substantially insoluble organic biocides will provide a useful copper-free wood preservative treatment for wood. Other borates can be incorporated into the composition, even if the metal portion is not considered to be biocidal. U.S. Patent 6,700,006 teaches the use of borate-type pigments such as zinc borate, calcium borate or meta-borate, and barium borate or metaborate, additionally have an anticorrosive effect. Iron borates and metaborates, tin borates and metaborates, and the like are also expected to be useful. Addition of one or more co-biocides can lower the target treatment level, as can addition of a minor amount (less than one half, for example one fourth part per part of zinc borate) of copper borate to a zinc borate preservative, or alternately replacing 1-30% of the zinc ions in zinc borate with copper, will provide increased biocidal efficacy while still maintaining a low copper leach rate.

It is known that if water is acidified, the solubility of metal borates goes up significantly. Even if water is acidified with for example 3% boric acid, the solubility of zinc borate increases about 30 times over the solubility of zinc borate in water (M.B. Shchigol, 1959). Therefor, inclusion of basic compounds, for example basic copper carbonate, basic zinc carbonate, stabilized zinc hydroxide, or the like can help reduce accelerated leach rates due to the acidic environment in wood.

BIOCIDAL MATERIAL - METAL OXIDES

The biocidal material can comprise one or more metal oxides, including copper oxide, nickel oxide, tin oxide, zinc oxide, or any combination thereof. Copper is not a preferred metal oxide, in part because of the color it can impart, and in part because to obtain reasonable bioactivity very small particles that are subject to being flushed from wood are generally used.

The preferred metal oxide is zinc oxide. First, unlike copper salts and copper oxides, flushing of zinc oxide particles into an aquatic environment will have little or no adverse effects on the environment. Therefore, very small, e.g., 0.01 to 0.08 particle size zinc oxide particles such as is described in U.S. Patent 6,342,556, can be added to the slurry concentrate before the wet ball milling. This zinc oxide will have a second advantage in that it will aid milling of larger organic biocide particles, Second, the cost of zinc oxide is so low that higher loadings (relative to more expensive copper) can be placed in the wood to offset the reduced activity. For example, while a typical preservation treatment may contain 0.08 pound (as copper) of copper salts per cubic foot of wood, a zinc oxide treatment can use for example a loading of 0.2 to 0.5 pounds (as zinc) of copper oxide per pound of wood for little increase in cost.

The zinc oxide may have between 0.1 and about 30%, for example 1 to 20% of the moles of zinc replaced by copper, to increase the biocidal efficacy of the zinc oxide.

Insoluble copper-containing and zinc containing compounds such as copper orthophosphate and zinc orthophosphate can be treated as copper and zinc oxide, respectively.

BIOCIDAL MATERIAL - SUBSTANTIALLY INSOLUBLE ORGANIC BIOCIDES

There are a large number of useful, substantially insoluble organic biocides known to the industry. As used herein, the term "organic biocide" may include, for example, one or more biocides selected from triazole compounds, quaternary amine compounds, nitroso-amine compounds, halogenated compounds, or organometalic compounds. Exemplary organic biocides can include, but are not limited to, azoles such as azaconazole, bitertanol, propiconazole, difenoconazole, diniconazole, cyproconazole, fluquinconazole, flusiazole, flutriafol, hexaconazole, imazalil, imibenconazole, ipconazole, tebuoonazole, tetraconazole, fenbuconazole, metconazole, myclobutanil, perfurazoate, penconazole, bromuconazole, pyrifnox, prochloraz, triadimefon, triadlmenol, triffumizole, or triticonazole; pyrimidinyl carbinoles such as ancymidol, fenarimol, or nuarimol; chlorothalonil; chlorpyriphos; N-cyclohexyldiazeniumdioxy; dichlofluanid; 8-hydroxyquinoline (oxine); isothiazolone; imidacloprid; 3-iodo-2-propynylbutylcarbamate tebuconazole; 2-(thiocyanomethylthio) benzothiazole (Busan 30); tributyltin oxide; propiconazole; synthetic pyrethroids; 2-amino-pyrimidine such as bupirimate, dimethirimol or ethirimol; morpholines such as dodemorph, fenpropidin, fenpropimorph, spiroxanin or tridemorph; anilinopyrimdines such as cyprodinil, pyrimethanil or mepanipyrim; pyrroles such as fenpiclonil or fludioxonil; phenylamides such as benalaxyl, furalaxyl, metalaxyl, R-metalaxyl, ofurace or oxadixyl; benzimidazoles such as benomyl, carbendazim, debacarb, fuberidazole or thiabendazole; dicarboximides such as chlozolinate, dichlozoline, iprdine, myclozoline, procymidone or vinclozolin; carboxamides such as carboxin, fenfuram, flutolanil, mepronil, oxycarboxin or thifluzamide; guanidines such as guazatne, dodine or iminoctadine; strobilurines such as azoxystrobin, kresoxim-methyl, metominostrobin, SSF-129, methyl 2-[(2-trifluoromethyl)pyrid-yloxymethyl]-3methoxycacrylate or 2-[α{[(α-methyl-3-trifluoromethyl-benzyl)imino]oxy}-o-tolyl]glyoxylic acid-methylester-O-methyloxime (trifloxystrobin); dithiocarbamates such as ferbam, mancozeb, maneb, metiram, propineb, thiram, zineb, or ziram; N-halomethylthio-dicarboximides such as captafol, captan, dichlofluanid, fluorormide, folpet, or tolfluanid; nitrophenol derivatives such as dinocap or nitrothal-isopropyl; organophosphorous derivatives such as edifenphos, iprobenphos, isoprothiolane, phosdiphen, pyrazophos, or toclofos-methyl; and other compounds of diverse structures such as aciberolar-S-methyl, anilazine, blasticidin-S, chinomethionat, chloroneb, chlorothalonil, cymoxanil, dichlone, dicomezine, dicloran, diethofencarb, dimethomorph, dithianon, etridiazole, famoxadone, fenamidone, fentin, ferimzone, fluazinam, flusuffamide, fenhexamid, fosetyl-alurinium, hymexazol, kasugamycin, methasuifocarb, pencycuron, phthalide, polyoxins, probenazole, propamocarb, pyroquilon, quinoxyfen, quintozene, sulfur, triazoxide, tricyclazole, triforine, validamycin, (S)-5-methyl-2-methylthio-5-phenyl-3-phenyl-amino-3,5-dihydroimidazol-4-one (RPA 407213), 3,5-dichloro-N-(3-chloro-1-ethyl-1-methyl-2-oxopropyl)-4-methylbenzamide (RH7281), N-alkyl-4,5-dimethyl-2-timethylsilythiophene-3-carboxamide (MON 65500), 4-chloro-4-cyano-N,N-dimethyl-5-p-tolylimidazole-1-sulfonamide (IKF-916), N-(1-cyano-1,2-dimethylpropyl)-2-(2,4dichlorophenoxyy)-propionamide (AC 382042), iprovalicarb (SZX 722), or quaternary ammonium compounds of general formula of N-R₁R₂R₃R₄-X, wherein R₁, R₂, R₃ and R₄ are selected from the group consisting of hydrogen, a C₁ to C₁₈ alkyl, a C₁ to C₁₈ alkoxy, a C₁ to C₁₈ alkenyl, a C₁ to C₁₈ alkynyl, a C₅ to C₁₂ aryl, a C₅ to C₁₂ aralkyl, or a C₅ to C₁₂ aroyl, wherein at least two R groups are not hydrogen and at least one R group comprises six or more carbon atoms (for example, a didecyl-dimethyl-ammonium salt), and wherein X is selected from the group consisting of hydroxide, chloride, fluoride, bromide, carbonate, bicarbonate, sulfate, nitrate, acetate, phosphate, or any mixture thereof. Also included are the biocides including pentachlorophenol, petroleum oils, phenothrin, phenthoate, phorate, as well as trifluoromethylpyrrole carboxamides and trifluoromethylpyrrolethioamides described in U.S. Patent No. 6,699,818; triazoles such as amitrole, azocylotin, bitertanol, fenbuconazole, fenchlorazole, fenethanil, fluquinconazole, flusilazole, flutriafol, imibenconazole, isozofos, myclobutanil, metconazole, paclobutrazol, (±)-cis-1-(4-chlorophenyl)-2-(1H-1,2,4-triazol-1-yl)-cycloheptanol, tetraconazole, triadimefon, triadimenol, triapenthenol, triflumizole, triticonazole, uniconazole and their metal salts and acid adducts; Imidazoles such as Imazalil, pefurazoate, prochloraz, triflumizole, 2-(1-tert-butyl)-1-(2-chlorophenyl)-3-(1,2,4-triazol-1-yl)-propan-2-ol, thiazolecarboxanilides such as 2',6'-dibromo-2-methyl-4-trifluoromethoxy-4'-trifluoromethyl-1,3-thiazole-5-carboxanilide, azaconazole, bromuconazole, cyproconazole, dichlobutrazol, diniconazole, hexaconazole, metconazole, penconazole, epoxyconazole, methyl (E)-methoximino[α-(o-tolyloxy)-o-tolyl)]acetate, methyl (E)-2-{2-[6-(2-cyanophenoxy)-pyrimidin-4-yl-oxy]phenyl}-3-methoxyacrylate, methfuroxam, carboxin, fenpiclonil, 4(2,2-difluoro-1,3-benzodioxol-4-yl)-1H-pyrrole-3-carbonitrile, butenafine, 3-iodo-2-propinyl n-butylcarbamate; triazoles such as described in U.S. Patent Nos. 5,624,916, 5,527,816, and 5,462,931; the biocides described in U.S. Patent No. 5,874,025; 5-[(4-chlorophenyl)methyl]-2,2-dimethyl-1-(1H-1,2,4-triazol-1-yl-methyl)cyclopentanol; imidacloprid, 1-[(6-chloro-3-pyridinyl)-methyl]-4,5-dihydro-N-nitro-1H-imidazole-2-amine; methyl(E)-2-[2-[6-(2-cyanophenoxy)pyrimidin-4-yloxy]phenyl]3-methoxyacrylate, methyl(E)-2-[2-[6-(2-thioamidophenoxy)pyrimidin-4-yloxy]phenyl]-3-methoxyacrylate, methyl(E)-2-[2-[6-(2-fluorophenoxy)pyrimidin-4-yloxy]phenyl]-3-methoxyacrylate, methyl(E)-2-[2-[6-(2,6-difluorophenoxy)pyrimidin-4-yloxy]phenyl]-3-methoxyacrylate, methyl(E)-2-[2-[3-(pyrimidin-2-yloxy)phenoxy]phenyl]-3-methoxyacrylate, methyl(E)-2-[2-[3-(5-methylpyrimidin-2-yloxy)-phenoxy]phenyl]-3-methoxyacrylate, methyl(E)-2-[2-[3-(phenylsulphonyloxy)phenoxy]phenyl]-3-methoxyacrylate, methyl(E)-2-[2-[3-(4-nitrophenoxy)phenoxy]phenyl]-3-methoxyacrylate, methyl(E)-2-[2-phenoxyphenyl]-3-methoxyacrylate, methyl(E)-2-[2-(3,5-dimethylbenzoyl)pyrrol-1-yl]-3-methoxyacrylate, methyl(E)-2-[2-(3-methoxyphenoxy)phenyl]-3-methoxyacrylate, methyl(E)-2-[2-(2-phenylethen-1-yl)-phenyl]-3-methoxyacrylate, methyl(E)-2-[2-(3,5-dichlorophenoxy)pyridin-3-yl]-3-methoxyacrylate, methyl(E)-2-(2-(3-(1,1,2,2-tetrafluoroethoxy)phenoxy)phenyl)-3-methoxyacrylate, methyl(E)-2-(2-[3-(α-hydroxybenzyl)phenoxy]phenyl)-3-methoxyacrylate, methyl(E)-2-(2-(4-phenoxypyridin-2-yloxy)phenyl)-3-methoxyacrylate, methyl(E)-2-[2-(3-n-propyloxyphenoxy)phenyl]-3-methoxyacrylate, methyl(E)-2-[2-(3-isopropyloxyphenoxy)phenyl]-3-methoxyacrylate, methyl(E)-2-[2-[3-(2-fluorophenoxy)phenoxy]phenyl]-3-methoxyacrylate, methyl(E)-2-[2-(3-ethoxyphenoxy)phenyl]-3-methoxyacrylate, methyl(E)-2-[2-(4-tert-butylpyridin-2-yloxy)phenyl]-3-methoxyacrylate; fenfuram, furcarbanil, cyclafluramid, furmecyclox, seedvax, metsulfovax, pyrocarbolid, oxycarboxin, shirlan, mebenil (mepronil), benodanil, flutolanil; benzimidazoles such as carbendazim, benomyl, furathiocarb, fuberidazole, thiophonatmethyl, thiabendazole or their salts; morpholine derivatives such as tridemorph, fenpropimorph, falimorph, dimethomorph, dodemorph; aldimorph, fenpropidine, and their arylsulphonates, such as, for example, p-toluenesulphonic acid and p-dodecylphenylsulphonic acid; benzothiazoles such as 2-mercaptobenzothiazole; benzamides such as 2,6-dichloro-N-(4-trifluoromethylbenzyl)-benzamide; formaldehyde and formaldehyde-releasing compounds such as benzyl alcohol mono(poly)-hemiformal; oxazolidine; hexa-hydro-S-triazines; N-methylolchloroacetamide; paraformaldehyde; nitropyrin; oxolinic acid; tecloftalam; tris-N-(cyclohexyldiazeneiumdioxy)-aluminium; N-(cyclohexyldiazeneiumdioxy)-tributyltin; N-octyl-isothiazolin-3-one; 4,5-trimethylene-isothiazolinone; 4,5-benzoisothiazolinone; N-methylolchloroacetamide; pyrethroids such as allethrin, alphamethrin, bioresmethrin, byfenthrin, cycloprothrin, cyfluthrin, decamethrin, cyhalothrin, cypermethrin, deltamethrin, α-cyano-3-phenyl-2-methylbenzyl-2,2-dimethyl-3-(2-chloro-2-trifluoro-methylvinyl)cyclopropane-carboxylate, fenpropathrin, fenfluthrin, fenvalerate, flucythrinate, flumethrin, fluvalinate, permethrin, resmethrin, and tralomethrin; nitroimines and nitromethylenes such as 1-[(6-chloro-3-pyridinyl)-methyl]-4,5-dihydro-N-nitro-1H-imidazol-2-amine (imidacloprid), N-[(6-chloro-3-pyridyl)methyl]-N²-cyano-N¹-methylacetamide (NI-25); quaternary ammonium compounds such as didecyldimethylammonium salts, benzyldimethyltetradecylammonium chloride, benzyldimethyldodecylammonium chloride, didecyldimethaylammonium chloride, and the like; phenol derivatives such as tribromophenol, tetrachlorophenol, 3-methyl-4-chlorophenol, 3,5-dimethyl-4-chlorophenol, phenoxyethanol, dichlorophene, o-phenylphenol, m-phenylphenol, p-phenylphenol, 2-benzyl-4-chlorophenol, and their alkali metal and alkaline earth metal salts; iodine derivatives such as diiodomethyl p-tolyl sulphone, 3-iodo-2-propinyl alcohol, 4-chlorophenyl-3-iodopropargyl formal, 3-bromo-2,3-diiodo-2-propenyl ethylcarbamate, 2,3,3-triiodoallyl alcohol, 3-bromo-2,3-diiodo-2-propenyl alcohol, 3-iodo-2-propinyl n-butylcarbamate, 3-iodo-2-propinyl n-hexylcarbamate, 3-iodo-2-propinyl cyclohexyl-carbamate, 3-iodo-2-propinyl phenylcarbamate, and the like; microbicides having an activated halogen group such as chloroacetamide, bronopol, bronidox, tectamer, such as 2-bromo-2-nitro-1,3-propanediol, 2-bromo-4'-hydroxy-acetophenone, 2,2-dibromo-3-nitrile-propionamide, 1,2-dibromo-2,4-dicyanobutane, β-bromo-β-nitrostyrene, and the like; and the like; and combinations thereof. These are merely exemplary of the known and useful biocides, and the list could easily extend further. Not all of the above can be milled into an injectable slurry (some are liquid), and not all need the milling processes described herein to be formed into an injectable slurry. But all of the above can advantageously be incorportated one way or another ino injectable wood preservatives and/or useful foliar formulations. Those compounds that form a solid phase can be used to form particulates, while liquid organic biocides are advantageously incorporated onto the surface of other injectable biocidal particles.

We focus on a few here that have one or more particularly beneficial properties. A list of useful biocidal, sparingly soluble to substantially insoluble organometallic salts that are readily milled to an injectable size (and also to a useful size for paint and foliar applications) include: copper salts of maleic acid, fumaric acid, succinic acid, and terephthalatic acid, as disclosed in U.S. Patent 4,075,326; copper quinaldate, copper oxime, copper naphthenate, and zinc naphthate; as well as compounds traditionally considered to be substantially insoluble organic biocides, such as Ferbam ( [Iron(III)] dimethyldithiocarbamate), copper thiocyanate, zinc pyrithione, Ziram (zinc bis[dimethyldithiocarbamate]), and a wide variety of other compounds which are included in the millable substantially insoluble organic biocides.

Exemplary preferred organic biocides include chlorothalonil, IPBC (iodo-propynyl butyl carbamate) azoles/triazoles such as N-alkylated tolytriazoles, metconazole, imidacloprid, hexaconazole, azaconazole, propiconazole, tebuconazole, cyproconazole, bromoconazole, and tridemorph tebuconazole, copper-8-quinolate, fipronil, imidacloprid, bifenthrin, carbaryl, strobulurin biocides such as azoxystrobin and trifloxystrobin, indoxacarb; moldicides; HDO (available commercially by BASF); or mixtures thereof. For wood preservative applications, preferred substantially-insoluble organic biocide include: triazoles including for example tebuconazole, chlorothalonil, iodo-propynyl butyl carbamate, copper-8-quinolate, fipronil, imidacloprid, bifenthrin, carbaryl, strobulurins including for example azoxystrobin or trifloxystrobin, indoxacarb, and optionally but less preferably a biocidal quaternary ammonium compound such as dimethyl didecyl ammonium carbonate, or any mixture thereof. For foliar, agricultural, and horticultural applications, particles containing a solid phase of a substantially-insoluble organic biocide such as: chlorothalonil, mancozeb/maneb, diuron, atrazine, metolachlor, acetochlor, propanil, iprodione, carbendazim, or any mixture thereof. Unlike sparingly soluble salts, where too small a particle can dissolve too quickly, particles of substantially insoluble organic material tend to have such low solubility that particles having a diameter below 0.1 micron can be beneficially used.

An organic biocide might be used in an amount between about 0.1 to 2 grams of biocide per cubic foot. The organic biocides are insoluble in water, which is the preferred fluid carrier for injecting the wood preservative treatment into wood, so getting adequate distribution of the biocide within the wood matrix is problematic. It is common practice in the prior art to formulate aqueous emulsions of substantially water insoluble organic biocides which are efficacious in wood but have very limited solubility in water and in alcohol. For example, it is known in the art to add an emulsion of "solubilized" triazole, such as tebuconazole ("TEB"), to a dilute aqueous copper amine fluid, which is subsequently injected into wood. To solubilize an azole such as tebuconazole, large amounts of dispersants are needed, e.g., between 6 and 15 parts dispersant per one part (by weight) of TEB forms an emulsifiable material. Such emulsions can be added to the slurries prior to application by injecting the slurry into wood, provided the quantity of emulsified material is very low, e.g., under 10% of the weight of the solid-phase biocidal material. This process can be advantageously used with slurries, especially if a particular application requires one or more adjuvants and/or co-biocides that were not included in a purchased slurry.

One problem with substantially insoluble but powerful organic biocidal agents is that since they are used in such small quantities, they are solubilized by ad-mixing with surfactants until stable micelles (an emulsifiable material) containing the organic biocide can be formed. This emulsifiable material is then admixed into the treating composition, but any instability in the emulsion will result in significant yet undetectable coagulation or deposition of the biocidal material in the treatment composition. Additionally, it is not known how much of the solubilized organic biocide absorbs onto wood during the injection process. The distribution of the organic biocidal agents in wood and/or on plants can not be readily ascertained, and it is likely that some of the treated areas will receive an excess of the organic biocide while other treated areas will not receive any organic biocide.

Advantageously at least a portion of these substantially insoluble organic biocides are present in the slurry in the form of solid-phase particles. The solid phase may include an inert solid carrier, present for example in an amount between 0.1 parts to about 3 parts by weight of inert carrier per part of organic biocide. A carrier, if present, is beneficially a millable plastic or resinous material such as melamine. Otherwise, there may be too few a number of particles to obtain an even distribution and effective coverage from the small quantities of organic biocides that are routinely used. There might be 0.1 grams of organic biocide per cubic foot of wood. Given the minimum particle size requirements, there may be insufficient material present to provide an adequate particle density in the wood. In such a case, if there is no other biocidal particles to which the substantially insoluble organic biocide can be coated onto, then advantageously the solid biocidal material is admixed with another millable material to form a mixture or composite, whereby milling the particles to the specified size range will provide a sufficient number of particles to inject the desired particle density.

Alternatively and preferably, the substantially insoluble organic biocides can exist as a solid material, or as a mixture of organic material, disposed on a solid material. Advantageously, the solid carrier particle is the sparingly biocidal soluble salt, an oxide, e.g., zinc oxide or copper oxide, or another substantially insoluble organic biocide material that is more easily milled. However, the carrier particle may include hard plastic or resin particles such as melamine, inorganic carriers such as zeolites, silica (especially porous silica), alumina, any of the pigments described herein including especially iron oxides, and the like. Such inert carrier material is excluded from the "at least 25% of a solid phase" terminology.

Preferably, however, the adjuvants and/or co-biocides are added to the slurry concentrate and are wet ball milled as described herein to cause the co-biocides and/or adjuvants to the extent possible to be absorbed on the surface of the biocidal particulates. By placing organic biocidal agents evenly across the surface of biocidal agents, one can be certain that all areas are treated.

Alternately, at least a portion of the substantially insoluble organic biocides can be disposed as a coating over at least a portion of another biocidal particle, over at least a portion of filler particles (such as porous silica or alumina), over at least a portion of pigment particles, or any combination thereof. Alternately or additionally, the organic biocide can be contained in milled injectable solid organic biocide particulates. Generally, such a small quantity of organic biocides are required that the d₅₀ of the organic biocides is advantageously between about 0.2 to about 0.8 times the d₅₀ of the sparingly soluble copper salts.

A substantial benefit is that a portion or all of the organic biocides incorporated into the wood preservative treatment can advantageously be coated on to the particulates. Preferred preservative treatments comprise copper-based particles having one or more additional organic biocide(s) that are bound, such as by absorption, to a surface of the particles. Wood and wood products may be impregnated substantially homogeneously with copper-based particles, each also comprising organic biocidal material bound to the surface of the copper-based particles. By substantially homogeneously we mean averaged over a volume of at least a cubic inches, as on a microscopic scale there will be volumes having particulates disposed therein and other volumes within the wood that do not have particulates therein. By adhering the biocides on particulates, a more even distribution of biocide in ensured, and the copper is disposed with the biocide and therefore is best positioned to protect the biocide from those bio-organisms which may degrade or consume the biocide. The homogenous distribution of preservative function within the wood or wood product is benefited. Finally, a formulation with biocide adhering to particulates does not face the instability problems that emulsions face during the formulation and injection phases.

Finally, it is often relatively easy to coat particles having a solid organic biocide phase by simply milling the organic biocide material with particulate pigment, such as for example iron oxides or any of a variety of other pigments, where advantageously the particle size of the pigment is less than one fourth, preferably less than one sixth, such as between one eighth and one twentieth, of the particle diameter of the organic particles being coated. Additionally, organic dyes can be made to adhere to the particles by selecting dispersants which will adhere to particles and will attract organic dyes.

BIOCIDAL MATERIAL - PARTIALLY GLASSIFIED MATERIALS

There are a number of biocidal glassified materials known, and they are characterized by an extremely slow leach rate of biocidal materials (when compared to the leach rate from the a physical mixture of the separate ingredients). The antimicrobial glass can be prepared according to any known method. In general, a mixture of glass raw materials is melted in a melting furnace at 1000° to 2000° C., then the melt is quenched to give a glass product and the resulting massive glass is pulverized to thus easily obtain powdery glass. The antimicrobial glass can easily be prepared by melting a raw mixture having any composition falling within the range of the present invention at an appropriate melting temperature and then quenching the resulting melt using a quenching means adapted for the quenching characteristics of the melt. To improve the quenching effect, it is effective to enlarge the contact area between the melt and the cooling body. For instance, a glass melt is passed through a pair of rotatable metal rollers cooled with a cooling medium such as water at a high speed to thus ensure an extremely high cooling effect. The use of this cooling method makes the vitrification of the glass melt extremely easy. In addition, if the glass melt is cooled by this method, the glass passed through the rollers is formed into a thin plate-like shape (for instance, a plate having a thickness ranging from several micrometers to several hundreds micrometers) and therefore, the resulting glass may extremely easily be pulverized into powder.

In general, oxide components included in glass are divided into those forming the network structure of the glass, those modifying the network structure. Among the foregoing
components, P₂O₅, Al₂O₃, SnO₂ and SiO₂ are glass network structure-forming components, ZnO is an intermediate component and the alkali metal oxide is a network structure-modifying component. It would be recognized that ZnO mainly contributes to the development of the antimicrobial power of the agent and that the alkali metal oxide makes the melting and molding of the glass easy and contribute to the solubility of the glass. Glass properties can be varied as is known in the art to have the glass dissolve in a defined period ranging from days to years. The rate at which the glass dissolves in fluids is determined by the glass composition, generally by the ratio of glass-modifier to glass-former and by the relative proportions of the glass-modifiers in the glass. By suitable adjustment of the glass composition, the dissolution rates in water at 38° C. ranging from substantially zero to 2mg/cm²/hour or more can be designed.

An variety of biocidal substantially insoluble to sparingly soluble glasses can be used in the process of the present invention. These comprise at least one of Zn_{,} B, Cu and P. Generally, any substantially insoluble to sparingly soluble glass used in the process of this invention will comprise one or more sources of Zinc (ZnO), Boron (B₂O₃), and/or a copper (CuO or Cu₂O), and most useful compositions will further comprise phosphorus (P₂O₅) and/or silica (SiO₂). When specifying glass compositions, we specify the initial ingredients, knowing that chemical changes during the melt and quenching processes may make separation and identification of any beginning component impossible. An exemplary listing of ingredients can be found in: U.S. Patent No. 6,475,631 which discloses glass compositions with high ZnO content; U.S. Patent No. 5,470,585 which discloses fast-dissolving glass compositions with silver content; U.S. Patent No. 6,143,318 which discloses glass compositions which deliver controlled amounts of metals and boron, where the copper-zinc is a preferred embodiment; U.S. Patent No. 5,961,843 which discloses glass compositions which deliver controlled amounts of metals, where the metals are in the form of metal ions which are more quickly delivered and as a metal particles of diameter 0.002-0.01 microns from which ions are more slowly delivered, and also discloses placement of 0.01 micron particles on the surface of larger particles by a spray-coating method; and U.S. Patent No. 6,593,260 which discloses glass compositions which deliver controlled amounts of silver metals, and disclose forming particles therefrom for incorporation into cloth. There are a number of glass materials that are useful, but most will have a composition that is within the following:

| Compound | Mole Percent | Typical range - Mole% |
|---|---|---|
| ZnO | 1-80 | 30-65 |
| B₂O₃ | 1-80 | 5-30 |
| SiO₂ | optional, 1-40 | 1-15 |
| P₂O₅ | 10-65 | 20-40 |
| NiO, SnO₂ | optional, 1-40 | 1-15 |
| ZrO₂ | optional, 0.1-10 | -- |
| CaO, MgO (pref), BaO | optional, 0.1-20 | 0.1-10 |
| Na₂O (pref), Li₂O, K₂O | optional, 0.1-25 | 0.1-15 |
| CuO, Cu₂O | optional, 0.1-25 | 0.1-20 |
| Ag₂O | optional, 0.01-2 | -- |

The above table is merely exemplary. A glass useful in this invention can be formed for example with 30-50% ZnO, 30-50% B₂O₃, and 5-40% P₂O₅ and/or SiO₂, to form a long-lasting biocidal glass powder that is substantially free of copper. The utility and advantages of such a powder in preserved wood used in aquatic environments is obvious. The glass is prepared by mixing the various components, heating the same to a temperature between about 1000C and 2000C to form a melt, quenching the temperature, and wet-ball-milling the glass composition, advantageously with zirconium-containing milling media having a diameter below about 0.8 mm, for example zirconia milling material having a diameter between 0.3 mm and 0.6 mm, advantageously in the presence of one or more dispersants, substantially insoluble organic biocides, and other components in various embodiments described herein. The glassified material can optionally be admixed with any of the other biocidal particulates, dispersants, and adjuvants, and again the admixing is beneficially before wet ball milling the composition. Glass particles will tend to leach material out more slowly than would corresponding sparingly soluble salts, especially if the quantity of alkaline oxides is below about 10%.

BIOCIDAL MATERIAL - METALLIC COPPER

There are a number of methods available to obtain sub-micron copper metal powder. Copper metal incorporated into a wood preservative would provide a long lasting, slow leach rate of copper, and good anticorrosivity properties. Therefore, it may be useful to add copper powder as a biocidal material to wood preservatives. Generally, however, copper powder is prohibitively expensive, and it is difficult to formulate into stable slurries, and it has a low biocidal efficacy similar to that of copper(I) oxide.

However, if copper metal is contained in the milling material during wet ball milling of pigments and of inorganic biocidal compounds, a coating of copper metal will be placed on the milled particles. Surprisingly, it was found that various materials such as silica, when milled with even an inert material such as zirconia, contained a detectable amount of zirconia on the surface of the milled material. While only traces of zirconia was discovered on the milled material (which was used for chemical mechanical polishing of semiconductors), the principals will equally apply more so to milling with a soft material such as copper. Addition of less than a few percent of copper metal beads to a wet ball milling media used to mill a slurry for use in this invention will deposit a layer of copper metal on the surface of the material to be polished. Further, the quantity of deposited metal is expected to be significant, and can range from about 0.01 parts to over 10 parts per 100 parts of the biocidal material. We expect such copper metal can reduce the corrosivity of a subsequently applied treatment, and is a novel and useful way to introduce a very small but long-lasting source of copper ions to a slurry.

DISPERSANTS : Dispersants are required in an amount sufficient to keep the slurry containing the above stable, non-agglomerating, and non-settling, wherein the slurry when tested at its intended use concentration is stable if it exhibits suspensibility greater than 80% after thirty minutes when tested according to the Collaborative International Pesticide Analytical Committee Method MT 161. The slurries include dispersants that adhere to biocidal particles, pigments, or both, and promote stability of the slurry by retarding agglomeration of particles in the slurry. Advantageously, the dispersants can also fix oils, other substantially insoluble organic biocides, and the like to the external surface of biocidal particles.

A strongly anionic dispersant is generally recommended to disperse and stabilize a slurry of for example sparingly soluble copper salts in water. Examples of such anionic surfactants or dispersant systems are sodium poly(meth)acrylate, sodium lignosulphonate, naphthalene sulphonate, etc. The term poly(meth)acrylate encompasses polymers comprising a major quantity (e.g., at least 30% by weight, typically at least 50% by weight) of acrylate monomers, e.g., polyacrylates, polymers comprising a major quantity of methacrylate monomers, e.g., polymethacrylates, and polymers comprising a major quantity of combined acrylate-containing and methacrylate-containing monomers.

Examples of suitable classes of surface active agents (dispersants) include anionics such as alkali metal fatty acid salts, including alkali metal oleates and stearates; alkali metal lauryl sulfates; alkali metal salts of diisooctyl sulfosuccinate; alkyl aryl sulfates or sulfonates, lignosulfonates, alkali metal alkylbenzene sulfonates such as dodecylbenzene sulfonate, alkali metal soaps, oil-soluble (*e*.*g*., calcium, ammonium, etc.) salts of alkyl aryl sulfonic acids, oil soluble salts of sulfated polyglycol ethers, salts of the ethers of sulfosuccinic acid, and half esters thereof with nonionic surfactants and appropriate salts of phosphated polyglycol ethers; cationics such as long chain alkyl quaternary ammonium surfactants including cetyl trimethyl ammonium bromide, as well as fatty amines; nonionics such as ethoxylated derivatives of fatty alcohols, alkyl phenols, polyalkylene glycol ethers and condensation products of alkyl phenols, amines, fatty acids, fatty esters, mono-, di-, or triglycerides, various block copolymeric surfactants derived from alkylene oxides such as ethylene oxide/propylene oxide (*e*.*g*., PLURONIC™, which is a class of nonionic PEO-PPO co-polymer surfactant commercially available from BASF), aliphatic amines or fatty acids with ethylene oxides and/or propylene oxides such as the ethoxylated alkyl phenols or ethoxylated aryl or polyaryl phenols, cellulose derivatives such as hydroxymethyl cellulose (including those commercially available from Dow Chemical Company as METHOCEL™), and acrylic acid graft copolymers; zwitterionics; tristyryl ethoxylated phosphoric acid or salts, methyl vinyl ether-maleic acid half-ester (at least partially neutralized), beeswax, water soluble polyacrylates with at least 10% acrylic acids/salts; alkyl grafted PVP copolymers commercially available as GANEX™ and/or the AGRIMER™ AL or WP series, PVP-vinyl acetate copolymers commercially available as the AGRIMER™ VA series, lignin sulfonate commercially available as REAX 85A (*e.g*., with a molecular weight of about 10,000), tristyryl phenyl ethoxylated phosphoric acid/salt commercially available as SOPROPHOR™ 3D33, GEROPON™ SS 075, calcium dodecylbenzene sulfonate commercially available as NINATE™ 401 A, IGEPAL™ CO 630, other oligomeric/polymeric sulfonated surfactants, and the like.

Other notable surface active agents can include nonionic polyalkylene glycol alkyd compounds prepared by reaction of polyalkylene glycols and/or polyols with (poly)carboxylic acids or anhydrides; A-B-A block-type surfactants such as those produced from the esterification of poly(12-hydroxystearic acid) with polyalkylene glycols; high molecular weight esters of natural vegetable oils such as the alkyl esters of oleic acid and polyesters of polyfunctional alcohols; a high molecular weight (MW>2000) salt of a naphthalene sulfonic acid formaldehyde condensate, such as GALORYL™ DT 120L available from Nufarm; MORWET EFW™ available from Akzo Nobel; various Agrimer™ dispersants available from International Specialties Inc.; and a nonionic PEO-PPO-PEO triblock co-polymer surfactant commercially available as PLURONIC™ from BASF. Other examples of commercially available surface active agents include Atlox 4991 and 4913 surfactants (Uniqema), Morwet D425 surfactant (Witco), Pluronic P105 surfactant (BASF), Iconol TDA-6 surfactant (BASF), Kraftsperse 25M surfactant (Westvaco), Nipol 2782 surfactant (Stepan), Soprophor FL surfactant (Rhone-Poulenc), Empicol LX 28 surfactant (Albright & Wilson), Pluronic F108 (BASF).

Exemplary suitable stabilizing components include polyolefins such as polyallene, polybutadiene, polyisoprene, poly(substituted butadienes) such as poly(2-t-butyl-1,3-butadiene), poly(2-chlorobutadiene), poly(2-chloromethyl butadiene), polyphenylacetylene, polyethylene, chlorinated polyethylene, polypropylene, polybutene, polyisobutene, polybutylene oxides, copolymers of polybutylene oxides with propylene oxide or ethylene oxide, polycyclopentylethylene, polycyclolhexyiethylene, polyacrylates including polyalkylacrylates and polyarylacrylates, polymethacrylates including polyalkylmethacrylates and polyarylmethacrylates, polydisubstituted esters such as poly(di-n-butylitaconate), poly(amylfumarate), polyvinylethers such as poly(butoxyethylene) and poly(benzyloxyethylene), poly(methyl isopropenyl ketone), polyvinyl chloride, polyvinyl acetate, polyvinyl carboxylate esters such as polyvinyl propionate, polyvinyl butyrate, polyvinyl caprylate, polyvinyl laurate, polyvinyl stearate, polyvinyl benzoate, polystyrene, poly-t-butyl styrene, poly (substituted styrene), poly(biphenyl ethylene), poly(1,3-cyclohexadiene), polycyclopentadiene, polyoxypropylene, polyoxytetramethylene, polycarbonates such as poly(oxycarbonyloxyhexamethylene), polysiloxanes, in particular, polydimethyl cyclosiloxanes and organo-soluble substituted polydimethyl siloxanes such as alkyl, alkoxy, or ester substituted polydimethylsiloxanes, liquid polysulfides, natural rubber and hvdrochlorinated rubber, ethyl-, butyl- and benzyl-celluloses, cellulose esters such as cellulose tributyrate, cellulose tricaprylate, and cellulose tristearate, natural resins such as colophony, copal, and shellac, and the like, and combinations or copolymers thereof

In yet another embodiment, exemplary suitable stabilizing components include polystyrenes, polybutenes, for example polyisobutenes, polybutadienes, polypropylene glycol, methyl oleate, polyalkyl(meth)acrylate e.g. polyisobutylacrylate or polyoctadecylmethacrylate, polyvinylesters e.g. polyvinylstearate, polystyrene/ethyl hexylacrylate copolymer, and polyvinylchloride, polydimethyl cyclosiloxanes, organic soluble substituted polydimethyl siloxanes such as alkyl, alkoxy or ester substituted polydimethylsiloxanes, and plybutylene oxides or copolymers of polybutylene oxides with propylene and/or ethylene oxide. In one embodiment, the surface active agent can be adsorbed onto the surface of the biocide particle, *e.g*., in accordance with U.S. Patent No. 5,145,684.

The dispersant advantageously comprises an effective amount of at least one non-ionic dispersant comprising an etherfied hydrophilic polyalkylene oxide portion having between 2 and 50 alkylene oxide units therein and a hydrophobic portion comprising eight or more carbon atoms, for example comprising an etherified compound of said hydrophilic polyalkylene oxide condensation compounds and an aliphatic alcohol or a higher fatty acid. Most preferably the slurry comprises an effective amount of a dispersant comprising a phosphate ester of an etherified compound of hydrophilic polyalkylene oxide condensation compounds and an aliphatic alcohol or a higher fatty acid. Such compounds can better stabilize a slurry and prevent agglomeration of particles mixed with a cationic dyes and substantially insoluble cationic organic biocides such as quaternary ammonium compounds. Other dispersants can be based on polystyrene-block (b)-polyalkylene oxide copolymers, *e.g*., block copolymeric phosphoric esters and their salts having the general formula: [R¹-O-(SO)ₐ-(EO)_{b}-(CH₂-CH(CH₃)-O)_{c}-(BO)_{d}]ₓ-PO(OH)₃₋ₓ, where R¹ is a straight-chain or branched or cycloaliphatic radical having from about 1 to about 22 carbon atoms; SO represents styrene oxide; EO represents ethylene oxide; BO represents butylene oxide; and a ranges from about 1 to less than 2, b ranges from about 3 to about 100, c ranges from 0 to about 10, d ranges from 0 to about 3, x is 1 or 2, and b ≥ a + c + d. Other phosphoric esters that are useful as dispersants are known and can be found in for instance U.S. Patent No. 4,720,514, which describes phosphoric esters of a series of alkylphenol ethoxylates which may be used advantageously to formulate aqueous pigment dispersions. Such materials are advantageously wet milled prior to injection into wood.

While we typically prefer phosphated dispersants, the use of borated dispersants such as are disclosed in U.S. Patents 3,087,936 and 3,254,025 can add an initial load of borate to the wood preservative treatment. Also useful are dispersants disclosed in U.S. Patent 4,857,214 and 5,198,133 which disclose dispersants that are the reaction products of an alkenyl succinimide with a phosphorus ester or with an inorganic phosphorus-containing acid and a boron compound.

If a dispersing agent is present in the preservative composition according to the invention, the ratio of the weight of solid-phase biocide to the weight of dispersing agent present in the suspension may be at least about 1 to 1, for example at least about 2 to 1, alternately at least about 4 to 1, at least about 5 to 1, or at least about 10 to 1.

ORGANIC COATINGS ON BIOCIDAL MATERIALS

We have discussed above how wet ball milling the slurries of this invention in the presence of copper metal will result in copper metal being disposed on the exterior surface of the milled material. Even more so, wet ball milling of most inorganic compounds including pigments, sparingly soluble biocidal salts, and/or biocidal oxides in the presence of an organic material will result in a layer of the organic material adhering to the milled particles.

In any of the above-described embodiments, the composition can further comprise one or more materials disposed on the exterior of the biocidal particles to inhibit dissolution of the underlying sparingly soluble salts at least for a time necessary to prepare the formulation and inject the prepared wood treatment composition. Certain sparingly soluble salts can be very susceptible to premature dissolution if the slurry is unintentionally formed with an acidic water. The acid-soluble particles can be partially or completely coated with a substantially inert coating, for example, a coating of, *e.g*., a polymeric material such as a dispersant, or with a thin hydrophobic oil) coating, or an insoluble salt such as a phosphate salt, or any combination thereof. In one embodiment the particles are treated with a dispersing material which is substantially bound to the particles.

Generally such coatings are extremely thin, with a particulate comprising for example between about 0.1% to about 50% by weight, more typically from about 0.5% to about 10%, of the weight of the biocidal particles. The coating may cover only a portion of the exterior surface area. A very surprising result of our leaching tests was that the presence of only 1 part TEB per 60 parts basic copper carbonate (the amount in samples A and D) reduced leach copper from wood treated with basic copper carbonate particles by about 20%. We believe the TEB is at least partially coating the exterior of the BCC particulates and is therefore inhibiting dissolution of the BCC. The TEB will tend to coat the harder sparingly soluble salts when the two are wet ball milled together with sufficient dispersants. We know that dispersants also can coat the particles, but the TEB coating appears to be very effective at reducing copper leach rates. If the TEB was assumed to be evenly spread across the outer surface of 0.20 micron particles, the layer of biocide would be between about 0.001 and 0.0015 microns thick. The reduction in total copper leached and in long term leach rates was very substantial for such a thin layer.

A very small amount of substantially insoluble organic biocide, when wet ball milled with sub-millimeter zirconium-containing milling material, such as 0.3 mm to 0.6 mm zirconia, in a slurry comprising appropriate types and amounts of dispersants and also containing an inorganic material selected from: 1) one or more of a biocidal sparing soluble salts (which includes the metal hydroxide and also mixed salts, e.g., basic copper salts; 2) a biocidal metal oxide where the metal is selected from copper, zinc, and/or tin; 3) pigment particles, preferably inorganic pigment particles, or 4) and mixtures or combinations thereof, will result in the formation of a submicron slurry of particles having sparingly soluble inorganic biocide material in close association with particles of sparingly soluble salts, biocidal metal oxides, and/or pigments. The substantially insoluble organic biocide will at least partially exist as a layer disposed on the outer surface of the particles, where it will inhibit dissolution of sparingly soluble materials within the particle.

The organic coating can comprise for example light oils, hydrophobic oils, dehydrating oils, waxes, andor rosins; polymeric particles that are usually functionalized with for example carboxylate and or sulfonate moieties, organic biocides including for example an amine, azole, triazole, or any other organic biocides; dispersing agents and stabilizing agents/anti-coagulating agents including for example an organic compound having one or more polar functional groups which increase adherence, for example: mono- and/or poly-carboxylic acids that may be at least partially neutralized with a metal, or a film-forming polymer such as a sulfonate ionomer; a surfactant; amphoteric agents; or mixtures thereof.

PIGMENTS AND DYES

The compositions can optionally further comprise one or more pigments and/or dyes. In another embodiment the invention includes a method of preserving and coloring wood. The preservative composition used comprises particulate biocidal particles and one or more pigments or dyes in "an amount sufficient to impart a discernable color to the wood."

There are a large number of pigments and dyes known in the industry, and many are applicable for various embodiments of this invention. Particularly preferred particulate pigments include iron oxides, manganese oxides, tin oxide (when the biocide is not a sparingly soluble tin salt), and zinc oxide (when the biocide is not a sparingly soluble zinc salt); organic dyes such as water soluble dyes, e.g. water soluble aniline dye, a variety of oil soluble wood dyes, a variety of alcohol soluble wood dyes, and known pigments useful for coloring wood such as Van Dyke brown.

In a special embodiment of the invention, the dye can be one or more organic UV protectorants. Such a UV protectorant dye can protect wood, but also it can protect submicron biociodal material from degradation by sunlight. Organic biocides and even some inorganic sparingly soluble salts are susceptible to degradation by sunlight, so preferably the UV protectorant dye is disposed on the surface of the particle comprising the susceptible biocidal material. Exemplary useful material include bisbenzophenones and bis(alkyleneoxybenzophenone) ultraviolet light absorbers disclosed in U.S. Patent 6,537,670, ortho-dialkyl aryl substituted triazine ultraviolet light absorbers disclosed in U.S. Patent 6,867,250, polyaminoamides comprising 1,3-diimines disclosed in U.S. Patent 6,887,400, polytrisaryl-1,3,5-Triazine carbamate ultraviolet light absorbers disclosed in U.S. Patent 6,306,939 and other known long-lasting UV protectorants can be used. The UV protectorants can be dispersed in the biocidal slurry during the wet milling process, where the milling process will disperse and place the UV protectorants on the exterior of biocidal particles in much the same manner that substantially insoluble biocidal material can be placed during wet ball milling on the exterior of biocidal particles. It is important to realize that UV protectorants used to priotect biocides are different than UV protectorants applied to wood itself. Very little protectorant is needed - a reasonable amount may range from between 0.1 parts and 10 parts of an organic UV protectorant per 100 parts by weight of biocidal material.

The pigments/dyes which the formulations comprise are not subject to any limitation. They can be organic or inorganic in nature. Suitable organic pigments are, for example, those of the azo, di-azo, polyazo, anthraquinone, or thioindigo series, and furthermore other polycyclic pigments, for example, from the thioindigo, pyrrolopyrrole, perylene, isoamidolin(on)e, flavanthrone, pyranthrone or isoviolanthrone series, phthalocyanine, quinacridoone, dioxazine, naphthalenetetracarboxylic acid, perylenetetracarboxylic acid, or isoindoline series, as well as metal complex pigments or laked dyestuffs. Other organic pigments may additionally or alternately include, but are not limited to, aniline dye (water soluble), oil wood dyes (oil soluble), alcohol wood dye (alcohol soluble), or the like, or a combination thereof. A useful organic pigment is carbon black. Exemplary suitable inorganic pigments are, for example, metal sulfides such as zinc sulfides, ultramarine, titanium dioxides, iron oxides (*e.g*. red or yellow iron oxide), iron phosphates, antimony trioxide, nickel- or chromium-antimony-titanium dioxides, cobalt blue, manganese and manganous oxides, manganese borate, barium manganate, and chromium oxides. Iron pigments are preferred for many uses. Additionally or alternately, selected finely ground crystalline iron oxides and hydroxides (excluding gel-like materials such as Goethite) can provide UV protective activity to wood and, like the copper and zinc salts described above, can be readily milled to form injectable slurries using processes, can be readily co-mingled with the particulate organic biocide, and can be injected into the wood or used in paint. Indeed, the media can mill certain iron oxides to a d₅₀ below 0.1 microns, and such particles can advantageously be used as a carrier of substantially insoluble organic biocides. Examples include FeO, Fe₂O₃, Fe₃O₄, wustite, hematite, magnetite, maghemite, ferrihydrite, and the like; and combinations thereof.

A preferred composition comprises pigment particles wherein the average particle size of the one or more pigments is less than half the particle size of the biocidal particulates. Another particular injectible, biocidal slurry contains biocidal particulates having a solid phase comprising or consisting essentially of a substantially insoluble organic biocide that is a solid at ambient temperature and also having an exterior organic coating, and one or more pigments or dyes associated with the surface of the biocidal particulates.

It is easy to disguise and mask the color imparted by a particulate biocide used in wood. A preferred method of this invention includes partially, substantially, or completely coating the external surface of the biocidal particles with an appropriate pigment and/or dye. Since the particulate biocide is in the form of concentrated (solid phase) sub-micron particles that advantageously do not form aggregations, the particles will impart less color than would a similar amount of biocide coated as a layer on the wood. Further, since the biocidal particulates have only a very small surface area, relative to the surface area of the wood in which the particles reside, relatively little dye and/or pigment is needed to disguise or mask the color imparted by particle-based wood preservative systems if a large portion of the dye and/or pigment is disposed on the surface of the biocidal particulates. Furthermore, the dye and/or pigment disposed around a biocidal particle can help maintain the stability of the underlying solid biocidal material by for example partially shielding the solid biocidal material from contact with ultraviolet radiation, water, and acids.

Generally, the size, amount, and dispersion of biocidal particles having pigment and/or dye associated on the surface thereof is small, and it is therefore easier to disguise or mask the color of the biocidal particulates than it is to impart a particular color throughout the wood. When a particle-based wood preservative system is used, coating biocidal particles with a light neutral color or even white will readily mask any residual color imparted by the biocidal particle itself, and, if desired, additional dye or pigment can be added to color the wood without regard to the color (or eventual color) the underlying biocidal particulates may be. The color of the pigment or dye disposed on the surface of biocidal particles can be the same or can complement the color the wood is intended to be dyed to, or alternatively the pigment disposed on the biocidal particles can simply be used to conceal the biocidal particles by for example coating the biocidal particles to lighten, darken, or put a neutral color about the biocidal particles.

One preferred embodiment of the invention uses one or more organic dyes which at least partially coat the exterior of the biocidal particulates in the slurry. The dye or dyes are advantageously added to the wood preservative composition prior to wet milling the biocidal particles with sub-millimeter zirconium-containing milling media. Inclusion of the dyes and dispersants into the milling process, as opposed to the addition of the dyes after completion of the milling, is expected to provide a more stable colored composition. The colored compositions which can be used in the present invention can exhibit good stability, and can be utilized to penetrate various substrates, such as wood, and to impart desirable color characteristics to the treated substrates. Said organic dyes are beneficially oil soluble, and are added along with appropriate surfactants/dispersants to the liquid portion of the milling media prior to wet milling the biocidal particles. Wet milling with the above milling media is believed to promote adherence of dispersants to the biocidal particulates. Advantageously the total weight of surfactants and/or dispersants in the milling medium is such that less than 1.5 parts (by weight), preferably less than 1 part, for example between about 0.05 parts to about 0.5 parts of total surfactant and dispersant adhere to 1 part (by weight) of biocidal particles. Advantageously the total weight of oil-organic dyes in the milling medium is such that less than 1.5 parts (by weight), preferably less than 1 part, for example between about 0.05 parts to about 0.5 parts of total surfactant and dispersant adhere to 1 part (by weight) of biocidal particles.

Generally, there is no minimum size for pigment materials, though the upper limits on the size and morphology of the pigments is that pigments should be injectable - whether they exist apart from biocidal particles or are associated with the external surface of biocidal particles. If particulate pigments are incorporated into the slurry, they have a size distribution with a maximum size following about the same guidelines as the maximum size for biocidal particles, *e.g*., 1) that substantially all the particles, *e.g*., greater than about 98% by weight, have a particle size with diameter equal to or less than about 0.5 microns, preferably equal to or less than about 0.3 microns, for example equal to or less than about 0.2 microns, and 2) that substantially no particles, *e.g*., less than about 0.5% by weight, have a diameter greater than about 1.5 microns, or an average diameter greater than about 1 micron, for example. Unlike for biocidal particles, there is no minimum size for particulate pigments, and particulate pigments having an average diameter between about 0.005 microns and 0.5 microns are useful.

If a composition comprises injectable particles comprising a biocide, preferably where the solid phase of biocidal material comprises at least 25% of the total weight of the particle, than the injectable particles ofpigment(s) can be
1) smaller than the biocidal particles: Smaller diameter pigments can be treated to adhere to larger biocidal particles, or, alternatively or additionally, dispersants disposed on the surface of larger biocidal particles can attract and hold a plurality of smaller pigment particles, if a low-shear milling technique such as wet milling (as described herein) is employed. In some cases particles having a solid organic biocide phase may have a plurality of smaller pigment particles imbedded or adhering to the surface thereof by simply milling the organic biocide material with particulate pigment and a dispersant. Advantageously the particle size of the pigment is less than one fourth, preferably less than one sixth, such as between one eighth and one twentieth, of the particle diameter (d₅₀) of the biocidal particles being coated.
2) about the same size as the biocidal particles: If the pigment particles are of about the same size as the biocidal particles, e.g., the d₅₀ of the pigment particles is within a factor of about 2 of the of the biocidal particles, then the pigment particles will have similar suspendability and similar penetration into wood. If the pigment and biocidal particles are of comparable size (e.g., plus or minus 30% of the diameter), than the behavior of the biocidal particles and of the pigment particles when injected into a wood matrix will be similar.
3) larger than the biocidal particles. If the pigment particles are larger than the biocidal particles, than individual pigment particles will be more visible than individual biocidal particles, in the event there are agglomerations of biocidal particles (especially on or near the surface of the wood) then such agglomerations will be prone to collect a substantial amount of the larger more visible pigment particles, thereby partially masking the color of the visible agglomeration.
Additionally, there can be a plurality of pigments, where one pigment is in one of the above three size classifications and another pigment is in a different size classification. Each size embodiment is advantageous in certain situations.

The biocidal pigments will often have dispersant compounds associated with the surface thereof, and therefore the pigment particles can themselves be carrier of for example sparingly soluble or substantially insoluble organic biocides disposed in a thin layer on the exterior surface of pigment particles. Indeed, if pigment particles do not adhere to the biocidal material, the pigment particles will nevertheless have a layer of biocidal material disposed on the outer surface thereof after being wet ball milled with the biocidal particles. While a biocidally insignificant amount of sparingly soluble inorganic metal salts will be disposed on a surface of pigment particles, a much thicker and biocidally effective amount of organic biocides can be coated onto pigment particles as a result of wet milling as discussed infra. Indeed, this may be responsible for at least a portion of the average particle size reduction of solid-phase-organic-biocide-containing particles during wet ball milling. The pigment particles will then further disperse organic biocides in a wood matrix.

Another preferred embodiment comprises one or more particulate pigments which adhere to the exterior of the biocidal particulates in the slurry. Larger copper-containing biocidal particles having very finely divided particulate iron oxide pigments, zinc oxide pigments, magnesium oxide pigments, and/or tin oxide pigments which at least in part adhere to larger (but still injectable into wood matrices) copper-containing biocidal particles will disguise, mute, or totally conceal the color or the copper particulate. In one preferred embodiment the pigment particles are smaller than at least some of the biocidal particles, e.g., the d₉₈ and the d₅₀ of the biocidal particles are advantageously between 50% to 1000% larger than the d₉₈ and the d₅₀ , respectively, of the pigment particles. Given that the "larger copper-containing biocidal particles" must be injectable into wood, and therefore have a maximum size as defined by the d₉₈, d₉₉, or preferably the d_{99.5} of about 1 micron (diameter), preferably 0.7 microns, more preferably about 0.5 microns or about 0.4 microns, and that in a preferred embodiment these particles often have a d₅₀ size of between 0.1 and 0.2 microns, to have the pigment particles be smaller than the biocidal copper-containing particles, then the pigment particles will typically have a d₅₀ particle size below about 0.1 microns. While it is preferred that the criteria for the d₉₈ and for the d₅₀ are both met, one or the other may not be so long as the biocidal particles having pigment disposed on the outer surface thereof remain injectable.

Finally, in another embodiment the pigment particles are as large or larger, e.g., having a d₅₀ and a d₉₈ between about 1 and 3 times the d₅₀ and a d₉₈ that describe the particle size distribution of the injectable biocidal particles. This embodiment takes advantage of our observation that sub-0.5 micron particles well dispersed in a wood matrix provide less color than did injected slurries of similar weights of larger particles. Advantageously, the larger pigment particles are more visible than the smaller biocidal particles, and therefore have a larger impact on the perceived color, than do the smaller biocidal particles. Another advantage of having larger pigment particles than the average size of the biocidal particles is that if there are agglomerations of particles into a size that is readily visible, then such an agglomeration will almost certainly comprise a large fraction of pigment particles admixed therein which can help mute the color of the agglomeration. While it is preferred that the criteria for the d₉₈ and for the dₛₒ are both met, one or the other may not be so long as the biocidal particles having pigment disposed on the outer surface thereof remain injectable.

In some embodiments, the pigment may be only partially injectable, having for example a d₉₈ of between about 1 and about 2 microns. These infrequent larger pigment particles will have a more difficult time penetrating deeply into wood, but the surface accumulations of the pigments can be beneficial, as opposed to the generally undesired and usually commercial unacceptability of wood having deposits of preservatives disposed on the surface thereof.

In each embodiment where biocidal particulates have pigments and/or dyes associated with the surface thereof, the slurry injected in the wood can further comprise one or more water-soluble dyes in an amount sufficient to color the wood to a color distinguishable from untreated wood. Water-soluble dyes can be added before or after milling the biocidal particles.

Solid inorganic particulate pigments such as iron oxides will not readily adhere to a particle of a solid phase of a slightly soluble salt of for example copper. Particles comprising a solid phase of a slightly soluble salt of for example copper can be coated with an organic coating, for example a coating formed by wet milling the particles with certain dispersants and optionally with certain organic biocides. This can have the effect of creating an exterior surface on the particles comprising a solid phase of a slightly soluble salt of for example copper such that solid pigment material, such as for example iron oxides, can adhere to the biocidal particle. Alternately or additionally, organic dyes can be made to adhere to the particles by selecting dispersants which will adhere to particles and will attract and bind with organic dyes. The biocidal particles on wet ball (or bead) milling will accumulate dispersant on the outer surface thereof, and will additionally accumulate oil-soluble dyes and/or smaller pigment particles, which are often held to the surface of the larger biocidal particle by interaction with the dispersant.

WET BALL MILLING PROCESS

Wet ball milling (or an equivalent milling process) of biocidal particles is important, both to remove by attrition particles having a size over 1 micron, but also to promote adherence of the dispersants, dyes, adjuvants, an/or pigments to the surface of the biocidal particles.

Generally, the simple, inexpensive sparingly soluble salt precipitation processes provide particles with a size too great for injection. Even for processes that provide very small median diameter particles, *e.g*., a few tenths of a micron in diameter, the precipitation process seems to result in a small fraction of particles that are larger than about 1 micron, and these particles plug up pores and prevent acceptable injectability. Biocidal particulates are preferably finely ground or finely milled, where the phrases are used interchangably. The size distribution of the injectable particles must have the vast majority of particles, for example at least about 99.5% by weight, be of an average diameter less than about 1 micron, and advantageously the particles are not rod-shaped with a single long dimension. Average particle diameter is beneficially determined by Stokes Law settling velocities of particles in a fluid to a size down to about 0.2 microns. Smaller sizes are beneficially determined by, for example, a dynamic light scattering method or laser scattering method or electron microscopy.

The material after the milling procedure should have: a d₉₉ of less than 2 microns, preferably less than 1.4 microns, more preferably less than 1 microns, but generally greater than about 0.3 microns, for example between about 0.4 and 0.8 microns; a d₉₈ of less than 2 microns, preferably less than 1 micron, more preferably less than 0.8 microns, but generally greater than about 0.3 microns, for example between about 0.4 and 0.8 microns; a d₅₀ of less than 0.9 microns, preferably less than 0.7 microns, more preferably less than 0.5 microns, but generally greater than about 0.1 microns, for example between about 0.1 and 0.3 microns; and a d₃₀ of greater than 0.02 microns, preferably greater than 0.04 microns, more preferably greater than 0.06 microns, but generally less than about 0.2 microns, for example between about 0.06 and 0.15 microns.

There are a wide variety of milling methods. At least partial attrition of particles can be obtained, for example, by use of 1) a pressure homogenizer such as that manufactured by SMT Ltd. having about 400 kg/cm² of pressure at a flow rate of about 1 L/min., although such a system often requires the slurry to be processed overnight; an ultrasonic homogenizer, such as is manufactured by Nissei Ltd., although such a system is energy intensive; 2) by wet milling in a sand grinder or wet-ball mill charged with, for example, partially stabilized zirconia beads with diameter 0.5 mm; 3) alternately wet milling in a rotary sand grinder with partially stabilized zirconia beads with diameter of about 0.5 mm and with stirring at for example about 1000 rpm; a 4) an attritor (*e.g*., manufactured by Mitsui Mining Ltd.), or 5) a perl mill (*e.g*., manufactured by Ashizawa Ltd.,), or 6) a very fast blade mill (a high speed blade miller very much like an Osterizer™ type mixer) run at very high RPMs.

It is believed that unless there is very friable material or a large amount of material that can act as milling aids, that only wet ball milling will be able to provide injectable particles within a narrow particle size range without additional processing. Fast blade milling will not provide the desired attrition and small particle size distribution, and will not promote adherence of dispersants, other biocides, dyes, and pigments to the surface of biocidal particles, and in fact will continually strip such components from the surface of biocidal particulates. Blade milling provides too much shear which degrades dispersants, while ball milling of the biocidal material in the presence of water, dispersants, and the pigment and/or dyes is believed to promote pigment/dyes adherence to biocidal particulates.

The preferred method of providing injectable biocidal particles is wet ball milling the biocidal material in a ball mill with a sufficient amount of surfactants and with a milling agent, wherein at least 25% (preferably at least 50%, more preferably 100%) of the milling agent comprises zirconia (or optionally zirconium silicate) having an average diameter of between about 0.02 and 0.08 cm, preferably between about 0.03 and about 0.07 cm. We have found that wet ball milling with appropriate milling media and dispersants can advantageously modify particle size and morphology to form readily injectable particles and slurries. Wet ball milling is believed to break up larger particles. Wet ball milling would also efficiently break particles having one large dimension, *e.g*., rod-like particles, which are know to have injection problems. Additionally, wet ball milling can be combined with a coating process to form a more stable material. The quickest and most efficient method of modifying the particle size distribution is wet ball milling. Beneficially, all injectable formulations for wood treatment should be wet-ball-milled, even when the "mean particle size" is well within the range considered to be "injectable" into wood.

In preferred embodiments of this invention, biocidal particulates are advantageously wet milled in a mall mill having milling media (beads) which preferably comprise a zirconium compound such as zirconium silicate or more preferably zirconium oxide. Other milling media, including steel and various metal carbides, can often be used, provided the density of the milling media is greater than 3 g/cc (some biocides such as chlorothalonil are difficult to mill and require milling beads having a density greater than about 5 g/cc, which can be obtained by using for example zirconia beads or doper zirconia beads). In one embodiment, the milling media can further comprise bead of copper metal, which will deposit a layer of copper metal on the surface of polished particles. A more important criteria for the milling media is that it have at least 25% by weight, preferably at least 50% or 100%, of the individual milling beads having an average diameter of between 0.3 and 0.8 mm, preferably between about 0.4 and about 0.7 mm. The size of the milling material is believed to be important, even critical, to obtaining a commercially acceptable process. The milling agent material having a diameter of about 2 mm or greater are ineffective, while milling agent material having a diameter of about 0.5 mm is effective typically after about 15 minutes of milling. We believe the milling agent is advantageously of a diameter less than about 1 mm in diameter, for example between about 0.1 mm and about 1 mm, or alternately between about 0.3 mm and about 0.7 mm. In one embodiment, the particles are wet milled using a milling media (*e*.*g*., grinding media) comprising beads having a diameter between around 0.1 mm and around 0.8 mm and having a density greater than about 3 g/cc.

The media need not be of one composition or size. Further, not all the milling material need be the preferred material, i.e., having a preferred diameter between 0.1 mm and 0.8 mm, preferably between 0.2 mm and 0.7 mm, more preferably between 0.3 mm and 0.6 mm, and having a preferred density equal to or greater than 3.8 grams/cm³, preferably greater than or equal to 5.5 grams/cm³, more preferably greater than or equal to 6 grams/cm³. In fact, as little as 10% of this media will provide the effective grinding. The amount of the preferred milling media, based on the total weight of media in the mill, can be between 5% and 100%, is advantageously between 10% and 100%, and is preferably between 25% and 90%, for example between about 40% and 80%. Media not within the preferred category can be somewhat larger, say 1 mm to 4 mm in diameter, preferably from 1 mm to 2 mm in diameter, and advantageously also has a density equal to or greater than 3.8 grams/cm³. Preferably at least about 10%, preferably about 25%, alternately at least about 30%, for example between about 50% and about 99%, of the media has a mean diameter of between about 0.1 mm to about 0.8 mm, preferably between about 0.3 mm and about 0.6 mm, or alternatively between about 0.3 mm and about 0.5 mm. The remaining media (not within the specified particle size) can be larger or smaller, but, in preferred embodiments, the media not within the specified size is larger than the media in the specified size, for example at least a portion of the milling media not within the preferred size range(s) has a diameter between about 1.5 and about 4 times, for example between about 1.9 and about 3 times, the diameter of the preferred media. A preferred media is 0.5 mm zirconia, or a mixture of 0.5 mm zirconia and 1-2 mm zirconia, where at least about 25% by weight of the media is 0.5 mm zirconia. The remaining media need not comprise zirconium, but advantageously will have a density greater than 3.5 g/cc. Using media comprising a zirconia portion and a copper portion can be advantageous.

The preferred milling procedure includes wet milling, which is typically done at mill setting between about 600 rpm and about 4000 rpm, for example between about 1000 rpm and about 2500 rpm. Faster revolutions provide shorter processing times to reach the minimum product particle size. Generally, the selection of the milling speed, including the speed in a scaled up commercial milling machine, can be readily determined by one of ordinary skill in the art without undue experimentation, given the benefit of this disclosure.

A method of milling the particulate product comprises the steps of: 1) providing the solid biocide, and a liquid comprising a surface active agent such as a dispersant, to a mill; providing a milling media comprising an effective amount of milling beads having a diameter between 0.1 mm and 0.8 mm, preferably between about 0.2 mm and about 0.7 mm, more preferably between about 0.3 mm and about 0.6 mm, wherein these milling beads have a density greater than about 3.5 grams/cm³, more preferably equal to or greater than 3.8 grams/cm³, most preferably equal to or greater than 5.5 grams/cm3, for example a zirconia bead having a density of about 6 grams/cm³; and 2) wet milling the material at high speed, for example between 300 and 6000 rpm, more preferably between 600 and 4000 rpm, for example between about 2000 and 3600 rpm, where milling speed is provided for a laboratory scale ball mill, for a time sufficient to obtain a product having a mean volume particle diameter of about 1 micron or smaller, for example between about 5 minutes and 300 minutes, preferably from about 10 minutes to about 240 minutes, and most preferably from about 15 minutes to about 60 minutes. As little as 5% by volume of the milling media need be within the preferred specifications for milling some materials, but better results are obtained if greater than 10% by weight, preferably greater than 25% by weight, for example between 40% and 100% by weight of the milling material is within the preferred specifications. For milling material outside the preferred specifications, advantageously this material has a density greater than 3 grams/cm3 and a diameter less than 4 mm, for example 1 or 2 mm zirconia or zircionium silicate milling beads.

In an alternate procedure, the biocide can be double-milled, *e.g*., as used to mill chitosan in paragraphs [0070]-[0074] of U.S. Published Patent Application No. 2004/0176477 A1 . In one such embodiment, for example, the milling media in the first milling step can have a diameter of about 0.5 to 1 mm, preferably 0.5 to 0.8 mm, while the milling media in the second willing step can have a diameter of about 0.1-0.4 mm, preferably about 0.3 mm. Advantageously, the milling media loading can be between about 40% and about 80% of the mill volume.

Advantageously, the organic biocide can be milled for a time between about 10 minutes and about 8 hours, preferably between about 10 minutes and about 240 minutes, for example between about 15 minutes and about 150 minutes. Again, the upper limit in time is significantly less important than the lower limit, as the change in particle size distribution per hour of milling becomes exceedingly small as the milling time increases.

The milled metal-based particles described above are readily slurried and injected into wood after the milling process. Generally, however, milling is done well before the particles are slurried and injected. A commercially useful particulate-based wood preservation product must simultaneously achieve the critical particle size, particle size distribution, and particle stability in an injectable slurry at a location where wood is preserved at a cost where the material will be commercially used. Therefore, it is advantageous to have a coating on the particle to substantially hinder dissolution of a particle that is more than sparingly soluble while the particle is slurried. But, the coating should not overly hinder dissolution of the particle in the wood matrix.

The biocidal material can be stabilized by a partial or full coating of an insoluble inorganic salt of such low thickness that the coating will not substantially hinder particle dissolution in the wood. The preferred coatings are very low solubility metal salts of the underlying metal cations which can substantially arrest the dissolution/re-precipitation process by severely limiting the amount of metal that can dissolve. The coating, however, is typically intended as a mechanical protection. Exposed portions of sparingly soluble biocidal salts, for example portions exposed due to abrasion of particles by machinery or by one another, are still subject to dissolution. An insoluble inorganic coating can be formed during and immediately after the particulate precipitation process, for example, by adding the insoluble-salt-forming anion (typically phosphate) to a precipitating salt composition. Such a process is very dependent on timing and is susceptible to error. More advantageously, biocidal particles may be wet-milled using a very fine milling material and a fluid containing a source of the insoluble-salt-forming anions, *e.g*., sulfate ions, phosphate ions, or less preferably (because of odor and handling problems) sulfide ions. Such milling in the anion-containing milling fluid, for example for a time ranging from 5 minutes to 4 hours, typically from 10 minutes to 30 minutes promotes the formation of a thin coating of metal salt over the sparingly soluble metal salts. The invention also embraces embodiments where particles are substantially free of an inorganic coating.

Biocidal particles may additionally comprise an organic coating, *e.g*., a organic layer that partially or completely covers the exterior surface area of the particulates. Such a coating is less than 0.5 microns thick, and is typically between about 0.001 and 0.1 microns thick. The protective organic layer may comprise 1) a dispersing/anti-aggregation/wettability modifying dispersant, 2) a light oil and/or similar water-insoluble material such as wood rosin, rosin derivatives, waxes, fatty derivatives, or mixtures, 3) an organic biocide that is a liquid at ambient temperature or is a solid but is solubilized within the organic coating, 4) a dye that is a liquid at ambient temperature or is a solid but is solubilized within the organic coating, and 5) pigments which are associated with the organic layer. While such coatings can be formed in a wet milling process, heating a mixture of particulates and the organic composition may in certain cases help the organic composition wet and adhere to the particulates. The organic coating generally becomes more adherent if the coated particulates are allowed to age, and or are subjected to heat, for example to 35°C or above, for a period of about an hour, for example.

We have disclosed here that leaching, and therefore presumably dissolution of sparingly soluble copper salts can be substantially inhibited by added between about 0.1 parts to about 100 parts of organic material per 100 parts of sparingly soluble biocidal salts. A requirement is that the organic material be wet ball milled with the biocidal material, such that the materials are brought into repeated hard contact but without applying large amounts of shear force (such as might be applied by a high speed impeller mixer. The organic material and inorganic material become associated with one another on what could best be called composite particles. In the examples, one part of the substantially insoluble biocide TEB when milled with 60 parts of submicron copper hydroxide reduced the resultant leach rate of copper from wood injected with the slurry by 20%. A variety of organic materials can be added to the surface of biocidal particles and subsequently retard dissolution of the salt and metal leaching from wood. In addition to dispersants and substantially insoluble biocides that coated biocidal particles disclosed in the examples, other organic material can include UV protectorants, pigment particles, dyes (especially oil soluble dyes), oils, or combinations thereof can be dispersed in the biocidal slurry concentrate during the wet milling process, where the milling process will disperse and place the UV protectorants, substantially insoluble organic biocides, dyes, and/or oils onto the outer surface of biocidal particles in much the same manner that substantially insoluble biocidal material can be placed during wet ball milling on the exterior of biocidal particles. It is important to realize that UV protectorants used to protect biocides are different than UV protectorants applied to wood itself. First, very little protectorant is needed to protect the biocidal material - the amount needed is generally well below one percent of the amount needed to protect the wood surface itself. For each organic component expected to be coated onto a surface of a biocidal particle, excluding surfactants and dispersants which are discussed elsewhere in this application, a reasonable amount may range from between 0.1 parts and 10 parts of an organic UV blocker, oil, dye, resins, and the like per 100 parts by weight of biocidal material.

It is known that as crystals are broken or even stressed as would occur during impact with the sub-millimeter zirconium oxide or silicate milling medium, there is a temporary instability wherein a cation (and/or an anion) in the solution can replace a similarly charged ion on the surface of the crystal. Such a surface will more tenaciously bond available surfactants and/or available cations present in the milling composition (usually present as soluble molecules and/or ions). The total addition of cations from solution is less than a mono-layer of the cations film solution. However, the added metals may stabilize the crystal, for example if copper hydroxide is milled in the presence of ions of zinc and/or magnesium. Such a milling mechanism can be used to beneficially add between 0.1 and 200 parts per million by weight of a very powerful biocidal salt for example silver ions, to the crystals. Alternatively such milling is beneficially used to facilitate attachment of polar and/or ionic pigments, dispersants, and dyes to the surface of the milled particles.

INJECTION INTO WOOD

The wood preservative compositions used in this invention are injected into wood and/or wood composites. While wood composites may have the wood preservative composition simply mixed with the wood particles before bonding (usually with a plastic or resin), in accordance with the present invention at least a portion of the wood preservative compositions are injected into the wood particulates, which are then dried prior to bonding. Exemplary wood products include oriented strand board, particle board, medium density fiberboard, plywood, laminated veneer lumber, laminated strand lumber, hardboard and the like.

Preferably, the wood or wood product comprises a homogenous distribution of metal-based particles. In one embodiment, the density (weight of particles per volume of wood) of the biocidal particles about two cm from an exterior surface of the wood, and preferably throughout the interior of the wood or wood product, is at least about 50%, for example at least about 60%, alternately at least about 70% or at least about 75%, of the density of the biocidal particles found in the wood about 0.5 cm from the surface. Density is best measured by taking a core plug or a cross section from wood (well away from the ends), separating the wood starting from an exterior surface into layers 0.5 cm thick, and then pulverizing and digesting the layers in boiling sulfuric acid for a time sufficient to solubilize all the biocide, and then analyzing the acid to determine the quantities of biocidal materials that were in each layer. Preferably, the density (weight of particles per volume of wood) of the biocidal particles about three cm from an exterior surface of the wood, and preferably throughout the interior of the wood or wood product, is at least about 50%, for example at least about 60%, alternately at least about 70% or at least about 75%, of the density of the biocidal particles found in the wood about 0.5 cm from the surface. The same criteria are advantageously met by pigment particles as well -- the density (weight of particles per volume of wood) of the pigment particles about two cm (or preferably about 3 cm) from an exterior surface of the wood, and preferably throughout the interior of the wood or wood product, is at least about 50%, for example at least about 60%, alternately at least about 70% or at least about 75%, of the density of the pigment particles found in the wood about 0.5 cm from the surface.

A necessary requirement to obtaining an homogenous distribution is that the particulates in the slurry do not tend to plate out or be trapped by the wood matrix during injection, and that the particulates in the slurry do not agglomerate prior to or during injection. For example, assume a slurry initially comprises 20 grams biocidal particles per liter, and during injection into a 6 cm rod the wood matrix absorbs (or traps as agglomerations) 10 grams of biocidal particles per cm. Then, measured radially from the axis of the 6 cm in diameter rod, the wood within 1 cm of the axis will have no biocidal particles, the wood between 1 and 2 cm will have on average the desired amount of biocidal particles (though distribution of the particles within this ring will be a gradient rather than uniform), and the wood that is between 2 and 3 cm from the axis will have two times the desired amount of biocidal particles. For this reason, the dispersants should be of a type and in a quantity to substantially prevent wood from absorbing onto a wood matrix during injection and from forming agglomerations during injection. In practical terms, to meet the goal where the density (weight of particles per volume of wood) of the biocidal particles about two cm from an exterior surface of the wood is at least about 50% of the density of the biocidal particles found in the wood about 0.5 cm from the surface requires that the wood absorb or trap (during injection) less than 10% of the available biocidal particles from a slurry per 0.5 cm of wood the slurry passes through. For example, if a slurry initially has 30 grams of biocidal material but loses about 10% of this material per 0.5 cm of wood the slurry passes through, then after injection into a 4 cm diameter rod is complete the wood that is 0.5 cm from the surface will have about 1.2 times the average density of biocidal particles while wood 2 cm from the surface will have 0.6 to 0.7 times the average density of biocidal particles.

Wood or wood products preserved in accordance with the present invention may be prepared by any subjecting the wood to any standard injection practice currently used for injecting soluble wood treatments into wood. A preferred injection procedure includes the following four steps:
1) At least partially drying the wood, for example drying to remove at least 30%, preferably at least 50%, of the total moisture that can be removed by air drying the wood in ambient conditions. Green wood comprises sufficient air volume that a sufficient amount of wood preservative can be injected, but a more concentrated slurry would be required as compared to injecting into (at least partially) dried wood.
2) Subject the wood to vacuum, e.g, to below about 0.5 atmospheres and the injecting the slurry, and/or subject the wood to pressurized carbon dioxide, e.g., above about 30 psig, then vent the wood to atmospheren and inject the slurry. When slurry is injected into wood, the air in the wood is compressed. If no vacuum and/or carbon dioxide exposure is used, then the air in the wood will be compressed to one tenth of its original volume which will typically be in the center of the wood, and the slurry will therefore not reach the center one tenth of the wood. Further, releasing pressure causes the air to expand and push a portion of the injected fluid out from the wood, and this fluid may contain biocidal particles and/or pigment particles. A vacuum of as low as one half an atmosphere will reduce the amount of wood the slurry will not penetrate from one tenth to one twentieth of the total wood volume, and on releasing the pressure much less of the injected fluid will be expelled by the expanding air. Injecting carbon dioxide into the wood and then venting this to atmospheric pressure prior to injection will cause a portion of the air in the wood to be replaced by carbon dioxide. Carbon dioxide is so soluble in the slurry that it acts much like a vacuum, in that the carbon dioxide once dissolved in the water will not be compressed and will not keep slurry from being injected into wood.
3) Inject the injectable aqueous slurry into the wood by immersing the wood in the slurry
   and then exerting an injection pressure of from above atmospheric pressure to about 300 psi, typically between about 75 psi and 150 psi. Injection of particles into the wood or wood product from a flowable material comprising the particles may require marginally longer (10 to 50% longer) pressure treatments than would be required for liquids free of such particles. The pressure is then maintained for a period of time that can range from a few minutes to many hours, and then the pressure is released. The drier the wood is made in step 1 prior to injection and the more rigorous the vacuum and/or carbon dioxide exposure is in step 2, the less time is needed where pressure should be maintained. Time is important, because most commercial slurries will have some small amount of particle settling, and long holding times will allow a greater amount of the particles in slurry outside the wood to settle on and stain the exterior surface of the wood. If using 150 psi injection pressure on wood having less than half of the water originally in the green wood, and also being exposed to sufficient vacuum and/or carbon dioxide cycles to remove 90% of the air in the dried wood, then the pressure maintenance period can usually be reduced to between 2 and 15 minutes (depending on the thickness of the wood being treated).
4) At least partially dry the wood, to further fixate the injected particles into the wood matrix.

FOLIAR USES

Biocidal compositions described in this application are also useful in other applications, particularly for foliar applications. It can be seen that the ability to formulate very small particulates, and to optionally coat these particulate with biocides as well as with stabilizers and dispersants, opens a wide variety of possibilities for the use of biocides in the fields of foliar applications, wood preservation, anti-fouling paints and coatings, and even biocidal coverings such as roofs and walls. Generally, the differences between foliar applications and wood preservatives are: the foliar applications are subject to more UV light and greater water flux; foliar applications are typically not intended to have a lifetime greater than one year, while wood preservative treatments try to attain 20 or more year lifespans, and the particle size distribution in wood preservation must be much narrower, particularly on the upper end of the particle size distribution.

Often, especially for sparingly soluble biocidal inorganic copper-, nickel-, tin-, and/or zinc- based salts and for substantially water-insoluble organic biocides, smaller particles provide a greater degree of biocidal protection, as well as increased tenacity, also known as "rainfastness." One problem with small particles is the well-known problem of photolysis, where the efficacy of biocides is quickly compromised due to exposure of the small particles of biocide in the field to moisture and/or UV radiation. The presence of an effective amount of a pigment, for example a water resistant pigment or UV-absorbing pigment materials, in the form of preferably oil-soluble organic pigments but can also comprise very fine pigment particles, *e.g*., having a diameter smaller than the diameter of the biocidal particles, typically having a d₅₀ of less than one fourth the d₅₀ of the biocidal particles, can be disposed on the exterior of biocidal particles, thereby protecting organic biocides either within the biocidal particle (as a solid phase) or coated on the exterior surface of the biocidal particle, will protect the biocide from damaging effects of sunlight in foliar applications. Such a composition will be useful for wood preservative applications and in foliar applications.

### EXAMPLES

The following examples are merely indicative of the nature of the present invention, and should not be construed as limiting the scope of the invention, nor of the appended claims, in any manner.

COMPARATIVE EXAMPLE 1

The laboratory-sized vertical mill was provided by CB Mills, model# L-3-J. The mill has a 2 liter capacity and is jacketed for cooling. Unless otherwise specified, ambient water was cycled through the mill cooling jacket during operation. The internal dimensions are 3.9" diameter by 9.1" height. The mill uses a standard 3 x 3" disk agitator (mild steel) on a stainless steel shaft, and it operates at 2,620 rpm. The media used in this COMPARATIVE Example was 0.4-0.5 mm zirconium silicate beads supplied by CB Mills. All particle size determinations were made with a Sedigraph™ 5100T manufactured by Micromeritics, which uses x-ray detection and bases calculations of size on Stokes' Law.

The original formulation contained 20.4% chlorothalonil (98% active), 5% Galoryl™ DT-120, 2% Morwet™ EFW dispersant, and 72.6% water by weight, and the concentrate had a pH of 8.0. The total batch weight was about 600 g. The results of a 7.5 hour grinding study are given in Table 1 below.

Table 1, Wet ball milling Chlorothalonil with 0.5 mm zirconium silicate

| Milling Time | d₅₀ | Particle Size Data - Volume % With Diameter Greater Than | | | |
|---|---|---|---|---|---|
| Mins. | µm | 10 µm | 5 µm | 2 µm | 1 µm |
| | | | | | |
| 0 | 4.9 | 10 | 48 | 95 | |
| 30 | 1.3 | 0 | 4 | 21 | 68 |
| 60 | 1.0 | 4 | 2 | 11 | 50 |
| 90 | 1.4 | 18 | 23 | 22 | 94 |
| 120 | 1.03 | 2 | 0 | 4 | |
| 150 | 1.12 | 0 | 2 | 6 | 58 |
| 180 | 1.07 | 2 | 2 | 7 | 53 |
| 270 | 1.09 | 2 | 0 | 8 | 54 |
| 450 | 1.15 | 12 | 8 | 21 | 56 |

The results show that chlorothalonil can be wet milled from a starting particle size of about 3-4 microns to a d₅₀ near (but above) 1 micron within about one hour, using a spherical ∼3.8 g/cm³ zirconium silicate media having an average particle size of about 0.4-0.5 mm.
Further grinding had little effect, possibly slightly reducing the weight of particles over about 2 microns and thereby reducing the d₉₀ from about 2 microns at 60 minutes to slightly less than 2. Further reduction of particle size requires using a much denser milling media such as zirconia.

EXAMPLE 2

Similar conditions were used in the experiments described in Example 2 as were used in comparative experiment 1. In this Example, the preferred organic biocides Chlorothalonil and Tebuconazole were milled. The milling media comprised cerium-doped zirconium oxide beads or yttrium-doped zirconium oxide beads, having a particle diameter of 0.4-0.5 mm or 0.3 mm. The density of the doped zirconium oxides is >6.0 g/cm³, compared to the ∼3.8 g/cm³ density of zirconium silicate beads used in comparative example 1. Additionally, the biocidal efficacy of milled chlorothalonil was compared to the biocidal efficacy of un-milled Chlorothalonil.

Example 2-A: A first formulation, containing 20.4% chlorothalonil, 5% Galoryl™ DT-120 brand naphthalene sulfonate formaldehyde condensation product, 2% Morwet™ EFW, 3% Pluronic™ F-108 block copolymer (dispersant), and 69.2% water by weight, at a pH of about 7.3, was wet ball milled in a CB Mills, model# L-3-J mill with 0.4 - 0.5 mm doped zirconia. The total batch weight was about 600 g. The results are shown in Table 2 below.

Table 2 Wet ball milling Chlorothalonil with 0.4 - 0.5 mm zirconia

| Milling Time | d₅₀ | Particle Size Data - Volume % With Diameter Greater Than | | | | | |
|---|---|---|---|---|---|---|---|
| Mins. | µm | 10 µm | 5 µm | 2 µm | 1 µm | 0.4 µm | <0.2 µm |
| 0 | 3.44 | 8 | 30 | 77 | 92 | - | - |
| 90 | 0.31 | 3 | 3 | 3 | 3 | 22 | - |
| 240 | 0.21 | 0 | 1 | 2 | 3 | 3 | 51 |

The above-described composition does not have a particle size distribution which will result in a commercially acceptable injectable wood composition, even after 240 minutes of milling. The composition can be further treated with for example a centrifugal finishing technique which effectively removes all particles with an effective diameter greater than 2 microns to form an injectable composition - a technique removing all particles greater than 2 microns will remove most particles with a size over 1 micron and a substantial fraction, typically 10% to 50%, of particles over about 0.7 microns. While this material removed by the centrifuge can be recycled into the wet ball mill, such a process is not particularly energy efficient. Alternately, adding a sufficient amount of submicron pigment particles to a composition comprising 1 part of a substantially insoluble organic biocide composition prior to wet ball milling, wherein a sufficient amount is usually greater than 0.1 parts, for example from about 0.2 parts to 50 parts, but typically 0.3 parts to 4 parts, of small diameter inorganic pigment particles (or organic pigments provided they are sufficiently hard) per part of organic biocidal material, and wherein submicron means for example pigment particles with an average diameter d₅₀ and also a d₉₈ less than 0.5 microns, will reduce the average particle size of the milled chlorothalonil, and should eliminate the fraction of chlorothalonil particles with a particle size above 1 micron.

For the higher density 0.4 to 0.5 mm zirconia milling media, a Chlorothalonil composition with a d₅₀ less than 1 micron and a d₉₅ less than 1 micron was obtainable in less than 90 minutes, and a composition with a d₅₀ less than 0.3 microns and a d₉₅ less than 0.4 microns was obtainable in 6 hours.

This was a surprising result. Many people have attempted to reduce the particle size of chlorothalonil for a variety of reasons, with very little success. First, prior art 3 to 5 micron chlorothalonil particles are phytotoxic to many beneficial plant species. Second, it had been hypothesized that smaller particles of chlorothalonil would allow treatment rates to be reduced, under the theory that the biocidal activity of chlorothalonil is limited to a small radius about a particle, and if a prior art particle is present, then there is excess chlorothalonil. Therefore, minimum loading concentrations would reflect the number of particles needed to obtain coverage of the area to be protected times the weight of the prior art particles, which invariably had a distribution where more than half of the weight of the chlorothalonil was found in particles having a diameter greater than 2 or 3 microns. Prior attempts to mill Chlorothalonil using other techniques and milling media reported in the literature have resulted in Chlorothalonil slurries with a d₅₀ of between 2 and 3.5 microns (though some sub-micron particles were produced, the prior attempts to mill Chlorothalonil always resulted in a product with so many particles above about 2 microns that the d₅₀ was well above about 2 microns). One brand of chlorothalonil, DACONIL WEATHERSTIK™, commercially available from Syngenta, is advertised at the web-site "www.syngenta.com.au/Start.aspx?PageID=10101&ProductID=786125&menuId=" (accessed in Oct 2004) to have a "Finely ground formulation with smaller particles than generic chlorothalonil" and that "DACONIL WEATHERSTIK is a finely ground formulation, with smaller particles than generic chlorothalonil, resulting in superior coverage versus its competitors." A test of a commercially obtained sample of this Bravo Weatherstik ™ (Lot#GBY410802, D.O.M.:09/04) that we analyzed using a Micromeritics Sedigraph 5100 (where the diameter is deduced by hydrodynamic settling) has a median particle size d₅₀ of about 3 microns with about 14% by weight having a size less than 1 micron. While this is indeed an improvement in the particle size compared to other commercially available brands, we now routinely produce 30% active slurries of milled chlorothalonil product having a d₉₉ of about 1 micron or less and having a d₅₀, d₇₅, and even a d₉₀ of smaller than about 0.2 microns.

The milled material obtained after 90 minutes of milling represents an increase in number of particles per unit of mass by a factor of more than about 30 over the starting material, but the milled material obtained after 240 minutes of milling represents an increase in number of particles per unit of mass by a factor of more than about 1000 over the starting material. The higher surface areas associated with the smaller particles should give rise to a product with enhanced bioactivity due to an increase in reservoir activity (ability to deliver chlorothalonil to the infection court). Additionally, such a slurry is injectable into wood.

Example 2-B: The next test was performed with a composition containing 20.8% tebuconazole, 3% Pluronic™ P-104 brand block copolymer, 1.5% Morwet™ D-425 brand naphthalene sulfonate, 0.1% Drewplus™ L-768 brand dimethylpolysiloxane (30%), and 74.6% water by weight. This composition was wet ball milled in a CB Mills Vertical Mill Model L-1 with 0.3 mm yttrium-doped zirconia. Prior to milling, the d₅₀ of the tebuconazole was about 27 microns. The results are shown in Table 3 below.

Table 3 Wet ball milling Tebuconazole with 0.3 mm zirconia

| Milling Time | Particle Size Data - Volume % With Diameter | | | | | |
|---|---|---|---|---|---|---|
| Mins. | >50 µm | 25-50 µm | 10-25 µm | 1-10 µm | 0.2-1 µm | <0.2µm |
| 0 | 26.6 | 27.2 | 42.2 | 4 | -- | -- |
| 150 | 0 | 0 | 3.6 | 4.2 | 20.7 | 71.5 |

The above-described composition does not have a particle size distribution which will result in a commercially acceptable injectable wood composition. The composition can be further treated with for example a centrifugal finishing technique which effectively removes all particles with an effective diameter greater than 2 microns to form an injectable composition - a technique removing all particles greater than 2 microns will remove most particles with a size over 1 micron and a substantial fraction, typically 10% to 50%, of particles over about 0.7 microns.

Alternately or additionally, we believe that adding to the milling composition one or more of inorganic biocidal particles and/or inorganic pigment particles, in an amount greater than about 1 part inorganic biocidal particles and/or inorganic pigment particles to 10 parts tebuconazole, will allow complete removal of tebuconazole particles greater than 1 micron. The mechanisms most likely are 1) the pigment particles and/or inorganic biocidal particles being imbedded into the milled tebuconazole such that subsequent interaction with the milling media will quickly split larger particles and therefore reduce or eliminate entirely the particles having a diameter greater than 1 micron after 150 minutes of milling time, and 2) pigment particles and/or inorganic biocidal particles will abrade the tebuconazole particles, causing further particle size reduction as the pigment particles and/or inorganic biocidal particles acquire a coating of the softer organic biocidal material.

Example 2-C: The next test was performed with a composition containing 20.8% chlorothalonil, 3% Pluronic™ F-108 brand block copolymer, 1.5% Galoryl™ DT-120 brand naphthalene sulfonate formaldehyde condensation product, 0.1 % Drewplus™ L-768 brand dimethylpolysiloxane (30%), and 74.6% water by weight. This composition was wet ball milled in a CB Mills Red Head™ Vertical Mill Model L-J-3 with 0.5 mm cerium-doped zirconia. Prior to milling, the d₅₀ of the chlorothalonil was about 4.9 microns. The results are shown in Table 4 below.

Table 4 Wet ball milling Chlorothalonil with 0.5 mm zirconia

| Milling Time | Particle Size Data - Volume % With Diameter | | | | | |
|---|---|---|---|---|---|---|
| Mins. | >25 µm | 10-25 µm | 5-10 µm | 1-5µm | 0.2-1 µm | <0.2µm |
| 0 | 3.8 | 7.8 | 38.3 | 51.5 | -- | -- |
| 250 | 0 | 0 | 1.5 | 1.5 | 48.2 | 48.8 |

The above-described composition does not have a particle size distribution which will result in a commercially acceptable injectable wood composition. However, subsequent tests with minor changes in the amount of surfactant allowed us to mill slurries so that less than 1% by weight of particles had a diameter greater than 1 micron, and the d₅₀ was 0.2 microns in one set of samples, while the d₉₀ was under 0.2 microns in a second set of examples. The composition can be further treated with for example a centrifugal finishing technique which effectively removes all particles with an effective diameter greater than 2 microns to form an injectable composition - a technique removing all particles greater than 2 microns will remove most particles with a size over 1 micron and a substantial fraction, typically 10% to 50%, of particles over about 0.7 microns.

We believe that adding to the milling composition one or more of inorganic biocidal particles and/or inorganic pigment particles, in an amount greater than about 1 part inorganic biocidal particles and/or inorganic pigment particles to 10 parts chlorothalonil, will allow complete removal of tebuconazole particles greater than 1 micron. The mechanisms most likely are 1) the pigment particles and/or inorganic biocidal particles being imbedded into the milled tebuconazole such that subsequent interaction with the milling media will quickly split larger particles and therefore reduce or eliminate entirely the particles having a diameter greater than 1 micron after 250 minutes of milling time, and 2) pigment particles and/or inorganic biocidal particles will abrade the tebuconazole particles, causing further particle size reduction as the pigment particles and/or inorganic biocidal particles acquire a coating of the softer organic biocidal material.

The above-described data shows how difficult it is to obtain the desired injectable particle size distribution when trying to mill tenacious organic biocides like TEB and chlorothalonil with a minimum of dispersants. The above experiments had between 0.2 parts and 0.5 parts total of dispersants, surfactants, wettability modifiers, and the like per part of organic biocide. Obtaining a smaller particle size becomes easier as more dispersants are added to the system. To go to an extreme, any milling technique using 1 part TEB with between 6 and 12 parts dispersants will "solubilize" the TEB and provide an injectable composition. There are two problems with that solution. First, the dispersants, surfactants, wettability modifiers, and the like are relatively expensive, and such a process is not cost effective. Second, we believe the presence of the large excesses of surfactants and dispersants promotes undesirable distribution and leaching characteristics for all components in the wood preservative composition. In preferred embodiments of this invention, there is less than 3 parts, preferably less than 2 parts, for example between about 0.1 parts and 1 part total of dispersants, surfactants, wettability modifiers, and the like per 1 part of organic biocide. The above experiments had between 0.2 parts and 0.5 parts total of dispersants, surfactants, wettability modifiers, and the like per part of organic biocide. Generally, if there was between 1 and 2 parts surfactant per 1 part organic biocide in the milling experiments described in Example 2, then above-described milling processes would be expected to provide the desired particle size distribution.

It is preferred that the amount of dispersants, surfactants, and the like be less than 2 parts, preferably between 0.1 and 1 parts, per part by weight of total organic and inorganic biocide. Alternately, if there is both solid phase organic biocide particles and/or solid phase inorganic sparingly soluble biocidal salt particles, but also pigment particles, in an alternate embodiment it is preferred that the amount of dispersants, surfactants, and the like be less than 2 parts, preferably between 0.1 and 1 parts, per part by weight of total organic and inorganic biocide and pigments. The desired particle size distribution can be obtained with that total amount of dispersants, surfactants, wettability modifiers, and the like, by aiding milling by adding sub-micron inorganic pigment material to the milling composition. Milling with the desired total amount of dispersants, surfactants, wettability modifiers, and the like, and further adding an amount of pigment, can provide the desired particle size distribution. The amount of pigment required will depend on a number of factors, but generally the total amount of pigment will be less than 3 parts, preferably less than 2 parts, for example between about 0.1 parts and 1 part total per 1 part of organic biocide. Alternately, adding sub-micron inorganic biocidal sparingly soluble salts or oxide material to the milling composition is expected to provide the desired particle size distribution. The amount of inorganic biocidal sparingly soluble salts or oxide material required will depend on a number of factors, but generally the total amount of inorganic biocidal sparingly soluble salts or oxide material will be less than 3 parts, preferably less than 2 parts, for example between about 0.1 parts and 1 part total per 1 part of organic biocide. Generally, as a milling aid, there is no difference between sparingly soluble inorganic biocidal salts, biocidal oxides, and pigments. Further, as described in subsequent Examples, the inorganic material need not be submicron particles prior to milling. The above-described milling process will quickly and efficiently form submicron slurries of the inorganic pigments, biocidal oxides, and/or sparingly soluble biocidal salts.

Example 2-D: Biocidal Efficacy Tests: The principal advantage to obtaining smaller particles of substantially insoluble organic biocides and of particles of sparingly soluble biocidal salts and/or biocidal oxides is that the material can be injected into wood.

However, the same slurries can beneficially be used for any process or treatment currently calling for specific biocides, for example chlorothalonil which has extensive utility in treating a variety of foliar and other pathogens. For substantially insoluble organic biocides, we believe that until some particular submicron particle size is obtained, the biocidal particles act like point sources of the biocidal material, where dissolution and migration of biocidal material from the point sources is a major limiting factor on the biocidal efficacy of the treatment. For sparingly soluble inorganic salts, too small a particle size can result in a large portion of the biocidal metal being solubilized or otherwise flushed from wood. This is not as much of a problem with organic biocides, where obtaining particle diameters below 0.05 microns is very difficult and, even if such particles were formed, the solubility of the organic biocide is so low that we believe there will not be excessive premature flushing of organic biocide by water passing through treated wood. Generally, the problem with substantially insoluble organic biocides such as TEB and chlorothalonil is that the biocidal efficacy falls off sharply with distance from the particle. Therefore, an additional advantage of the small size and more importantly the narrow size distribution of the biocidal solid phase organic biocide particulates is that the small size allows there to be a close spacing of particles for a given biocidal loading. This advantage is useful both in wood treatment applications and in foliar and other applications.

One factor limiting particle size is the ability to economically obtain very small particles. The current disclosed invention resolves some of that problem. Other problems that can spring up when particle size is drastically reduced are : premature aging and degradation of the biocide within the particle, especially due to action of sunlight; and rainfastness. Many pigments, including the iron oxide/phosphate/hydroxide pigments described herein, protect against UV light damage. We believe that incorporation of pigments and/or dyes around biocidal particles, originally invented to mask the color of the biocide when injected into wood, can equally protect foliar applications of milled organic biocides from aging due to the action of sunlight. If a biocide is coated about a pigment particle, or even about a biocidal particle or even an inert carrier particle that blocks UV light, then at least a portion of the biocide will be protected against degradation by sunlight. Further, the same dispersants used to suspend organic biocide and other particles in the slurries of this invention will, when allowed to dry, greatly increase the rainfastness while at the same time reduce the phytotoxicity of these same biocidal particles when used in foliar applications. The only change in a preferred slurry for use in foliar applications as opposed to wood preservation applications is that the slurries destined for foliar applications may additionally benefit by including surfactants such as polyacrylates or acrylate-xanthan gum combos to further enhance rainfastness and mitigate phytotoxicity.

To test the efficacy of smaller chlorothalonil particles in a controlled environment, we asked Dr. Howard F. Schwartz, Professor of Plant Pathology, Colorado State University, Fort Collins, CO to prepare a test sequence to test the bioactivity of chlorothalonil slurries in an agar against a known pathogen, *Botrytis aclada* (Botrytis Neck Rot pathogen of Onion). Use of chlorothalonil against this pathogen is well documented, and there is a specific recommended concentration "X" to treat this pathogen. The control was commercially available Chlorothalonil of about 3 micron particle diameter with what is believed to be an EO-PO block copolymer dispersant (Bravo 720™). The two experimental milled chlorothalonil biocides were Samples A and B. Sample A was milled so that the d₅₀ was 0.2 microns. Sample B was milled so that the d₉₀ was under 0.2 microns.

Milled and a control Chlorothalonil products were slurried and then were added to 1 Liter of ½ PDA (potato dextrose agar) after autoclaving and cooling, where the amount added was X, 0.667X, 0.333X, or 0.1X. The agar was then allowed to set in a circular plate, and the center 38 mm² core of the cylinder was inoculated with 14-day-old *Botrytis aclada*, and then the plates were incubated for 14 days at 22°C. Growth of the colony was measured each day for 6 days for statistical analysis. Growth was measured an additional 8 days to determine number of days before the colony reached the outer edge of the plate. There were 10 samples for each biocide at each rate, and results were averaged. The data is summarized in Table 5 below.

| Chlorothalonil | Concentration | Growth Rate (mm²/d) | Days to reach barrier |
|---|---|---|---|
| d₅₀=3 µ, prior art | 1X | 220 | >14 |
| d₅₀=3 µ, prior art | 0.67X | 295 | 10-13 |
| d₅₀=3 µ, prior art | 0.33X | 231 | 10-13 |
| d₅₀=3 µ, prior art | 0.1X | 416 | 10-13 |
| d₅₀=0.2 µ | 1X | 39 | >14 |
| d₅₀=0.2 µ | 0.67X | 117 | >14 |
| d₅₀=0.2 µ | 0.33X | 151 | >14 |
| d₅₀=0.2 µ | 0.1X | 236 | 10-13 |
| d₉₀=0.2 µ | 1X | 58 | >14 |
| d₉₀=0.2 µ | 0.67X | 41 | >14 |
| d₉₀=0.2 µ | 0.33X | 152 | >14 |
| d₉₀=0.2 µ | 0.1X | 287 | 10-13 |
| Control | 0 | 923 | 5 |
| | C.V. % | 15.91 | |
| | LSD (alpha 0.01) | 32.00 | |

The daily measurements for days 1-6 are provided in Table 6. Treatments 1 (d₅₀=3µ particles at 1X concentration), 5 - 7 (d₅₀=0.2 µ at 1X, 0.67X, and 0.33X concentrations), and 9 -11 (d₉₀=0.2 µ at 1X, 0.67X, and 0.33X concentrations) restricted fungal growth and never allowed the fungus to reach the outer edge of the plate throughout the 14-day test period. Treatments 2 - 4 (d₅₀=3µ, particles at 0.67X, 0.33X, and 0.1X concentration), 8 (d₅₀=0.2 µ at concentration of 0.1X), and 12 (d₉₀=0.2 µ at concentration of 0.1X) allowed the fungus to reach the outer edge of the plate between days 10 and 13. Total maximum growth of the control was 5539 mm². The milled products A and B were consistently more effective than the commercially available product, and there was a consistent response to the rate comparisons between the 3 products in this lab test.

Table 6, Area (mm²) of *Bony tis* Colony on PDA, Days 1-6,

| Treatments | | | Day 1 | | Day 2 | | Day 3 | | Day 4 | | Day 5 | | Day 6 | |
|---|---|---|---|---|---|---|---|---|---|---|---|---|---|---|
| 1 | d50=3 µ | 1X | 46 | BC | 46 | DE | 92 | CD | 352 | CD | 755 | D | 1321 | D |
| 2 | d50=3 µ | 0.67X | 44 | C | 44 | DE | 108 | C | 405 | C | 871 | C | 1773 | C |
| 3 | d50=3 µ | 0.33X | 42 | C | 42 | E | 50 | E | 313 | D | 690 | D | 1384 | D |
| 4 | d50=3 µ | 0.1X | 43 | C | 61 | B | 161 | B | 501 | B | 1093 | B | 2497 | B |
| 5 | d50=0.2 µ | 1X | 46 | BC | 48 | DE | 89 | CD | 131 | FG | 181 | F | 235 | G |
| 6 | d50=0.2 µ | 0.67X | 48 | ABC | 48 | DE | 48 | E | 149 | FG | 389 | E | 701 | F |
| 7 | d50=0.2 µ | 0.33X | 43 | C | 43 | DE | 64 | DE | 218 | E | 497 | E | 906 | E |
| 8 | d50=0.2 µ | 0.1X | 43 | C | 58 | BC | 104 | C | 310 | D | 683 | D | 1416 | D |
| 9 | d90=0.2 µ | 1X | 46 | BC | 46 | DE | 47 | E | 100 | GH | 219 | F | 347 | G |
| 10 | d90=0.2 µ | 0.67X | 51 | AB | 51 | CD | 51 | E | 66 | H | 151 | F | 247 | G |
| 11 | d90=0.2 µ | 0.33X | 47 | ABC | 47 | DE | 49 | E | 178 | EF | 481 | E | 914 | E |
| 12 | d90=0.2 µ | 0.1X | 43 | C | 51 | CD | 92 | CD | 322 | D | 747 | D | 1721 | C |
| 13 | Control | NA | 52 | A | 92 | A | 274 | A | 1317 | A | 3039 | A | 5539 | A |
| Probability | | | <0.0001 | | <0.0001 | | <0.0001 | | <0.0001 | | <0.0001 | | <0.0001 | |
| C.V. % | | | 15.11 | | 19.50 | | 38.63 | | 23.09 | | 18.46 | | 18.91 | |
| LSD (alpha 0.01) | | | 5.72 | | 8.39 | | 30.08 | | 64.07 | | 114.63 | | 192.01 | |

The first experiment, using prior art 3 micron chlorothalonil at the recommended dosage, provided good control of the *Botrytis.* In every test, for any concentration of chlorothalonil, the milled submicron chlorothalonil provided superior control of the *Botrytis* than did the unmilled control. What was particularly exciting was that both of the milled submicron chlorothalonil samples at both 0.67X and at 0.33X concentrations provided significantly superior control of *Botrytis* than did the unmilled commercial product applied at the recommended dosage 1X. This suggests that the milled product can be effectively applied at a fraction of the (foliar) application rate, for example between one third and two thirds of the application rate recommended for foliar application of prior art slurries, with no loss of effectiveness. Further, the small size of the particles coupled with the protective effects provided by dispersants, pigments, and/or dyes can mitigate phytotoxicity of the chlorothalonil and also mitigate chlorothalonil degradation due to exposure to light.

COMPARATIVE EXAMPLE 3A

In this comparative example, two slurries of copper hydroxide were wet-milled using 2 mm zirconium silicate as the milling medium. The first slurry had a d₅₀ of about 2.5 microns. The second slurry, a commercially available magnesium stabilized form of copper hydroxide particulate material, Champ DP® available from available from Phibro-Tech., Inc., has particles with a d₅₀ of about 0.2 microns.

Figure 2 shows the photographs that were obtain of trying to inject the untreated first slurry containing 2.5 micron d₅₀ copper hydroxide particles into wood. The copper material plugged the surface of the wood and made an unsightly blue-green stain, penetration of copper particles into the wood was very poor and uneven. Wood injectability tests revealed that while Champ DP® could be injected into wood without milling, the penetration was less than desired and there was still commercially unacceptable deposits of copper hydroxide on the exterior surface of the wood. Subsequent investigation revealed that while the d₅₀ of the material was <0.2 microns, about 13% by weight of the material had diameters between 0.4 and 1.5 microns, and 1% by weight had a diameter of about 2 microns or higher. In terms of numbers of particles, there were thousands to millions of particles with a diameter less than 0.4 microns for every particle with a diameter greater than 1 micron, but we believe that only a few large particles can form a bridge across a pore in the wood, and then a filter cake quickly forms as the bridge filters out smaller particles, and very quickly will not let any particles through regardless of particle size.

The Champ DP® material was placed in a mill with about a 50% by volume loading of 2 mm zirconium silicate milling beads. Samples were removed intermittently and the particle size distribution was determined. Wet milling with 2 mm zirconium silicate milling media had no substantial effect - wet milling for hours gave only a very slight decrease in particle size, and a small shift in the particle size distribution, but the material was not injectable into wood. Milling for a day or more did not provide a slurry with the desired particle size distribution.

COMPARATIVE EXAMPLE 3B

Copper hydroxide (CHAMP FLOWABLE™, available from Phibro-Tech, Inc.) was wet ball milled with glass media having an average particle size of 0.7 to 0.9 mm. The copper hydroxide was very resistant to attrition using this milling media.

The milling media was then changed to 0.6-1.0 mm zirconium silicate. The CHAMP FLOWABLE™ material has a small initial d₅₀ of about 0.25, and while extended milling could give a particle size reduction to eventually provide a d₅₀ near 0.2 microns, there remained an excess of material over 1 micron in diameter. The mill was a KDL Pilot Unit available from CB Mills, run at 1200 RPM with a 0.3 micron gap spacing, 1120 ml of 0.6-1.0 mm zirconium silicate, with 700 ml of process fluid, a residence time of 1.5 to 14 minutes with recycle. Adding Rhodopol™ 23 to the slurry had some effect, but viscosity breakdown suggested dispersant breakdown. After 20 minutes of milling, there was still 15-20% by weight of particles having an average diameter greater than 1 micron. After 30 minutes of milling, there was still 10-15% by weight of particles having an average diameter greater than 1 micron. After 60 minutes of milling, there was still about 10% by weight of particles having an average diameter greater than 1 micron. The reduction in the amount of material having an effective diameter greater than 1 micron was not fast enough to provide a commercially useful injectable slurry.

COMPARATIVE EXAMPLE 3C

U.S. Patent 6,306,202 suggests that particles containing copper salts or oxides can be injected into wood. The text states "small amounts of water insoluble fixed copper compounds are not objectionable in solid wood preservatives so long as their particle size is small enough to penetrate the wood," and suggests "so long as copper compound particles do not settle from the dilution in one hour, the composition is suitable for pressure treating ... of solid wood." "Small amounts of water insoluble fixed copper compounds are not objectionable in solid wood preservatives so long as their particle size is small enough to penetrate the wood." The patent does not suggest what size is useful. The patent teaches milling particles with a fast blade mixer for a time not to exceed one hour. Such a milling technique is limited in the lower size limit it can produce, and the particle size distribution resulting from such milling is broad. To duplicate the work done in this patent, we formed a mixture of 40 parts sodium tetraborate decahydrate, 54 parts tap water, and 8 parts copper hydroxide comprising dispersants and having a mean particle size of 2.5 microns (as measured by a Micromeritics Sedigraph 5100). This mixture was "milled" for 60 minutes using a laboratory dispersator (Indco Model HS-120T-A) operating at 3,000 rpm. The resultant mixture was then diluted at a ratio of 4 parts to 96 parts water (4%) for particle size measurement. After "milling" for 60 minutes, the d₅₀ was found to be 1.5 microns.

EXAMPLE 3

Copper hydroxide (CHAMP Formula II ™, available from Phibro-Tech, Inc.) was wet ball milled with 0.6 to 1 mm zirconium silicate milling material. The mill was a KDL Pilot Unit available from CB Mills, run at 1200 RPM with a 0.3 micron gap spacing, 1120 ml of 0.6-1.0 mm zirconium silicate, with 700 ml of process fluid, a residence time of 3.3 to 30 minutes with recycle. Though the original CHAMP Formula II™ material had 15% of the material having a particle size of 1 micron or greater, as the residence time increased particle size decreased until the d99 was at about 1 micron or less. There was also a significant reduction in the d₅₀, from about 0.28 microns before milling to about 0.2 microns after milling. Milling conditions had to be optimized to obtain a d99 of 1 micron, and at less than optimum conditions a d97 of 1 micron could be obtained. Further, the d99 was not able to be reduced below about 0.7 microns - there remained about 2% or more of material having a particle size above 0.7 microns.

This suggested a injectable material might be obtained with less restrictive milling parameters if a smaller 0.5 mm zirconium silicate milling media were used. While 0.5 mm zirconium silicate was not an effective milling media for Chlorothalonil, it was found to be an adequate milling media for the more friable sparingly soluble copper salts, as shown below.

Five samples of particulate copper salts made following standard procedures known in the art were milled according to the method of this invention. The first two samples were copper hydroxide - one with an initial particle size d₅₀ of about 0.2 microns (the material of comparative example A), and the second with an initial d₅₀ of 2.5 microns. A basic copper carbonate (BCC) salt was prepared and it had an initial d₅₀ of 3.4 microns. A tribasic copper sulfate salt was prepared and this material has a d₅₀ of 6.2 micron. Finally, a copper oxychloride (COc) sample was prepared and this material has an initial d₅₀ of 3.3 microns. Selected surface active agents were added to each slurry, and the initial slurries were each in turn loaded into a ball mill having 0.5 mm zirconium silicate (density 3.3-3.8 grams/cm3) at about 50% of mill volume, and milled at about 2600 rpm for about a half an hour. The particle size distribution of the milled material was then determined. The particle size distribution data is shown in Table 5. It can be seen that even with the relatively modest zirconium silicate milling media, injectable compositions were obtained in about 30 minutes milling time or less.

It can be seen that even the less effective milling media, ∼0.5 mm zirconium silicate, was useful for milling sparingly soluble copper salts to the sub-micron particle size distribution needed for treating wood, for incorporating into non-fouling paints and coatings, and for foliar treatments. Further, the rate of particle size attrition is so great that there is no need to use expensive precipitation techniques to provide a feedstock having a sub-micron d₅₀. The initial d₅₀ ranged from 0.2 microns to over 6 microns, but after 30 minutes or less of milling each of the above milled copper salts (milling about 15 to about 30 minutes ) were injected into wood samples with no discernible plugging.

Milling tenacious organic biocides such as TEB and chlorothalonil with less than 0.5 parts dispersants per part of solid organic biocide provided slurry compositions with particle size distributions that we very close to those sizes with are preferred for injectable slurries. Adding, to a composition comprising one part organic biocide prior to wet ball milling the composition, at least about 0.1 parts, typically about 0.2 parts to about 50 parts, for example from about 0.3 parts to about 5 parts, by weight of a millable inorganic material, especially submicron inorganic material such as submicron particles comprising a solid phase of one or more of: 1) sparingly soluble inorganic biocidal salts including hydroxides such as copper hydroxide, 2) inorganic biocidal oxides including copper and/or zinc oxide, 3) inorganic pigments such as iron oxides or iron phosphates, or any combinations thereof, to a composition comprising the desired amounts of surfactants, e.g., between about 0.05 parts to about 3 parts, typically from about 0.1 parts to about 2 parts, and in one embodiment from about 0.3 parts to about 0.5 parts, total of dispersants, wettability modifiers, surfactants, and the like per 1 part of solid biocidal material, will modify the milling characteristics when milled for 4 hours of less with a zirconia-type milling media having an average diameter between about 0.2 mm to about 0.8 mm, preferably from about 0.3 mm to about 0.6 mm, will form a stable injectable slurry. Milling sparingly soluble inorganic biocidal salts having any starting size, for example having an initial d₅₀ between about 0.1 microns to about 50 microns, with the more preferred zirconium oxide milling beads will provide in well under an hour a composition having essentially no material with a diameter greater than 1 micron. This suggests that if inorganic biocidal material and/or inorganic pigments are to be added to organic biocides prior to wet ball milling the composition, the added inorganic material need not be submicron prior to milling with the organic biocide.

Table 1. Particle Size Distribution Before/After Milling (0.5 mm Zirconium Silicate)

| Material | d₅₀ | %<10µ | %<1µ | %<0.4µ% | <0.2µ |
|---|---|---|---|---|---|
| | | | | | |
| Cu(OH)₂, before milling | ∼0.2 | 99% | 84% | 64% | 57% |
| Cu(OH)₂, after milling | <0.2 | 99% | 97% | 95% | 85% |
| | | | | | |
| Cu(OH)₂, before milling | 2.5 | 99% | 9% | -- | -- |
| Cu(OH)₂, after milling | 0.3 | 99.7% | 95% | 22% | -- |
| | | | | | |
| BCC*, before milling | 3.4 | 98% | 1.2% | -- | -- |
| BCC*, after milling | <0.2 | 99% | 97% | 97% | 87% |
| | | | | | |
| TBS*, before milling | 6.2 | 70% | 17% | -- | -- |
| TBS*, after milling | <0.2 | 99.5% | 96% | 91% | 55% |
| | | | | | |
| COc*, before milling | 3.3 | 98.5% | 3% | -- | -- |
| COc*, after milling | 0.38 | 99.4% | 94% | 63% | -- |

Milling sparingly soluble inorganic biocidal salts with the more preferred zirconium oxide milling beads will provide a smaller d₅₀ and will further reduce the amount of material, if any, having a diameter greater than 1 micron. Particulate biocides have an advantage over dispersed or soluble biocides in that the material leaches more slowly from wood than would comparable amounts of soluble biocides, and also about the same or more slowly than comparable amounts of the same biocide applied to the same wood as an emulsion.

EXAMPLE 4

INJECTING MILLED COPPER SALT SLURRIES INTO WOOD: Slurries of the above milled sparingly soluble copper salts were successfully injected into standard 1" cubes of Southern Yellow Pine wood. The injection procedures emulated standard conditions used in the industry.

Figure 2 shows representative photographs showing the comparison of the unacceptable product, which had a d₅₀ of 2.5 microns and completely plugged the wood, is shown in comparison with blocks injected with the product milled according to the process of this invention as described the Examples. Figures 1 and 2 show the clean appearance of the wood blocks injected with the milled copper hydroxide, to compare with the photograph in Figure 2 of the wood samples injected with the un-milled (d₅₀<0.2 micron) copper hydroxide. Unlike the blocks injected with un-milled material, wood blocks injected with milled material showed little or no color or evidence of injection of copper-containing particulate salts.

Copper development by colorimetric agents (dithio-oxamide/ammonia) showed the copper to be fully penetrated across the block in the sapwood portion. Figure 1 shows the penetration of injected particulate copper hydroxide developed with dithio-oxamide in the third picture. The stain corresponds to copper. It can be seen in Figure 1 that the copper is evenly dispersed throughout the wood. Subsequent acid leaching and quantitative analysis of the copper from two blocks showed that loadings of about 95% and about 104% of expectation (or essentially 100% average of expectation) had occurred. At 100% loading, values of 0.22 lb/ft³ of copper would be obtained.

EXAMPLE 5

LEACHING COPPER FROM TREATED WOOD: Copper leaching rates from ¾ inch blocks of Southern pine, where slurries were prepared as described in Example 4, were measured following the AWPA Standard Method E11-97. In each case except the Cu-MEA-CO₃, the initial copper loading was a very high 0.25 lb Cu/cubic foot of wood, as opposed to a more traditional loading of for example 0.08 lb Cu/cubic foot of wood. For most examples, the organic biocide TEB was added to the slurry in an amount sufficient to provide 0.0075 lb TEB/cubic foot. One Example used a higher loading of 0.0125 lb TEB/cubic foot of wood. There are two comparative examples - leaching data was obtained from a wood block preserved with a prior art soluble solution of copper MEA carbonate, and also from a wood block preserved with prior art CCA. The leach rates of the various wood blocks treated with the preservatives prepared according to this invention were far below the leach rates of wood treated with soluble copper carbonate and were even below leach rates of samples treated with CCA.

Leaching data from wood was measured following the AWPA Standard Method E11-97 for the following preservative treatments, where, unless specified, the tebuconazole (TEB) concentration was 0.0075 lb TEB/cubic foot:
A) Basic copper carbonate ("BCC") particulates with TEB;
B) CCA-treated wood (as a control);
C) Soluble copper methanolamine carbonate ("Cu-MEA-CO₃") and TEB (as a control, believed to approximate the currently available Wolman E treatment);
D) BCC particulates with TEB and with sodium bicarbonate buffer;
E) BCC particulates;
F) Copper hydroxide, modified with zinc and magnesium, particulates ("Cu-Zn-Mg(OH)₂") and TEB;
G) Copper hydroxide particulates modified with phosphate coating ("Cu(OH)₂-PO4") and 0.0125 lb TEB/cubic foot;
H) Tribasic copper sulfate ("TBCS") particulates and TEB; and
I) Copper oxychloride ("COC") particulates and TEB. The leaching data from wood treated with each of the various particulate slurries and from two controls are shown in Figure 3.

The total copper leached from wood preserved with a currently commercially dominant copper-MEA-carbonate/TEB system (at 0.08 lb Cu/cubic foot) was 4.6% at 6 hours, 8.1% at 24 hours, 9.8% at 48 hours, 13.6% at 96 hours, 14.8% at 144 hours, 15.3% at 192 hours, and 16% at 288 hours. In contrast, the total copper leached from wood preserved with prior art CCA was 0.3% at 6 hours, 1% at 24 hours, 1.7% at 48 hours, 2.5% at 96 hours, 3.3% at 144 hours, 3.8% at 192 hours, and 4.3% at 288 hours. This is illustrative of the problem the industry is facing. The amount of copper leached from the soluble copper-MEA-carbonate-treated wood was initially 15 times higher than the amount of copper leached from the CCA-treated wood, though by 288 hours this ratio had declined to about 3.7 times as much copper leached from the copper-MEA-carbonate-treated wood compared to the amount of copper leached from the CCA-treated wood. Generally, there is an initial biocide loss which shows the effects of biocide not being completely bound to the wood, but eventually the leach rates settle down to fairly constant numbers. Industry can not resolve the problem of high leach rates from soluble copper-amine treatments by simply adding more Cu-MEA-CO₃ - we performed leaching tests on wood where the amount of Cu-MEA-CO₃ was more than 3 times the amount normally used, and in subsequent leaching tests we observed strikingly high leaching rates that eventually resulted in less copper being retained than is retained by wood treated with a more traditional dose. During the interval between 150 hours and 300 hours, the wood treated with soluble copper-MEA-carbonate was losing between about 0.2% of the total copper originally present per day. In contrast, the CCA-treated wood was losing about 0.17% of the total copper originally present per day. While this is not a large difference, the data suggests the CCA rate might be abnormally high due to some artificial interference, and also the high initial loss of copper coupled with the higher long term leach rate will result in significantly shorter life expectancy of wood treated with soluble copper-amines as opposed to the life expectancy of wood treated with the prior art CCA preservative.

Much less copper leached from the milled, biocidal particles, than leached from wood treated with the soluble copper amine preservatives. The amount of copper leached from wood treated with magnesium-stabilized copper hydroxide particulates with TEB was 0.2% at 6 hours, 0.3% at 24 hours, 0.4% at 48 hours, 0.5% at 96 hours, 0.6% at 144 hours, 0.7% at 192 hours, and 0.8% at 288 hours. The first surprising observation was there was substantially no early peak in the copper leach rate. At the 288 hour point in the leach test, wood treated with magnesium-stabilized copper hydroxide particulates with TEB had lost less than one fifth of the copper lost by wood treated with CCA, and only about one twentieth of the percentage of copper lost by wood treated with Cu-MEA-CO₃ and TEB. Second, during the interval between 150 hours and 300 hours, the wood treated with magnesium-stabilized copper hydroxide particulates with TEB was losing about 0.03% of the total copper originally present per day. We call the leach rate over that time period the "end-of-test copper leach rate", and the end-of-test copper leach rate from wood treated by either CCA or Cu-MEA-CO₃ and TEB was about three times higher than the end-of-test copper leach rate from wood treated with the magnesium-stabilized copper hydroxide particulates with TEB.

The total leached copper at 144 and 288 hours and end-of-test copper leach rate for each of the treatments are given in Table 3 below.

**Table 3. Copper Leached and Copper Leach Rates From Wood**

| | Preservative System | % Cu leached, 144 hr | % Cu leached, 288 hr | end-of-test leach rate (%Cu/day) |
|---|---|---|---|---|
| A | BCC with TEB | 1.9 | 2.3 | 0.06 |
| B | CCA | 3.3 | 4.3 | 0.17 |
| C | Cu-MEA-CO3 with TEB | 14.8 | 16 | 0.20 |
| D | BCC with TEB, NaHCO₃ buffer | 1.7 | 2 | 0.05 |
| E | BCC | 2.3 | 2.8 | 0.08 |
| F | Cu-Zn-Mg(OH)₂ with TEB | 0.6 | 0.8 | 0.03 |
| G | Cu(OH)₂-PO4 with 0.0125 # TEB /cu ft. | 3.1 | 3.8 | 0.11 |
| H | TBCS with TEB | 3.0 | 3.9 | 0.15 |
| I | COC with TEB | 4.1 | 5.2 | 0.18 |

One surprising result of this analysis was the suggestion that the end-of-test copper leach rate from wood treated with Cu-MEA-CO₃ was only 10% to 20% greater than the end-of test copper leach rate exhibited by wood treated with copper oxychloride/TEB and by wood treated with CCA, and was only about 30-40% greater or with tribasic copper sulfate/TEB. However, the percentage of copper leached earlier in the leach test was many times higher for wood treated with Cu-MEA-CO₃ as compared to the copper leached from wood treated with any of the other preservatives.

A second surprising result was exhibited by the wood treated with phosphate-stabilized copper hydroxide - both the amount of copper leached and the long term leach rate were much higher than that of magnesium-stabilized copper hydroxide. It is hypothesized that 1) phosphate reacts during the milling process with compounds present in the milling slurry to either form a soluble copper compound; 2) milling dislodges and removes this very fine layer of copper phosphate from the biocidal particle to form a plurality of particles with a diameter less than 0.04 microns which can be flushed from wood; 3) the phosphate reacts with a component in the wood to increase copper solubility, or any combination thereof. In any case, phosphate-stabilized copper hydroxide has a much higher leach rate of copper than many other injected particulate salts, and has a long term copper leach rate and copper leached properties that are only marginally below those seen from wood treated with CCA.

Of the sparingly soluble salts used, the end-of-test leach rate, in descending order, is as follows:
Cu-MEA-CO₃ with TEB (0.20%/d), COC with TEB (0.18%/d) >
CCA (0.17%/d), TBCS with TEB (0.15%/d) >
Copper hydroxide with phosphate coating and TEB (0.11 %/d) >
BCC (0.08%/d) >
BCC with TEB (0.06%/d), BCC with TEB and NaHCO₃ buffering (0.05%/d) > Cu-Zn-Mg(OH)₂ with TEB (0.03%/d).

The relative leaching rates of the various salts suggests that the pH of the environment may be a factor. Its known that copper solubility in water increases by several orders of magnitude as the pH is lowered from about 7 to about 4. Wetted wood naturally has a pH of about 4.5 to 6, and metal hydroxide salts, e.g., copper hydroxide, are a preferred sparingly soluble biocidal salt because the hydroxide anions can increase the pH in wetted wood to near neutral. The ability of "basic copper salts" to raise the pH in wood varies greatly depending on the salt. The basic copper salts - basic copper carbonate, tribasic copper sulfate, copper oxychloride (basic copper chloride) can be viewed as being formed by admixing copper hydroxide and an acid and then crystallizing the salt: Basic copper carbonate is formed by adding one mole of a weak acid (carbonic acid) to two moles of copper hydroxide, and when dissolved in water will form a solution will have a basic pH; copper oxychloride is formed by adding one mole of a strong acid (hydrochloric acid) to two moles of copper hydroxide, and when dissolved in water will form a solution will have an acidic pH (pH∼5); and tribasic copper sulfate is formed by adding one mole sulfuric acid, which is a strong acid for the first proton and a weak acid for the second proton, to four moles of copper hydroxide, and when dissolved in water will as expected form a solution with a pH 6-6.5, which is between that from basic copper carbonate and from copper oxychloride. It was anticipated that leach rates of copper oxychloride would be greater than the leach rates for tribasic copper sulfate which would be greater than the leach rate for basic copper carbonate, which should be greater than the leach rate for copper hydroxide. This is consistent with the observed results.

While the alkaline characteristic of copper hydroxide makes copper hydroxide a preferred sparingly soluble copper salt, copper hydroxide is not without problems. The biggest problem with copper hydroxide is that it will readily dehydrate to form copper oxide. Copper oxide is much less biocidal than copper hydroxide, and copper oxide is less preferred than most any sparingly soluble copper salt. There are mechanisms to stabilize copper hydroxide against dehydration to copper oxide, and a preferred method is to replace between about 2 and about 20 mole % of the copper in copper hydroxide with zinc, magnesium, or both.

Basic copper carbonate is naturally resistant to loss of carbon dioxide and water, and is not readily converted to copper oxide. Also, basic copper carbonate has sufficient alkaline character to buffer the water in wood and promote a high pH which in turn retards copper leaching. For this reason basic copper carbonate is a very preferred sparingly soluble salt.

We note that "basic copper salts" are stoichiometric and the crystals therefore are homogenous, as opposed to for example a physical mixture of copper hydroxide and of copper carbonate where the relative amounts of each can be varied to any ratio. However, we expect similar results will be obtained from mixtures of finely divided copper hydroxide and other copper salts, such as copper borate. Basic copper borate may not form an homogenous stable crystal, because basic copper borate is not widely acknowledged. If basic copper borate does not exist, then a mixture of copper hydroxide (and/or basic copper carbonate) with copper borate at a mole ratio of about 1:1 to about 4:1, preferably at a ratio of about 2:1 to about 4:1, for example about 3:1, will provide a copper leach rate higher than that of copper hydroxide alone but lower than that of copper borate alone. Such a preservative system is preferred because it provides a relatively long-lived source of biocidal quantities of borate to the wood.

We also expect the copper leach rate to increase with decreasing particle size, but this effect was not apparent in the data. One possible reason is that there was only a factor of 2 in the d50 of the various sparingly soluble salts tested. However, leach rates from wood having a certain pound per cubic foot loading of copper salt is expected to be markedly lower for an injected slurry having a narrow particle size distribution around 0.2 to 0.4 microns as opposed to the leach rate from wood having the same pound per cubic foot loading of copper salt provided by an injected slurry having a narrow particle size distribution around 0.05 microns. The high leach rate of phosphate-stabilized milled copper hydroxide might be caused by dissolution and/or flushing of sub-0.050 micron particles from wood, but this is speculation.

There were several versions of the basic copper carbonate systems that were tested. A very surprising result was that the presence of only 1 part TEB per 60 parts basic copper carbonate (the amount in samples A and D) reduced leach copper from wood treated with basic copper carbonate particles by about 20%. The only explanation for the sharply reduced copper loss and also the reduced long term leach rate is that TEB is at least partially coating the exterior of the BCC particulates and is therefore inhibiting dissolution of the BCC. We know that dispersants also can coat the particles, but the TEB is very effective. If the TEB was assumed to be evenly spread across the outer surface of 0.20 micron particles, the layer of biocide would be between about 0.001 and 0.0015 microns thick. The reduction in total copper leached and in long term leach rates was very substantial for such a thin layer.

To test the hypothesis that pH had an effect, a buffering system comprising soluble sodium bicarbonate was added to a slurry of basic copper carbonate particles and TEB, which were then injected into the wood. The presence of the sodium bicarbonate reduced the amount of copper leached from the wood when compared to the amount leas, and might have reduced the end-of-test copper leach rate from wood, though the data is not statistically significant.

It can be seen from the above data and discussion that even a very small amount of substantially insoluble organic biocide, when wet ball milled with sub-millimeter zirconium-containing milling material, such as 0.3 mm to 0.6 mm zirconia, in a slurry comprising appropriate types and amounts of dispersants and also containing an inorganic material selected from: 1) one or more of a biocidal sparing soluble salts (which includes the metal hydroxide and also mixed salts, e.g., basic copper salts; 2) a biocidal metal oxide where the metal is selected from copper, zinc, and/or tin; 3) pigment particles, preferably inorganic pigment particles, or 4) and mixtures or combinations thereof, will result in the formation of a submicron slurry of particles having sparingly soluble inorganic biocide material in close association with particles of sparingly soluble salts, biocidal metal oxides, and/or pigments. If the substantially insoluble organic biocide is present in an amount less than about one tenth by weight of the particles of sparingly soluble salts, biocidal metal oxides, and/or pigments, it is likely that the organic biocide will at least partially exist as a layer disposed on the outer surface of the particles, where it will inhibit dissolution of sparingly soluble materials within the particle.

EXAMPLE 6

TOXICITY EVALUATION: A sample of treated wood was sent to an outside source for short-duration toxicity testing. The results suggest there is no difference in the Threshold Toxicity between wood treated with a copper MEA carbonate/tebuconazole formulation and wood treated with a identical loading of basic copper carbonate particles of this invention admixed (and partially coated with ) the same quantity of tebuconazole.

EXAMPLE 7

Zinc Borate is a useful copper-free biocide with excellent anti-mold properties, and it also is useful at higher concentrations as a fire retardant in for example wood composites. A sample of zinc borate, Firebrake™ ZB commercially available from US Borax, was obtained. It is believed to be similar to or identical to the commercially available product Borogard™ ZB which is used as a preservative in wood composites. The d₅₀ of the commercial product was 7 microns. The product was wet ball milled as described herein, and the resulting slurry had approximately at least 80%, and in one case had 91 %, by weight of the material having a particle size less than 0.2 microns. The data suggests that the slurries may have at least 80% by weight of the material having a particle size less than 0.1 microns. Slurries were successfully injected into wood. Additional testing is proceeding.

The invention is meant to be illustrated by these examples, but not limited to these examples. The invention includes the method of treating wood by injecting an effective amount of a biocidal slurry into wood. The method of preventing or treating undesired bioorganisms on crops comprising the step of spraying an effective amount of a biocidal slurry onto crops and the method of formulating a nonfouling paint or coating comprising incorporating into the paint or coating the an effective amount of a biocidal slurry into the paint or coating, are beyond the scope of the present invention.

## Claims

1. A method of preserving wood comprising
wet ball milling a biocide to form a plurality of sub-micron biocidal particles; and
injecting into wood an effective amount of a wood-injectable biocidal slurry, wherein said wood-injectable biocidal slurry comprises:
A) water as a carrier;
B) one or more dispersants in an amount sufficient to maintain the sub-micron biocidal particles in a stable slurry;
C) the plurality of sub-micron biocidal particles,
wherein said biocidal particles are selected from at least one of the following groups:
1) at least 25% by weight of a sparingly soluble salt selected from copper salts, nickel salts, tin salts, zinc salts and mixtures thereof;
2) at least 25% by weight of a sparingly soluble metal hydroxide selected from copper hydroxide, nickel hydroxide, tin hydroxide, zinc hydroxide and mixtures thereof;
3) at least 25% by weight of a substantially-insoluble organic biocide selected from chlorothalonil, iodo-propynyl butyl carbamate, copper-8-quinolate, fipronil, imidacloprid, bifenthrin, carbaryl, strobulurins, indoxacarb and mixtures thereof; and
4) partially or fully glassified compositions comprising at least one of Zn, B, Cu, and P; and
D) an anticorrosive agent that reduces the tendency the treated wood to corrode metal; and
wherein less than 1% by weight of the biocidal particles of the groups 1) through 4) have an average diameter greater than 1 micron, and at least 40% by weight of the biocidal particles have an average diameter greater than 0.06 microns.

2. The method of claim 1, wherein the sub-micron biocidal particles are selected from chlorothalonil, iodo-propynyl butyl carbamate, copper-8-quinolate, fipronil, imidacloprid, bifenthrin, carbaryl, strobulurins, indoxacarb and mixtures thereof.

3. The method of claim 1, wherein the sub-micron biocidal particles are selected from partially or fully glassified compositions comprising at least one of Zn, B, Cu, and P.

4. The method of claim 1, wherein the wood-injectable biocidal slurry further comprises at least one of a pigment, an oil soluble dye, or an alcohol soluble dye.

5. The method of claim 1, wherein the sub-micron biocidal particles comprise a copper salt that is copper bborate.

6. The method of claim 5, wherein the sub-micron biocidal particles further comprise at least one of copper hydroxide, and a copper salt that is basic copper carbonate, wherein the moles of the copper hydroxide and the basic copper carbonate are greater than the moles of copper borate.

7. The method of claim 1, wherein less than 2% by weight of the sub-micron biocidal particles have an average diameter greater than 0.7 microns, and at least 40% by weight of the sub-micron biocidal particles have an average diameter greater than 0.06 microns.

8. The method of claim 1, wherein the sub-micron biocidal particles comprise a zinc salt that is zinc borate.

9. The method of claim 1, wherein the wood-injectable biocidal slurry is free of any particles having an average diameter greater than 1 micron, wherein the weight mean diameter d₅₀ of the biocidal particles is between 0.08 microns and 0.6 microns, and at least 80% by weight of the biocidal material is contained in particles having a diameter between 0.5 and 1.5 times the d₅₀.

10. The method of claim 1, wherein at least one a portion of the submicron biocidal particles present in the wood-injectable biocidal slurry further comprises at least 0.1% based on the weight of each particle of a substantially insoluble organic biocide disposed on the outer surface of each particle, wherein the substantially insoluble organic biocide is not the same as the biocide of the biocidal particle.

11. The method of claim 1, wherein at least one portion of the submicron biocidal particles present in the wood-injectable biocidal slurry are coated with a leachability barrier that alters the leachability of the biocide of the particles injected into wood by at least 10% when compared to the leachability of the biocide of injected particles not comprising said leachability barrier disposed on the outer surfaces thereof.

12. The method of claim 1, wherein at least a portion of the submicron biocidal particles present in the wood-injectable biocidal slurry are coated with an antioxidant and/or UV barrier that reduces the degradation rate of the biocide when compared to the degradation rate of the biocide of injected particles not comprising said antioxidant and/or UV barrier disposed on the outer surfaces thereof.

13. The method of claim 1, wherein at least a portion of the submicron biocidal particles present in the wood-injectable biocidal slurry further comprises metallic copper disposed on the outer surfaces thereof.

14. The method of claim 1, wherein the wood-injectable biocidal slurry further comprises a pigment.

15. The method of claim 1, wherein the wood-injectable biocidal slurry comprises sub-micron biocidal particles containing on their outer surfaces a substantially-insoluble organic biocide, wherein the sub-micron biocidal particles are selected from at least one of:
1) at least 25% by weight of sparingly soluble salts selected from copper salts, nickel salts, tin salts, and/or zinc salts;
2) at least 25% by weight of sparingly soluble metal hydroxides selected from copper hydroxide, nickel hydroxide, tin hydroxide, and/or zinc hydroxide;
3) at least 25% by weight of a substantially-insoluble organic biocide selected from chlorothalonil, iodo-propynyl butyl carbamate, copper-8-quinolate, fipronil, imidacloprid, bifenthrin, carbaryl, strobulurins, indoxacarb; or mixtures thereof.

16. The method of claim 1, wherein the wood-injectable biocidal slurry further comprises particles selected from zinc oxide, zinc hydroxide, zinc carbonate, basic zinc carbonate, zinc borate, or combinations thereof, wherein at least 80% of these particles have an average diameter less than 0.1 microns.

17. The method of claim 1, wherein the sub-micron biocidal particles are selected from nickel salts, tin salts, zinc salts, nickel oxide, tin oxide, zinc oxide and mixtures thereof, wherein less than 2% by weight of the biocidal particles have an average diameter greater than 1 micron, and wherein the particles further comprise at least 0.1% by weight of the particle of the organic biocide chlorothalonil, iodo-propynyl butyl carbamate, copper-8-quinolate, fipronil, imidacloprid, bifenthrin, carbaryl, strobulurins, indoxacarb, or a mixture thereof disposed on the outer surface of the particles, and wherein the biocidal particles comprise less than 1% by weight copper.

18. The method of claim 17 wherein the weight percentage is between 0.5% and 10%.

19. The method of claim 17 wherein the particles further comprise one or more components of oil, silicone oil, wax, resin, polymers, oil-soluble dyes, and organic UV-blockers disposed on the outer surface of the particles, wherein the total weight of the components including the organic biocide is less than 50% of the particle weight.

20. The method of claim 17 wherein the sub-micron biocidal particles comprise less than 0.1% by weight of copper.

## Patentansprüche

1. Verfahren zum Konservieren von Holz, umfassend
Naß-Kugelmahlen eines Biozids, um eine Vielzahl an bioziden Partikeln im Submikrometerbereich zu bilden; und
Injizieren einer wirksamen Menge einer in Holz-injizierbaren bioziden Aufschlämmung in Holz, wobei die in Holz-injizierbare biozide Aufschlämmung umfasst:
A) Wasser als einen Träger;
B) ein oder mehrere Dispergiermittel in einer Menge, die ausreicht, um die bioziden Partikel im Submikrometerbereich in einer stabilen Aufschlämmung zu behalten;
C) die Vielzahl biozider Partikel im Submikrometerbereich, wobei die bioziden Partikel ausgewählt sind aus mindestens einer der folgenden Gruppen:
1) mindestens 25 Gewichts-% eines schwerlöslichen Salzes ausgewählt aus Kupfersalzen, Nickelsalzen, Zinnsalzen, Zinksalzen und Mischungen davon;
2) mindestens 25 Gewichts-% eines schwerlöslichen Metallhydroxids ausgewählt aus Kupferhydroxid, Nickelhydroxid, Zinnhydroxid, Zinkhydroxid und Mischungen davon;
3) mindestens 25 Gewichts-% eines im Wesentlichen unlöslichen organischen Biozids ausgewählt aus Chlorthalonil, lod-propinylbutylcarbamat, Kupfer-8-Chinolat, Fipronil, Imidacloprid, Bifenthrin, Carbaryl, Strobulurinen, Indoxacarb und Mischungen davon; und
4) teilweise oder vollständig verglaste Zusammensetzungen, umfassend mindestens eines von Zn, B, Cu und P;
und
D) ein Korrosionsschutzmittel, das die Neigung des behandelten Holzes, Metall anzugreifen, reduziert; und
wobei weniger als 1 Gewichts-% der bioziden Partikel der Gruppen 1) bis 4) einen mittleren Durchmesser größer als 1 Mikrometer haben und mindestens 40 Gewichts-% der bioziden Partikel einen mittleren Durchmesser größer als 0,06 Mikrometer haben.

2. Verfahren nach Anspruch 1, wobei die bioziden Partikel im Submikrometerbereich ausgewählt sind aus Chlorthalonil, lod-propinylbutylcarbamat, Kupfer-8-Chinolat, Fipronil, Imidacloprid, Bifenthrin, Carbaryl, Strobulurinen, Indoxacarb und Mischungen davon.

3. Verfahren nach Anspruch 1, wobei die bioziden Partikel im Submikrometerbereich ausgewählt sind aus teilweise oder vollständig verglasten Zusammensetzungen, umfassend mindestens eines von Zn, B, Cu und P.

4. Verfahren nach Anspruch 1, wobei die in Holz-injizierbare biozide Aufschlämmung weiter mindestens eines von einem Pigment, einem öllöslichen Farbstoff oder einem in Alkohol löslichen Farbstoff umfasst.

5. Verfahren nach Anspruch 1, wobei die bioziden Partikel im Submikrometerbereich ein Kupfersalz umfassen, das Kupferborat ist.

6. Verfahren nach Anspruch 5, wobei die bioziden Partikel im Submikrometerbereich weiter mindestens eines von Kupferhydroxid und ein Kupfersalz umfassen, das basisches Kupfercarbonat ist, wobei die Mole des Kupferhydroxids und des basischen Kupfercarbonats größer sind als die Mole des Kupferborats.

7. Verfahren nach Anspruch 1, wobei weniger als 2 Gewichts-% der bioziden Partikel im Submikrometerbereich einen mittleren Durchmesser größer als 0,7 Mikrometer haben und mindestens 40 Gewichts-% der bioziden Partikel im Submikrometerbereich einen mittleren Durchmesser größer als 0,06 Mikrometer haben.

8. Verfahren nach Anspruch 1, wobei die bioziden Partikel im Submikrometerbereich ein Zinksalz umfassen, das Zinkborat ist.

9. Verfahren nach Anspruch 1, wobei die in Holz-injizierbare biozide Aufschlämmung frei von irgendwelchen Partikeln mit einem mittleren Durchmesser größer als 1 Mikrometer ist, wobei der gewichtsmittlere Durchmesser d₅₀ der bioziden Partikel zwischen 0,08 Mikrometern und 0,6 Mikrometern ist und mindestens 80 Gewichts-% des bioziden Materials in Partikeln mit einem Durchmesser zwischen 0,5 und 1,5 fach des d₅₀-Werts enthalten ist.

10. Verfahren nach Anspruch 1, wobei mindestens ein Teil der bioziden Partikel im Submikrometerbereich, die in der in Holz-injizierbaren bioziden Aufschlämmung vorliegen, weiter mindestens 0,1% bezogen auf das Gewicht jedes Partikels eines im Wesentlichen unlöslichen organischen Biozids umfasst, das auf der äußeren Oberfläche jedes Partikels verteilt ist, wobei das im Wesentlichen unlösliche organische Biozid nicht dasselbe wie das Biozid des bioziden Partikels ist.

11. Verfahren nach Anspruch 1, wobei mindestens ein Teil der bioziden Partikel im Submikrometerbereich, die in der in Holz-injizierbaren bioziden Aufschlämmung vorliegen, mit einer Auslaugbarkeitsbarriere beschichtet sind, die die Auslaugbarkeit des Biozids der Partikel, die in Holz injiziert sind, um mindestens 10% ändert im Vergleich zur Auslaugbarkeit des Biozids von injizierten Partikeln, die die Auslaugbarkeitsbarriere, die auf den äußeren Oberflächen davon verteilt ist, nicht umfassen.

12. Verfahren nach Anspruch 1, wobei mindestens ein Teil der bioziden Partikel im Submikrometerbereich, die in der in Holz-injizierbaren bioziden Aufschlämmung vorliegen, mit einer Antioxidans- und/oder einer UV-Barriere beschichtet sind, die die Zersetzungsrate des Biozids reduziert im Vergleich zur Zersetzungsrate des Biozids von injizierten Partikeln, die die Antioxidans- und/oder UV-Barriere, die auf den äußeren Oberflächen davon verteilt ist, nicht umfassen.

13. Verfahren nach Anspruch 1, wobei mindestens ein Teil der bioziden Partikel im Submikrometerbereich, die in der in Holz-injizierbaren bioziden Aufschlämmung vorliegen, weiter metallisches Kupfer umfasst, das auf den äußeren Oberflächen davon verteilt ist.

14. Verfahren nach Anspruch 1, wobei die in Holz-injizierbare biozide Aufschlämmung weiter ein Pigment umfasst.

15. Verfahren nach Anspruch 1, wobei die in Holz-injizierbare biozide Aufschlämmung biozide Partikel im Submikrometerbereich umfasst, die auf ihren äußeren Oberflächen ein im Wesentlichen unlösliches organisches Biozid enthalten, wobei die bioziden Partikel im Submikrometerbereich ausgewählt sind aus mindestens einem von:
1) mindestens 25 Gewichts-% schwerlöslicher Salze ausgewählt aus Kupfersalzen, Nickelsalzen, Zinnsalzen und/oder Zinksalzen;
2) mindestens 25 Gewichts-% schwerlöslicher Metallhydroxide ausgewählt aus Kupferhydroxid, Nickelhydroxid, Zinnhydroxid und/oder Zinkhydroxid;
3) mindestens 25 Gewichts-% eines im Wesentlichen unlöslichen organischen Biozids, ausgewählt aus Chlorthalonil, lod-propinylbutylcarbamat, Kupfer-8-Chinolat, Fipronil, Imidacloprid, Bifenthrin, Carbaryl, Strobulurinen, Indoxacarb oder Mischungen davon.

16. Verfahren nach Anspruch 1, wobei die in Holz-injizierbare biozide Aufschlämmung weiter Partikel umfasst, die ausgewählt sind aus Zinkoxid, Zinkhydroxid, Zinkcarbonat, basischem Zinkcarbonat, Zinkborat oder Kombinationen davon, wobei mindestens 80% dieser Partikel einen mittleren Durchmesser von weniger als 0,1 Mikrometer haben.

17. Verfahren nach Anspruch 1, wobei die bioziden Partikel im Submikrometerbereich ausgewählt sind aus Nickelsalzen, Zinnsalzen, Zinksalzen, Nickeloxid, Zinnoxid, Zinkoxid und Mischungen davon, wobei weniger als 2 Gewichts-% der bioziden Partikel einen mittleren Durchmesser größer als 1 Mikrometer haben und wobei die Partikel weiter mindestens 0,1 Gewichts-% des Partikels des organischen Biozids Chlorthalonil, lod-propinylbutylcarbamat, Kupfer-8-Chinolat, Fipronil, lmidacloprid, Bifenthrin, Carbaryl, Strobulurinen, Indoxacarb oder einer Mischung davon umfasst, das auf der äußeren Oberfläche der Partikel verteilt ist, und wobei die bioziden Partikel weniger als 1 Gewichts-% Kupfer umfassen.

18. Verfahren nach Anspruch 17, wobei der Gewichtsprozentsatz zwischen 0,5% und 10% liegt.

19. Verfahren nach Anspruch 17, wobei die Partikel weiter einen oder mehrere Bestandteil(e) von Öl, Silikonöl, Wachs, Harz, Polymeren, öllöslichen Farbstoffen und organischen UV-Blockern, die auf der äußeren Oberfläche der Partikel verteilt sind, umfassen, wobei das Gesamtgewicht der Bestandteile, einschließlich des organisches Biozids, weniger als 50% des Partikelgewichts ist.

20. Verfahren nach Anspruch 17, wobei die bioziden Partikel im Submikrometerbereich weniger als 0,1 Gewichts-% Kupfer umfassen.

## Revendications

1. Procédé de préservation du bois comprenant
le broyage à billes au mouillé d'un biocide pour former une pluralité de particules biocides submicrométriques ; et
l'injection dans le bois d'une quantité efficace d'une suspension biocide injectable dans le bois, dans lequel ladite suspension biocide injectable dans le bois comprend :
A) de l'eau comme véhicule ;
B) un ou plusieurs dispersants en une quantité suffisante pour maintenir les particules biocides submicrométriques dans une suspension stable ;
C) la pluralité de particules biocides submicrométriques, lesdites particules biocides étant choisies dans l'un au moins des groupes suivants :
1) au moins 25 % en poids d'un sel faiblement soluble choisi parmi les sels de cuivre, les sels de nickel, les sels d'étain, les sels de zinc et leurs mélanges ;
2) au moins 25 % en poids d'un hydroxyde métallique faiblement soluble choisi parmi l'hydroxyde de cuivre, l'hydroxyde de nickel, l'hydroxyde d'étain, l'hydroxyde de zinc et leurs mélanges ;
3) au moins 25 % en poids d'un biocide organique sensiblement insoluble choisi parmi le chlorothalonil, le butylcarbamate d'iodopropynyle, le 8-quinolate de cuivre, le fipronil, l'imidaclopride, la bifenthrine, le carbaryl, les strobilurines, l'indoxacarbe et leurs mélanges ; et
4) des compositions partiellement ou entièrement vitrifiées comprenant au moins l'un de Zn, B, Cu et P ; et
D) un agent anticorrosif qui réduit la tendance du bois traité à corroder les métaux ; et
dans lequel moins de 1 % en poids des particules biocides des groupes 1) à 4) ont un diamètre moyen supérieur à 1 micromètre, et au moins 40 % en poids des particules biocides ont un diamètre moyen supérieur à 0,06 micromètre.

2. Procédé selon la revendication 1, dans lequel les particules biocides submicrométriques sont choisies parmi le chlorothalonil, le butylcarbamate d'iodopropynyle, le 8-quinolate de cuivre, le fipronil, l'imidaclopride, la bifenthrine, le carbaryl, les strobilurines, l'indoxacarbe et leurs mélanges.

3. Procédé selon la revendication 1, dans lequel les particules biocides submicrométriques sont choisies parmi des compositions partiellement ou entièrement vitrifiées comprenant au moins l'un de Zn, B, Cu et P.

4. Procédé selon la revendication 1, dans lequel la suspension biocide injectable dans le bois comprend de plus l'un au moins d'un pigment, d'un colorant soluble dans l'huile ou d'un colorant soluble dans l'alcool.

5. Procédé selon la revendication 1, dans lequel les particules biocides submicrométriques comprennent un sel de cuivre qui est le borate de cuivre.

6. Procédé selon la revendication 5, dans lequel les particules biocides submicrométriques comprennent de plus l'un au moins de l'hydroxyde de cuivre et d'un sel de cuivre qui est le carbonate basique de cuivre, le nombre de moles de l'hydroxyde de cuivre et du carbonate basique de cuivre étant supérieur au nombre de moles du borate de cuivre.

7. Procédé selon la revendication 1, dans lequel moins de 2 % en poids des particules biocides submicrométriques ont un diamètre moyen supérieur à 0,7 micromètre, et au moins 40 % en poids des particules biocides submicrométriques ont un diamètre moyen supérieur à 0,06 micromètre.

8. Procédé selon la revendication 1, dans lequel les particules biocides submicrométriques comprennent un sel de zinc qui est le borate de zinc.

9. Procédé selon la revendication 1, dans lequel la suspension biocide injectable dans le bois est exempte de toutes particules ayant un diamètre moyen supérieur à 1 micromètre, le diamètre moyen en poids d₅₀ des particules biocides est compris entre 0,08 micromètre et 0,6 micromètre, et au moins 80 % en poids de la matière biocide est contenue dans des particules ayant un diamètre compris entre 0,5 et 1,5 fois le d₅₀.

10. Procédé selon la revendication 1, dans lequel au moins une partie des particules biocides submicrométriques présentes dans la suspension biocide injectable dans le bois comprennent de plus au moins 0,1 %, par rapport au poids de chaque particule, d'un biocide organique sensiblement insoluble disposé sur la surface extérieure de chaque particule, le biocide organique sensiblement insoluble n'étant pas le même que le biocide de la particule biocide.

11. Procédé selon la revendication 1, dans lequel au moins une partie des particules biocides submicrométriques présentes dans la suspension biocide injectable dans le bois sont revêtues d'une barrière au lessivage qui modifie d'au moins 10 % la susceptibilité au lessivage du biocide des particules injectées dans le bois comparativement à la susceptibilité au lessivage du biocide des particules injectées qui ne comportent pas ladite barrière au lessivage disposée sur leurs surfaces extérieures.

12. Procédé selon la revendication 1, dans lequel au moins une partie des particules biocides submicrométriques présentes dans la suspension biocide injectable dans le bois sont revêtues d'un antioxydant et/ou d'une barrière anti-UV qui réduit la vitesse de dégradation du biocide comparativement à la vitesse de dégradation du biocide des particules injectées qui ne comprennent pas ledit antioxydant et/ou ladite barrière anti-UV disposés sur leurs surfaces extérieures.

13. Procédé selon la revendication 1, dans lequel au moins une partie des particules biocides submicrométriques présentes dans la suspension biocide injectable dans le bois comprennent de plus du cuivre métallique disposé sur leurs surfaces extérieures.

14. Procédé selon la revendication 1, dans lequel la suspension biocide injectable dans le bois comprend de plus un pigment.

15. Procédé selon la revendication 1, dans lequel la suspension biocide injectable dans le bois comprend des particules biocides submicrométriques contenant, sur leurs surfaces extérieures, un biocide organique sensiblement insoluble, les particules biocides submicrométriques étant choisies parmi l'un au moins de :
1) au moins 25 % en poids de sels faiblement solubles choisis parmi les sels de cuivre, les sels de nickel, les sels d'étain et/ou les sels de zinc ;
2) au moins 25 % en poids d'hydroxydes métalliques faiblement solubles choisis parmi l'hydroxyde de cuivre, l'hydroxyde de nickel, l'hydroxyde d'étain et/ou l'hydroxyde de zinc ;
3) au moins 25 % en poids d'un biocide organique sensiblement insoluble choisi parmi le chlorothalonil, le butylcarbamate d'iodopropynyle, le 8-quinolate de cuivre, le fipronil, l'imidaclopride, la bifenthrine, le carbaryl, les strobilurines, l'indoxacarbe ; ou leurs mélanges.

16. Procédé selon la revendication 1, dans lequel la suspension biocide injectable dans le bois comprend de plus des particules choisies parmi l'oxyde de zinc, l'hydroxyde de zinc, le carbonate de zinc, le carbonate basique de zinc, le borate de zinc, ou des associations d'entre eux, au moins 80 % de ces particules ayant un diamètre moyen inférieur à 0,1 micromètre.

17. Procédé selon la revendication 1, dans lequel les particules biocides submicrométriques sont choisies parmi les sels de nickel, les sels d'étain, les sels de zinc, l'oxyde de nickel, l'oxyde d'étain, l'oxyde de zinc et leurs mélanges, moins de 2 % en poids des particules biocides ont un diamètre moyen supérieur à 0,1 micromètre, et les particules comprennent de plus au moins 0,1 % par rapport au poids de la particule d'un biocide organique qui est le chlorothalonil, le butylcarbamate d'iodopropynyle, le 8-quinolate de cuivre, le fipronil, l'imidaclopride, la bifenthrine, le carbaryl, les strobilurines, l'indoxacarbe, ou un mélange d'entre eux, disposé sur la surface extérieure des particules, et les particules comprennent moins de 1 % en poids de cuivre.

18. Procédé selon la revendication 17, dans lequel le pourcentage en poids est compris entre 0,5 % et 10 %.

19. Procédé selon la revendication 17, dans lequel les particules comprennent de plus un ou plusieurs des composants suivants : huile, huile de silicone, cire, résine, polymères, colorants oléosolubles, et agents anti-UV organiques disposés sur la surface extérieure des particules, le poids total des composants incluant le biocide organique étant inférieur à 50 % du poids des particules.

20. Procédé selon la revendication 17, dans lequel les particules biocides submicrométriques comprennent moins de 0,1 % en poids de cuivre.
